(19) **Europäisches Patentamt**
**European Patent Office**
**Office européen des brevets**

(11) **EP 3 631 931 B1**

(12) **EUROPEAN PATENT SPECIFICATION**

(45) Date of publication and mention
of the grant of the patent:
**06.04.2022 Bulletin 2022/14**

(21) Application number: **18730086.8**

(22) Date of filing: **01.06.2018**

(51) International Patent Classification (IPC):
$H02J\ 3/38^{(2006.01)}$  $\quad H02N\ 2/18^{(2006.01)}$
$G05F\ 1/56^{(2006.01)}$  $\quad H02J\ 1/10^{(2006.01)}$
$H02J\ 1/12^{(2006.01)}$  $\quad H02J\ 7/00^{(2006.01)}$
$H02J\ 7/35^{(2006.01)}$  $\quad H02J\ 50/00^{(2016.01)}$

(52) Cooperative Patent Classification (CPC):
**H02N 2/181; H02J 1/102; H02J 1/12; H02J 3/381;**
**H02J 7/0068; H02J 7/35; H02J 50/00;**
**H02J 50/001; H02N 2/185;** H02J 2207/40;
H02J 2300/26; Y02E 10/56

(86) International application number:
**PCT/GB2018/051517**

(87) International publication number:
**WO 2018/220406 (06.12.2018 Gazette 2018/49)**

(54) **METHOD OF CONTROLLING AN ENERGY HARVESTING SYSTEM**

VERFAHREN ZUR STEUERUNG EINES ENERGIEGEWINNUNGSSYSTEMS

MÉTHODE DE CONTRÔLE D' UN SYSTÈME DE RÉCUPÉRATION D' ÉNERGIE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **02.06.2017 GB 201708852**

(43) Date of publication of application:
**08.04.2020 Bulletin 2020/15**

(73) Proprietor: **University of Exeter**
**Exeter, Devon EX4 4RN (GB)**

(72) Inventors:
 • **ZHU, Meiling**
  **Exeter,**
  **Devonshire EX4 4QF, (GB)**
 • **CHEW, Zheng Jun**
  **Exeter,**
  **Devonshire EX4 4QF, (GB)**
 • **RUAN, Tingwen**
  **Exeter,**
  **Devonshire EX4 4QF, (GB)**

(74) Representative: **Appleyard Lees IP LLP**
**15 Clare Road**
**Halifax HX1 2HY (GB)**

(56) References cited:
 **KR-B1- 101 035 402    US-B1- 8 823 210**

 • **SEWAN HEO ET AL: "Micro energy management**
 **for energy harvesting at maximum power point",**
 **INTEGRATED CIRCUITS (ISIC), 2011 13TH**
 **INTERNATIONAL SYMPOSIUM ON, IEEE, 12**
 **December 2011 (2011-12-12), pages 136-139,**
 **XP032096209, DOI: 10.1109/ISICIR.2011.6131896**
 **ISBN: 978-1-61284-863-1**
 • **CHAO LU ET AL: "Micro-scale energy harvesting:**
 **A system design perspective", DESIGN**
 **AUTOMATION CONFERENCE (ASP-DAC), 2010**
 **15TH ASIA AND SOUTH PACIFIC, IEEE,**
 **PISCATAWAY, NJ, USA, 18 January 2010**
 **(2010-01-18), pages 89-94, XP031641485, ISBN:**
 **978-1-4244-5765-6**

**Description**

The present invention relates to energy harvesting systems. In particular, the invention relates to a method and an apparatus for controlling an energy harvesting system.

We live in a world surrounded by digital technology that has transformed every aspect of our lives. Smartphones are only the beginning and the "Internet of Things (IoTs)" will be the second digital revolution, allowing literally millions of everyday objects to communicate with each other over the internet, changing our life by boosting productivity, keeping us healthier, and making our homes more comfortable. According to the UK Government Chief Scientific Adviser Report, approximately 25% of global manufacturers are already using IoTs technologies and it is anticipated to grow to over 80%, leading to a potential global economic uplift of $2.3 trillion in manufacturing alone, and the McKinsey report has estimated a total potential economic impact of $3.9 trillion to $11.1 trillion per year by 2025. Technologies like these are made up of hardware including sensors, controllers and transmitters, requiring an on-board electric power source to keep operating. If this power source is limited in energy storage, like batteries, when batteries are depleted, and if not replaced on time, many of these devices will no longer function properly, resulting in a reduction in the potential to impact on the living standard and UK economic growth.

To support current wireless networks and the future IoTs through increased autonomy and lifetime, it will require self-powered systems. Energy harvesting (EH) promises to enable self-powered systems capable of operating for years by capturing ambient energy without any need for batteries or mains connection. It is not surprising then that over the last decades, EH has been a rapidly-growing research field with benefits across all technology-related sectors. There already exists a large number of EH methods that are capable of harvesting various ambient energy such as thermal, solar and vibration energy using a range of transducers. However, individual ambient energy sources have limits on power and availability and coupled with poor efficiency and poor adaptive power management (PM) circuits to both the time-varying ambient energy and variable connected electrical loads at the end users and high power consumption of end users has constrained EH to just a few real-world applications. To improve the situation, multisource EH and high efficiency and adaptation of EH electronic circuits are required, harvesting as much energy as possible from each potential ambient source, consuming as little energy as possible through the PM circuit, and delivering as much maximised energy as possible to the end users across all operational conditions. Energy harvested in such cases needs to be properly managed using electronic circuits sitting between energy harvesters and the end users. Although a large number of PM methods have been extensively researched and applied in the EH area, the lack of the highly efficient, adaptive PM methods for multi-source EH powered IoTs enabled devices in one circuit as "turn-key technology" restricts the wider use of EH. This project will develop such a capability for EH to meet the WS system demands and future IoTs needs and gear up for connected real-world applications.

The aim of this invention is to develop a widely applicable design methodology and architecture of highly efficient and adaptive PM for multi-source EH powered WS systems and IoTs for real-world applications. This will be achieved through an end-toend system approach from ambient energy source to the end users by examining and advancing a number of the state-of-the-art architectures and circuits, developed in our previous work and in the literature, and also developing new ones in the proposal, and then combining them together to develop the efficient and effective multi-source PM methodology and circuits for this project. The project is expected to have a significant impact on current WS networks and future IoTs powered by EH. Building on the UK's expertise in EH it will increase the competitiveness of the UK ICT manufacturing basis as well as the UK cutting-edge-research activities in these areas.

The "Internet of Things (IoTs)" is the second digital revolution, allowing literally millions of everyday objects to communicate with each other over the internet. Technologies like these are made up of hardware including sensors, actuators, controllers, transmitters and receivers, all requiring an on-board electric power source to keep operating. If their power source is limited, as in the energy that can be stored in batteries, when batteries are depleted, and if not replaced on time, many of these devices will no longer function properly.

To support the growth of the IoTs through increased autonomy and lifetime, self-powered systems are required. Energy harvesting (EH) promises to enable self-powered systems to operating operate for years and years by capturing ambient energy without any need for batteries or mains connection, working in a truly energy autonomous manner. A wide range of EH methods have already been explored to harvest various ambient sources such as thermal, solar and vibration energy. However, individual ambient energy sources have limits on power and availability; many existing power management (PM) solutions extract and convert energy with very low efficiency in real-world applications; the power consumptions of many end users are higher than energy harvested, leading to mismatch for reaching the end user needs. These have been critical bottlenecks that have so far prevented the technology from being more widely applied. In order to totally transform this situation, high efficiency and adaptive PM circuits that sit between energy harvesters and the end users are required. Only by enabling as much energy as possible is to be captured from each potential ambient source, and converted into a usable form to the end users in real-world applications with as low power consumption and losses through PM circuits as possible can that the needs of future IoT devices can be met.

Energy harvesting is a means of powering electronic devices by scavenging low-grade ambient or "wasted" energy sources and their conversion into useable electrical energy. Given that the energy which can be harvested is usually low, it is essential to harvest energy from the energy harvesters at their maximum power point (MPP), which is a maximum/close-to-the-maximum value of a power that the energy harvesters can generate under a specific condition. Maximum power point tracking (MPPT) control circuit is therefore required in a power management circuit for energy harvesting at the MPP of the energy harvesters.

However, the power consumption of conventional MPPT control circuits realised using digital signal processors (DSPs) or microcontrollers which are usually power hungry is a constraint for the deployment of the MPPT control circuit in power management circuit for real-word applications. This is because conventional MPPT control circuits may require comparable amount of power that a wireless sensor system needs, which defies the original intention of powering the end device such as a wireless sensor system to perform useful and constructive task since a large amount of energy will be consumed by the MPPT control circuit, leaving only a small portion of energy available to the wireless sensor system. Another method which consumes less power is known as the fractional open-circuit voltage (FOCV) method. It is a technique which estimates the MPP of the energy harvesters based on their open-circuit voltage (VOC). Most energy harvesters are found to have their MPP at half of their VOC or around 0.75VOC for photovoltaic cells. Conventional method generally requires two steps, which is to sample the VOC first before finding the fraction which relates to the MPP of the energy harvesters. This two-step process is done periodically with a fixed interval time. There are chances that the MPP of the energy harvesters have changed during this interval before a new VOC is sampled but the power management circuit is still harvesting energy away from the MPP, resulting in low energy harvested. Also, some energy harvesters such as piezoelectric transducers could generate very high VOC. The need to sample the VOC requires the circuit component to be able to withstand the high voltage, which generally comes with high cost and large size of the component.

In cases where the characteristic of the energy harvesters is non-resistive, such as piezoelectric transducers, a power extraction circuit can be used to extract more power from the energy harvester. Common power extraction circuits can be categorised into two types, namely non-adaptive and adaptive. The non-adaptive ones are generally simple to be implemented using discrete electronic components. However, their performances are heavily influenced by the connected electrical load at their output. If the impedance of the connected electrical load does not match with the impedance of the energy harvester, the amount of extra energy that can be extracted from the energy harvester is very little. To overcome this, adaptive power extraction techniques have been sought for. The adaptive ones can extract more power without much influence by the connected electrical load at the output of the circuits but the power consumption and complexity of these solutions is by far not optimised for standalone devices, where a computer/DSP/microcontroller is generally required.

SEWAN HEO ET AL: "Micro energy management for energy harvesting at maximum power point", Integrated Circuits (ISIC), 2011 13th International Symposium on IEEE, 12 December 2011 (2011-12-12), pages 136-139, XP032096209, DOI: 10.1109/ISICIR.2011.6131896 ISBN: 978-1-61284-863-1 relates to a technique for maximum power point tracking of an energy harvesting device.

US8823210B1 relates to integrated electronics for perpetual energy harvesting. KR101035402B1 relates to a maximum power point tracking circuit for thermoelectric generators.

The invention is defined in the appended claims.

The invention is described and/or illustrated with reference to the accompanying figures.

The invention will now be described, purely by way of example, with reference to the accompanying drawings, in which:

Figure 1a is a schematic of the proposed system architecture of piezoelectric energy harvesting circuit where the PEH, FB rectifier, and Ci form an RC circuit;

Figure 1b is an illustrated $V_{HP}$ and $V_{rect}$ showing that $V_{HP}$ peaks at $V_{oc}/2$;

Figure 1c is a circuit model of the equivalent RC circuit;

Figure 1d is a circuit model showing a high-pass filter is connected in parallel with the smoothing capacitor of the equivalent RC circuit;

Figure 2 is a schematic of detailed implementation of the analogue control circuit;

Figure 3 is an image of the experimental setup which uses Instron testing machine as vibration source and SMUs for characterization of the circuit;

Figure 4 shows $V_{HP}$ peaks at $V_{rect}$ equals to $V_{oc}/2$ with the buck converter disabled when the PEH is subjected to peak-to-peak strain loading of 300 $\mu\varepsilon$ at 6 Hz;

Figure 5 shows a ratio of $V_{rect}$ to $V_{oc}$ at different strain levels and frequencies showing that energy can be harvested away from $V_{oc}/2$;

Figure 6 shows measured $V_{rect}$, $V_{HP}$, $V_{diff}$, $V_{ED}$, $V_{ref}$, and $V_{comp}$ to show the operation of the implemented analogue control circuit in enabling the buck converter for power transfer when the PEH is subjected to peak-to-peak strain loading of 300 $\mu\varepsilon$ at 6 Hz;

Figure 7 shows $\eta_{MPT}$ of the proposed circuit obtained by comparing the power generated by the PEH using circuit CFG 1, $P_{g\text{-}PMM}$ (dash) with the power generated by the PEH using circuit CFG 2, $P_{g\text{-}rc}$ (solid) at different frequencies and strain levels of 300 $\mu\varepsilon$ (o), 400 $\mu\varepsilon$ ($\square$), and 500 $\mu\varepsilon$ ($\diamond$);

Figure 8 shows matter of accuracy in finding MPP based on $V_{oc}/2$ method by using strain loading of 500 $\mu\varepsilon$ (solid) at different frequencies as example. Power curves for strain loadings of 300 $\mu\varepsilon$ (dash) and 400 $\mu\varepsilon$ (dash-dot) at 10 Hz are also plotted to show that the method works for different $V_{oc}$;

Figure 9 shows measured voltage $V_{g\text{-}oc}$ (higher amplitude) and voltage $V_{g\text{-}PMM}$ generated by the PEH when it is open-circuited and connected to the power management module respectively in a sweep test. Peak voltage of $V_{g\text{-}PMM}$ is around $V_{oc}/2$ when power transfer occurs, as pointed at one of the occurrences circled in the figure;

Figure 10 shows power consumption $P_{DCC}$ of the differentiator and comparators in the implemented control circuit (top) and the power $P_{RD}$ dissipated by $R_{D1}$ and $R_{D2}$ (bottom) at different frequencies and strain levels;

Figure 11 shows current $I_{DCC}$ and voltage $V_{DCC}$ measured when the PEH is subjected to a strain level of 300 $\mu\varepsilon$ at 2 Hz (top) and 10 Hz (bottom).

Figure 12 is a diagram of a system for single source power management with power extraction, analogue control circuit for maximum power point finding and energy-aware interface for energy flow management;

Figure 13 is a power extraction circuit;

Figure 14a is a circuit diagram of the energy aware interface;

Figure 14b shows the operation of the energy aware interface;

Figure 15 is a flow chart of the energy aware interface;

Figure 16a, 16b, and 16c show illustrations of the operating stages: (a) stage 1, (b) stage 2, and (c) stage 3, of the power management circuit;

Figure 17 shows Main waveforms of the proposed circuit in one recharge and discharge cycle of CS (It should be noted that the waveform for MR is optional. It is only applicable when software control of the EAI is used.);

Figure 18 is a multisource power management circuit;

Figure 19 is an interface circuit for different energy harvesters;

Figure 20 is a convertor for the power management circuit;

Figure 21 shows the functional blocks of the smart control module;

Figure 22 shows a flow diagram of the smart control module;

Figure 23 shows a concept of efficient and adaptive multi-source PM for EH powered IoTs;

Figure 24a shows a block diagram of the custom developed energy harvesting powered WSN with the EAI;

Figure 24b shows an image of a prototyped PCB of the developed energy harvesting powered WSN;

Figure 25a shows a schematic of the hardware EAI;

Figure 25b shows an illustration of the voltage Vcs changes across the capacitor under the control of EAI.

Figure 26 shows a schematic of the developed WSN connected with the EAI;

Figure 27 shows a flowchart of the operation cycle of the energy-aware programmed WSN by software;

Figure 28 shows (a) a block diagram of the experimental setup used for the characterization. (b) images of the experimental setup for the PEH powered WSN to transmit data wirelessly to a base station;

Figure 29 shows a time dependence of (a) the voltage Vcs, (b) the current Iw with enlarged plots, (c) during a complete active time, and (d) during the sleeping time from configuration 1;

Figure 30a shows a time dependence of (a) the voltage Vcs and (b) the current Iw from configuration 2;

Figure 30b shows a time dependence of (a) the voltage Vcs and (b) the current Iw from configuration 2;

Figure 31a shows a time dependence of the current Iw with the MCU running (a) in a normal sleep mode and (b) the detailed plot;

Figure 31b shows a time dependence of the current Iw with the MCU running (a) in a normal sleep mode and (b) the detailed plot;

Figure 32 shows (a) an illustration of PEH as a linear circuit and (b) its maximum power point occurring at half of the open-circuit voltage;

Figure 33 shows a schematic of the proposed MPPT circuit;

Figure 34 shows an illustration of the MPPT occurring at Vrect= Voc/2 at the peak of V HP;

Figure 35 shows the operation of the proposed MPPT circuit;

Figure 36 shows measured waveforms of Vdiff, Vrect, Vref, and Vcomp of the implemented MPPT circuit;

Figure 37 shows the efficiencies of the proposed MPPT;

Figure 38 shows the power consumption of the circuit;

Figure 39 shows a comparison of total efficiency with turbine cross-section area;

Figure 40 shows illustrated energy harvester locations;

Figure 41 shows illustrated energy harvester locations within a wing fairing;

Figure 42 shows a section view of a helical savonius turbine;

Figure 43 shows a helical savonius wind turbine ø15 x 20 m;

Figure 44 shows a energy harvester rotating within single vortex shed from plate; vortex indicated by string tell-tail;

Figure 45 shows a vortex shedding energy harvester voltage, current and power versus fixed load resistance for 17 m/s air flow;

Figure 46 shows the designed turbine;

Figure 47 shows a schematic of the implemented system;

Figure 48 shows a prototyped airflow energy harvester behind a vortex inducing plate as indicated by the yellow line;

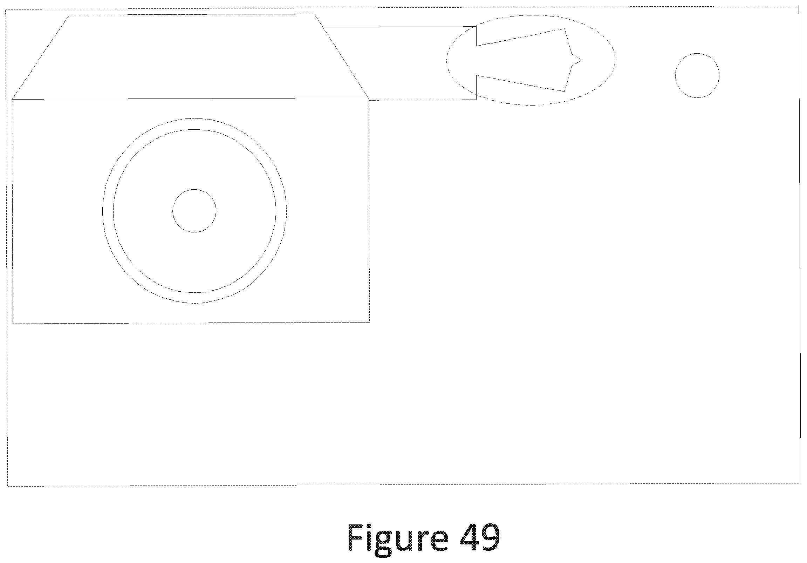

Figure 49 shows an airflow energy harvester rotating within a single veiling;

Figure 50 shows power, voltage, and current generated by the vortex shedding energy harvester with different resistive load at air speed of 17 m/s;

Figure 51 shows power generated by the airflow energy harvester subjected vortexes induced by airflow with speed of 10 to 18 m/s;

Figure 52 shows an MPPT of the power management module at different wind speeds; and

Figure 53 shows current consumption of the maximum power point finding circuit.

## Specific description

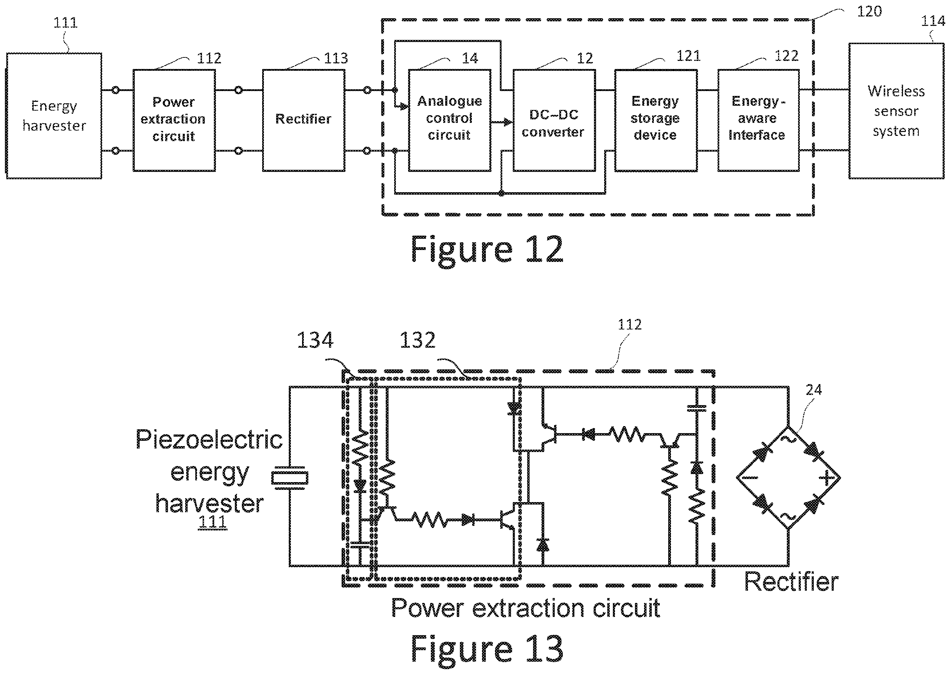

As shown in Figure 12, a low power and adaptive power management circuit for energy harvesting is provided. The circuit transfers energy from a energy harvester 111 to a wireless sensor system 114. The core functionality of the circuit to be adaptive towards: (a) time-varying ambient energy inputs from the energy harvester 111, (b) time-varying connected electrical loads of the wireless sensor system 114, and (c) the mismatch between energy harvested from the energy harvester 111 and energy demanded by the wireless sensor system 114 is given by a power management circuit 120. A microwatt power analogue control circuit 14 determines the maximum power point (MPP) of the energy harvester 111 which is time varying and enables the DC-DC converter 12 for energy transfer from the energy harvester 111 once the MPP is found. The energy harvested from the energy harvester 111 will be transferred by the DC-DC converter 12 to an energy storage device 121 where the transferred energy will be stored. The energy-aware interface 122 determines whether sufficient energy has been accumulated for the wireless sensor system 114 to perform a task. When there is insufficient energy, the energy-aware interface 122 disconnects the wireless sensor system 114 from the energy storage device 122, for efficient energy accumulation since no energy will be consumed by the wireless sensor system 114. This also makes the power management circuit 120 free from the influence of the wireless senor system 114, which effectively makes the power management circuit 120 adaptive to any connected electrical loads. Once sufficient energy has been accumulated to meet the energy demand of the wireless sensor system 114, the energy-aware interface 122 connects the energy storage device 121 to the wireless sensor system 114 so that the stored energy can be used to power up the wireless sensor system 114 to perform its task. A power extraction circuit 112 can be added to extract more power from non-resistive energy harvester such as piezoelectric transducers for a higher energy transferred for a quicker energy storing and activation of the end-application. When a non-adaptive power extraction circuit 112 is used together with the power management circuit 120, its performance will be free from the influence of the connected electrical load. The circuit can also include a rectifier 113 to convert an alternating current output of energy harvesters such as piezoelectric transducers into a direct current output as required by electronic devices.

The analogue control circuit 14 directly finds the fraction of VOC which corresponds to the MPP of the energy harvesters without having to sample the VOC first, using an RC high-pass filter, analogue non-inverting differentiator and comparators.

A non-adaptive power extraction circuit when used in conjunction with the power management circuit 120, is able to extract up to 1.56 times more power from a piezoelectric energy harvester without any influence by the connected electrical load at the output of the power management circuit 120.

The energy-aware interface 122 allows any type of electrical load or wireless sensor system 114 to be connected to the power management circuit 120 without influencing the energy harvesting capability of the power management circuit 120. The energy demand of the electrical load to complete a task can always be met. A software for a more flexible control on the energy release to the wireless sensor system 114 based on the energy level is also available.

Regarding the analogue control circuit 14, there is provided a novel implementation method of maximum power transfer for piezoelectric energy harvesters (PEHs) connected to a rectifier with a smoothing capacitor at the rectifier output is presented based on the half open-circuit voltage (VOC/2) of a rectified PEH by exploiting the capacitor charging voltage across the smoothing capacitor. The presented technique has a specifically designed high-pass filter which has a peak output voltage that corresponds to the VOC/2 of the PEH, which is also the voltage when maximum power transfer occurs in that circuit configuration. The analogue control circuit 14 filters and differentiates the voltage across the smoothing capacitor 26 to directly determine the timing of reaching the VOC/2 of the PEH 18 without having to find the VOC first, and is fully implemented using discrete analogue components without the need of a programmable controller, leading to low power consumption of the method. The analogue control circuit 14 is used in conjunction with a full wave diode bridge rectifier 24 and a DC-DC converter 12 to harvest energy from a macro-fiber composite (MFC) PEH. The MFC was subjected to various strain levels at low frequencies from 2 to 10 Hz. Experimental results show that the implemented circuit is adaptive to various vibration amplitudes and frequencies and has a maximum power transfer efficiency of up to 98.28% with power consumption as low as 5.16 $\mu$W.

PIEZOELECTRIC energy harvesters (PEHs) are the commonly used transducers to scavenge vibration energy because of their simple structures, rigidities, self-contained power generation capabilities, and attractive high energy densities. The cyclic nature of vibration causes PEHs to produce an AC electrical output which requires rectification into DC and further power management to be usable by low power electronic devices such as energy harvesting powered wireless sensor nodes. Depending on the vibration experienced, the frequency and amplitude of the current and voltage generated by PEHs can be varied, and thus the power generated is limited, intermittent, and variable. Therefore, it is essential to have a control circuit which is adaptive to the output changes from a PEH to ensure maximum power transfer from the PEH to the interface that it is connected with such as a rectifier and a power management module. There are a few adaptive maximum power transfer methods reported, for example, hill-climbing method and fractional open-circuit voltage (FOCV) method to achieve maximum power transfer for piezoelectric energy harvesting. These methods can achieve a relative maximum power transfer, and are generally easier to implement as a standalone system compared with using complex conjugate impedance matching method or nonlinear techniques such as SSHI (synchronized switch harvesting on inductor) and SECE (synchronous electric charge extraction) to conjugate match or form an oscillator with the intrinsic capacitance of the PEHs using inductive elements respectively, for extracting more power. This is because conjugate matching method generally requires a large inductor and although a standalone SECE circuit is load independent generally, it might require large or coupled coil, leading to a larger and heavier overall circuit. SSHI is load dependent, and hence requires an additional adaptive circuit for maximum power transfer. In addition, without a properly designed control, nonlinear techniques induce strong damping which significantly reduces the harvested energy. Therefore, this paper focuses on a novel adaptive maximum power transfer study.

In the hill-climbing method, a DC-DC converter which is operating in discontinuous conduction mode behaves like a variable resistor, achieved by changing its duty cycle for resistive matching. A microcontroller (MCU), digital signal processor (DSP), or fieldprogrammable gate array (FPGA) has been used to repeatedly sense the input voltage and current of the PEHs to determine the power generated, compare the power generated with a reference, and adjust the duty cycle of the DC-DC converter accordingly to ensure that maximum power is transferred. However, the power consumption of such a method is 408 $\mu$W, 4.5 mW, and 50 $\mu$W for MCU, DSP, and FPGA-based controller respectively, which could be higher than the power that a PEH can generate especially under low vibration conditions, and thus is unsuitable for real-world applications when low power is generated. It should also be noted that in energy harvesting applications, the energy supplied to either the power management module or end device all comes from the energy harvester. Most of the energy harvested should be transferred to the end device to carry out the intended tasks. Therefore, if the control circuit has high power consumption, the end device may never ever start up to perform the intended functionalities.

The FOCV method is an a priori method that operates based on the finding that rectified PEHs exhibit a linear electrical characteristic in which the maximum power transfer occurs at half of the amplitude of the open-circuit voltage $V_{oc}$ of the PEH in a weakly coupled system, which is generally the case in piezoelectric energy harvesting regardless of the vibration frequencies or amplitudes, and has been proven experimentally in many literatures. The controllers which adopted this method can be implemented using full analogue discrete component or mixed-signal integrated circuits (ICs) which involve a sensing capacitor and more subsystems, for example, logic gates, switch controller, or digital controller to perform the half open-circuit voltage $V_{oc}/2$ finding algorithms and controls. The PEH is momentarily disconnected from the power management module to obtain its $V_{oc}$. The PEH is then connected to a voltage divider formed by two resistors of the same value to determine its $V_{oc}/2$. The resistor values are properly chosen so that loading effect on the energy harvester and power consumption is minimized. $V_{oc}$ of the PEH is sampled in the sensing capacitor. Then, additional switches and capacitors are used to scale down the sampled $V_{oc}$ to determine $V_{oc}/2$ of the PEH. The power consumption of FOCV based circuit is less than the hill-climbing method, for example, 10 $\mu$W using a mixed-signal IC and 5.04 $\mu$W using full analogue discrete components. Furthermore, a mixed-signal IC which consumes nanowatts of power was reported as well but the input power range was limited between 25 nW and 100 $\mu$W. Despite the low power consumption, $V_{oc}$ of PEHs are usually high and the voltage can be up to 100 V. Therefore, an actual implementation of the circuit can be expensive and possibly hindered by the voltage limitation of the fabrication technologies.

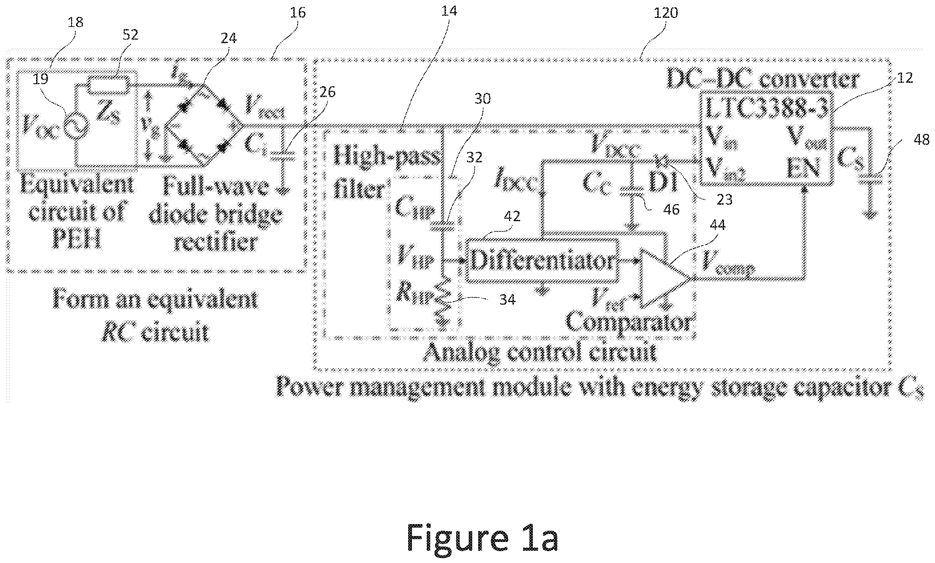

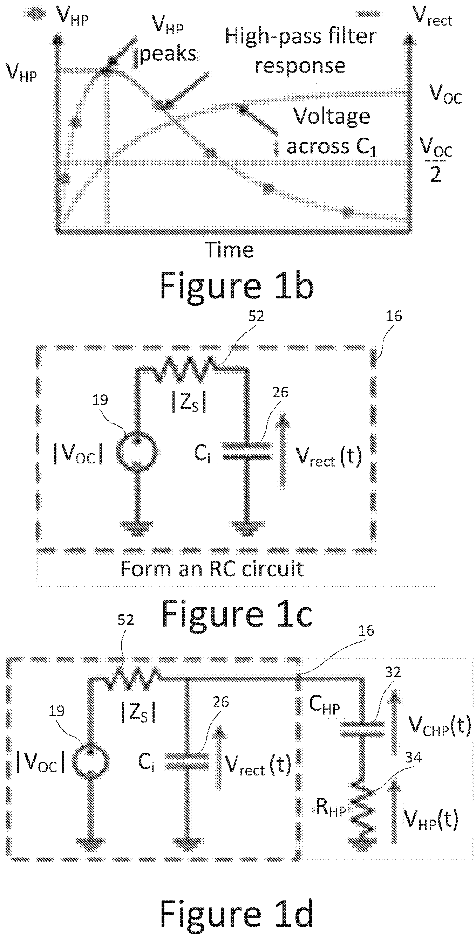

Fig. 1(a) shows the system architecture for piezoelectric energy harvesting using the novelly implemented analogue control circuit in a power management module. The PEH 18 is connected to a full-wave diode bridge (FB) rectifier 24 for conversion of the AC voltage from the PEH 18 into DC voltage and a smoothing capacitor $C_i$ 26 at the rectifier output to smooth out the rectified voltage. The power management module comprises a DC-DC converter 12 and an analogue control circuit 14 which is formed by a high-pass filter 30, a differentiator 42, and a comparator 44 to realize the novel method of finding $V_{oc}/2$ for a relative maximum power transfer here. The proposed control method is based on the well proven finding that maximum power transfer occurs at $V_{oc}/2$ of the PEH 18 as discussed in the introduction section but uses a novel implementation method by exploiting the voltage charging profile of the smoothing

capacitor $C_i$ 26 in conjunction with the specifically designed high-pass filter 30 formed by the capacitor $C_{HP}$ 32 and the resistor $R_{HP}$ 34, placed in parallel with $C_i$ 26. The high-pass filter 30 has a peak voltage that corresponds to $V_{oc}/2$ of the PEH 18 if the filter is designed properly as illustrated in Fig. 1 (b). The time that the peak voltage occurs is also the time maximum power transfer occurs in the circuit shown in Fig. 1(a). The analogue control circuit 16 then differentiates the output voltage $V_{HP}$ across $R_{HP}$ of the high-pass filter to determine the timing of reaching $V_{oc}/2$ of the PEH 18 without having to find the $V_{oc}$ first. Since there is no need of a programmable controller as in the hill-climbing method, the circuit is fully implemented using discrete analogue components, which leads to a low power consumption.

For simplicity of analyses, assume that the FB rectifier 24 is lossless and $C_i$ 26 is sufficiently large, when the PEH 18 is subjected to a vibration, the maximum rectified voltage $V_{rect}$ that could be attained is the modulus of $V_{oc}$. $V_{rect}$ exhibits a typical voltage charging profile of a capacitor which will be verified by experiment. Therefore, the PEH 18, FB rectifier 24, and $C_i$ 26 highlighted by the dashed line in Fig. 1(a) can be seen as an equivalent RC circuit 16 with a DC voltage source 19, that is, a DC voltage source 19 with a series resistor 52 which charges up $C_i$ 26 as shown in Fig. 1(c). The rectified PEH 18 can be modeled as a DC voltage source 19 with the magnitude of $V_{oc}$ and with an equivalent series source resistance which comes from the modulus of the source impedance Zs 52 of the PEH. Also, the branch formed by $C_{HP}$ 32 and $R_{HP}$ 34 has been specifically designed to have a sufficiently large impedance to minimize the loading effect on the PEH 18 so that it has negligible effects on $V_{rect}$.

The DC-DC converter 12 is initially disabled in the analogue control circuit 14 and is only enabled for a short time to transfer energy from the PEH 18 to the energy storage 121 when $V_{oc}/2$ of the PEH is found. The differentiator 142 and comparator 144 have very low current consumption. Therefore, the DC-DC converter 12, differentiator 142, and comparator 144 can be regarded as open-circuited and ignored in the circuit analysis. The rectified voltage $V_{rect}$ across $C_i$ 26 can be written as (1) with the time constant r equals $|Z_s|C_i$.

$$V_{\text{rect}}(t) = |V_{\text{OC}}|\left(1 - e^{-t/\tau}\right) \qquad (1)$$

The time t required for $V_{rect}$ to be charged up to the amplitude which is equal to $|Voc/2|$ is given by (2)

$$t = \tau \ln 2 \qquad (2)$$

Therefore, the system is required to detect the timing that Voc/2 has reached at t = rln2 for maximum power transfer. The RC high-pass filter 30 which is specifically designed in the system, as shown in Fig. 1(a), can be used to produce a peak voltage at $t$ = rln2 as the signal to indicate that Voc/2 has reached. The reason is given below.

The RC high-pass filter 30 formed by capacitor $C_{HP}$ 32 and resistor $R_{HP}$ 34 in parallel with the equivalent circuit of the smoothing capacitor $C_i$ 26 and the rectified PEH 18 is shown separately in Fig. 1(d) for ease of analyses. The relationship among the voltages of the loop formed by $C_i$ 26, $C_{HP}$ 32, and $R_{HP}$ 34 is given by (3)

$$V_{\text{rect}}(t) = V_{\text{CHP}}(t) + V_{\text{HP}}(t) \qquad (3)$$

Equation (3) can be rewritten as a first order equation as depicted by (4) and solved to obtain (5).

$$V_{\text{rect}}(t) = V_{\text{CHP}}(t) + R_{\text{HP}}C_{\text{HP}}\frac{\mathrm{d}}{\mathrm{d}t}V_{\text{CHP}}(t) \qquad (4)$$

$$V_{\text{CHP}}(t) = V_{\text{rect}}(t)\left(1 - e^{-t/\tau_{\text{HP}}}\right) \qquad (5)$$

where the time constant $T_{HP}$ is equal to RHPCHP.

Substituting (1) and (5) into (3), $V_{HP}$ can be written as (6).

$$V_{HP}(t) = V_{rect}(t) - V_{rect}(t)\left(1 - e^{-t/\tau_{HP}}\right)$$
$$= |V_{OC}|\left(e^{-t/\tau_{HP}} - e^{-t\left[1/\tau + 1/\tau_{HP}\right]}\right) \tag{6}$$

If $T_{HP}$ is set to be equal to r, (6) becomes (7)

$$V_{HP}(t) = |V_{OC}|\left(e^{-t/\tau} - e^{-2t/\tau}\right) \tag{7}$$

The time that $V_{HP}$ reaches its peak can be determined by differentiating (7) and solved for t as shown by (8).

$$\frac{d}{dt}V_{HP}(t) = |V_{OC}|\left(\frac{2}{\tau}e^{-2t/\tau} - \frac{1}{\tau}e^{-t/\tau}\right) = 0$$
$$\frac{1}{\tau}e^{-t/\tau}\left(2e^{-t/\tau} - 1\right) = 0$$
$$t = \tau \ln 2 \tag{8}$$

It can be seen that (8) is identical to (2), which means when $V_{HP}$ reaches its peak value, the peak value of $V_{HP}$ is aligned with Voc/2 of the PEH 18, representing that one can use an RC circuit to find the maximum power point if $T_{HP}$ of the filter is properly designed to be equal to r. Furthermore, from (6), it can be seen that the instant value of $V_{HP}$ is related to the instant $V_{rect}$ and the amplitude of $V_{oc}$. From (8), the timing of the peak of $V_{HP}$ is only related to $\tau$ when $T_{HP}$ is set to be r regardless of the initial value of $V_{rect}$. Therefore, the peak of $V_{HP}$ has no relation with the initial $V_{rect}$ and $V_{oc}$. Therefore, for a chosen PEH with a chosen range of operational frequency and a chosen value of smoothing capacitor, r can be known through measurements. This method can be implemented without the need of finding $V_{oc}$ first or using power hungry controllers.

Although the above analyses are based on a constant DC source, the real voltage produced by a PEH is not constant. From (8), it can be seen that the time finding for $V_{oc}/2$ is independent of $V_{oc}$. Therefore, this method can be suitable for varying voltage, which will be verified experimentally in Section V. In addition, it should be noted that the purpose of the simplified theoretical analyses presented here is to aid the reader to understand that $V_{oc}/2$ can be found using the high-pass filter 30 and the differentiator 42 if the filter is designed properly at the condition of $T_{HP}$ = r, and it is not for finding the parameters of the high-pass filter 30. The design of the high-pass filter 30 will be discussed in Section III B.

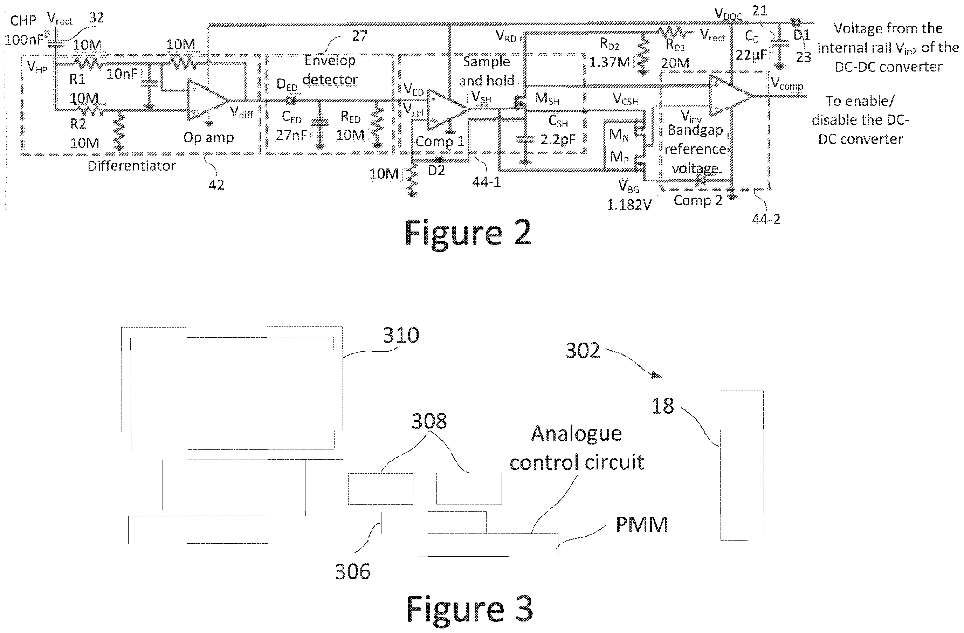

Schematics of the proposed system and the detailed implementation of the analogue control circuit 14 are shown in Figs. 1(a) and 2 respectively. The FB rectifier 24 is composed of four BAS70 Schottky diodes which have low forward voltage drop and low leakage current so that the power loss is low. The DC-DC converter 12 chosen is a buck converter (DC1658A-B, demo board of LTC3388-3) to step down the voltage produced by a PEH 18 because the produced voltage is usually higher than the voltage usable by low power electronic devices such as wireless sensor nodes which have an operating voltage range of 1.8 to 3.8 V. Cs 48 is a supercapacitor for energy storage.

The power source of the analogue control circuit 14 is taken from an internal rail $V_{in2}$ of the buck converter 12 as shown in Fig. 1(a) for implementation simplicity to avoid introducing an extra circuit for a lower regulated voltage supply and extra power consumption associated with that circuit in the proposed analogue control circuit. $V_{in2}$ can provide a regulated voltage at 4.6 V from the input voltage $V_{rect}$ fed into the buck converter 12 even when the buck converter 12 is disabled. This means the proposed system can self-start without any issue by using the input power directly from the PEH 18 unless the voltage generated by the PEH 18 is extremely low, below the operating voltages of the components used due to extremely low vibration. The voltage from $V_{in2}$ is equal to $V_{rect}$ before it reaches 4.6 V but will be steady at 4.6 V if $V_{rect}$ is higher than 4.6 V. Therefore, $V_{in2}$ will fluctuate with $V_{rect}$ when its amplitude is low. To ensure that the supply voltage given to the analogue control circuit 14 is stable, diode D1 (BAS70) and capacitor Cc 21 are used. Taking the forward diode drop of diode D1 23 into account, capacitor Cc 21 holds the supply voltage at around 4.3 V. Diode D1 23 prevents the current from flowing back into the buck converter when $V_{rect}$ drops below 4.3 V. Therefore, $V_{DCC}$ can stay relatively stable even when there is a sudden drop in the voltage provided by the internal rail of the buck converter.

The buck converter 12 is disabled initially, and can be regarded as open-circuited which allows the PEH 18, FB rectifier 24, and $C_i$ 26 to effectively form an equivalent RC circuit as discussed earlier. From Fig. 2, $C_{HP}$ 32, R1, and R2 form the high-pass filter, where voltage across R1 and R2 is $V_{HP}$. $V_{HP}$ is taken as the input to the differentiator realized by a nano-current operational amplifier (LPV521MGE). Output from the differentiator $V_{diff}$ is passed through an envelope detector for a smoother signal as VED, which is used to compare with a reference voltage $V_{ref}$ by the comparator Comp 1 (TS881ICT). In theory, the differentiation of a peak value is equal to zero for the timing of maximum power transfer. However, in practice, it is difficult for a comparator to compare a zero value with a reference which is zero as well where the output could be unpredictable. Therefore, $V_{ref}$ implemented in the circuit is slightly away from zero and is designed in such a way in the circuit that $V_{ref}$ comes from $V_{RD}$ which is a scaled down voltage from $V_{rect}$ using the voltage divider formed by $R_{D1}$ and $R_{D2}$, and then by passing $V_{RD}$ through a diode D2 (1N754A). This implementation method is viable because the power that can be transferred with slight deviation from $V_{oc}/2$ is still close to the power available at the maximum power point (MPP) of the PEH 18, which will be verified in Section V.

To best design the filter with $T_{HP}$ equals r, the time constant r of the equivalent RC circuit formed by the chosen PEH 18, FB rectifier 24, and $C_i$ 26 as shown in Fig. 1(c) was measured at 6 Hz in this paper. With r known from the measurement, many combinations of resistances and capacitances can lead to the same $T_{HP}$. To minimize the amount of power dissipated by the resistors and the loading effect on $C_i$ 26, the total resistance of R1 and R2 are chosen as 20 MΩ and then the value of $C_{HP}$ 32is determined accordingly.

Another comparator Comp 2 (LTC1540) is used to enable or disable the buck converter. Comp 2 has an internal bandgap reference voltage which is always higher than the amplitude of $V_{RD}$. The bandgap reference voltage is fed to the inverting input while $V_{RD}$ is fed to the non-inverting input of Comp 2 so that $V_{comp}$ generated is LOW to disable the buck converter for most of the time before $V_{HP}$ reaches its peak.

When $V_{HP}$ reaches its peak, $V_{CSH}$ which is held by a sample and hold (S/H) circuit formed by Comp 1, MOSFET $M_{SH}$ (FDC6420C), and $C_{SH}$ is fed to the inverting input of Comp 2 while $V_{RD}$ at the non-inverting input of Comp 2 continue to rise. Subsequently, $V_{comp}$ becomes HIGH, which enables the buck converter for power transfer from the PEH 18 to the energy storage capacitor Cs 48 until $V_{RD}$ drops below $V_{CSH}$ and the cycle repeats.

Experiments were conducted with two different circuit configurations to verify the performance of the proposed method for maximum power transfer in piezoelectric energy harvesting. The first configuration (CFG 1) used is the implemented system as shown in Fig. 1(a) where the PEH 18 is connected with a power management circuit 120 with the proposed analogue control circuit 14 after the FB rectifier 24 . In CFG 2, the power management circuit 120 and energy storage highlighted in the dotted line is replaced by a variable resistor, placed in parallel with $C_i$ 26 to measure the maximum power that can be generated by the PEH 18 interfaced with a FB rectifier 24 for comparison purpose. The optimal resistive load for CFG 2 is determined by manually tuning the variable resistor until maximum power generated by the PEH 18 is found. CFG 2 is used because in most circuit designs, a smoothing capacitor is always required after the rectifier to smooth out the rectified voltage, which is similar to the implemented system for fair comparison. The value of $C_i$ 26 used in CFG 1 and CFG 2 is the same 22 μF and is chosen so that $C_i$ 26 is much larger than the intrinsic capacitance Cp of around 200 nF of the PEH 18 for a more efficient power transfer. Signals in the analogue control circuit 14 were also measured to verify the circuit operation. The circuit was built on a breadboard for ease of measurement.

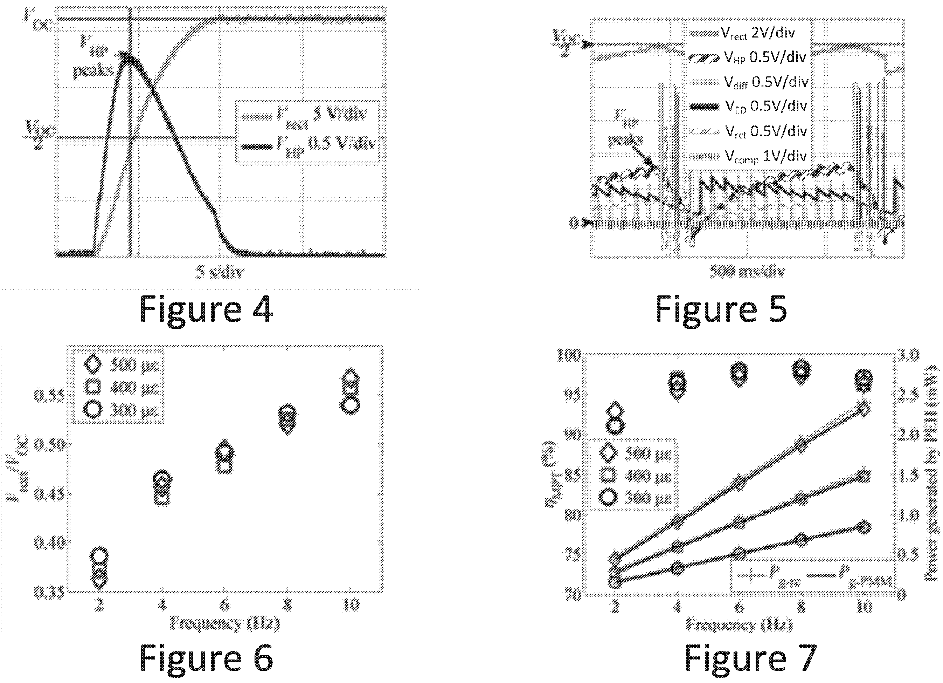

A M8528-P2 macro-fiber composite (MFC) piezoelectric transducer bonded on a composite material using adhesive glue was used as the PEH 18. Both ends of the MFC PEH 304 was held firmly in an Instron E10000 ElectroPuls dynamic and fatigue test machine 302 by its two grips where one is movable and one is fixed as shown in Fig. 4. The movable grip applies different strain and frequency loadings onto the composite substrate by its upwards and downwards movement. With such a cyclic loading applied onto the composite substrate, the PEH 18 generates sinusoidal output.

It is important to verify that the implemented circuit is adaptive to the variation of vibrational conditions in an ambient environment for actual deployment in real-world applications. For this test, a sweep test at 10 Hz using peak-to-peak strain loadings from 300 με to 500 με, and then back to 300 με was applied onto the PEH 18. Tests of applying different frequencies from 2 to 10 Hz and different mechanical loadings with peak-to-peak strain levels of 300 με, 400 με, and 500 με using the Instron machine 302 were also carried out on both circuit CFGs 1 and 2, where the power generated by the PEH 18 is measured.

Fig. 3 shows the measuremental setup for performance verification. A National Instrument (NI) data acquisition system (DAQ) 306 was used to measure the voltage $V_g$ generated by the PEH 18 in CFG 2 for finding the maximum power which can be generated while tuning the variable resistor to its optimal value since the NI DAQ 306 can show real-time measuremental results. Keithley 2612B sourcemeter units (SMUs) 308 which have a higher resolution than NI DAQ 306 were then used to measure $V_g$ and $i_g$ generated by the PEH 18 for both circuit CFG 1 and CFG 2.

The instantaneous power $p_g$ generated by the MFC PEH 304 is the product of $V_g$ and $i_g$ as given by (9). The time average of (9) is the average power produced by the PEH 18 as depicted by (10).

$$p_g\left(t\right) = v_g\left(t\right)i_g\left(t\right) \qquad (9)$$

$$P_g = \frac{1}{T} \int_0^T p_g(t)\,dt \qquad (10)$$

To distinguish the power generated by the PEH 18 in circuit CFG 1 and CFG 2, the subscripts 'PMM' and 'rc' which represent the two different circuit configurations which were connected at the rectifier output will be added. Voltages $V_{rect}$, $V_{DCC}$, and current $I_{DCC}$ of circuit CFG 1 were also measured using the SMUs. The power $P_{RD}$ dissipated by the resistors $R_{D1}$ and $R_{D2}$ was calculated using (11) and the power $P_{DCC}$ consumed by the control circuit formed by the differentiator 42 and comparators 44-1, 44-2 as shown in Fig. 2 was determined by (12).

$$P_{RD} = \frac{\sum_{k=1}^{N} V_{rect}^2(t_k)\,\Delta t}{t(N)(R_{D1} + R_{D2})} \qquad (11)$$

$$P_{DCC} = \frac{\sum_{k=1}^{N} V_{DCC}(t_k) I_{DCC}(t_k)\,\Delta t}{t(N)} \qquad (12)$$

where $\Delta t$ is the sampling time of the SMUs 308 and $t(N)$ is the time taken to do the measurement. The NI DAQ 306 system and SMUs 308 were connected to a computer and controlled via a LabVIEW interface 310 to record all the measurements into the computer.

$P_{g\text{-}rc}$ which is the maximum power generated by the PEH 18 in CFG 2 with an optimal load will be used as a reference to assess the capability of maximum power transfer from CFG1 with the proposed method, that is, if the power generated $P_{g\text{-}PMM}$ from the implemented circuit CFG 1 can match $P_{g\text{-}rc}$ in percentage. Therefore, the capability for maximum power transfer from the PEH 18 using circuit CFG 1 $\eta_{MPT}$ is defined as the ratio of $P_{g\text{-}PMM}$ to $P_{g\text{-}rc}$ as given by (13).

$$\eta_{MPT} = \frac{P_{g\text{-}PMM}}{P_{g\text{-}rc}} \times 100\% \qquad (13)$$

The total power consumption $P_{ACC}$ of the analogue control circuit 14 is the summation of (11) and (12) as given by (14).

$$P_{ACC} = P_{RD} + P_{DCC} \qquad (14)$$

To show that $V_{HP}$ will indeed reach its peak at $V_{oc}/2$ of a PEH 18, the buck converter 12 was deliberately disabled all the time when the PEH 18 was subjected to a peak-to-peak strain loading of 300 $\mu\varepsilon$ at 6 Hz as an example while $V_{rect}$ and $V_{HP}$ were measured using an oscilloscope with the results shown in Fig. 4. $V_{rect}$ shows a typical capacitor charging profile, which validates the circuit model used in Section II.B for the theoretical analyses.

Still using the strain loading of 300 $\mu\varepsilon$ at 6 Hz as an example, Fig. 5 shows the measured $V_{rect}$, $V_{HP}$, $V_{diff}$, $V_{ED}$, $V_{ref}$, and $V_{comp}$ to verify the normal operation of the implemented analogue control circuit in enabling the buck converter for power transfer from the PEH 18 to the energy storage. It can be seen that the analogue control circuit can closely finds $V_{oc}/2$ of the PEH 18 when $V_{HP}$ reaches its peak for that test condition. $V_{comp}$ becomes HIGH to enable the buck converter to transfer energy to the energy storage, and hence $V_{rect}$ starts to drop. $V_{ref}$ has some pulses after the $V_{HP}$ peaks due to the fluctuations at $V_{ref}$ caused by the power transfer but they have no effect on the power transfer after $V_{HP}$ peaks because once the power transfer begins, it continues until $V_{rect}$ drops to a certain level instead of transferring once at a fixed point. When $V_{rect}$ drops to a certain level after the power transfer, $V_{comp}$ becomes completely LOW again to disable the buck converter and the whole cycle repeats. The $V_{HP}$ shown in Fig. 5 has some ripple because all the components are now under normal operation, drawing more current than the circuit which produces the $V_{HP}$ shown in Fig. 4. The ripple causes $V_{diff}$ to become a pulse-like output with decreasing magnitude as $V_{HP}$ is approaching its peak. The envelope detector effectively converts $V_{diff}$ into $V_{ED}$ to avoid false detection of the peak of VHP since $V_{diff}$ goes to zero multiple times.

In this paper, the vibration frequency range of interest is 2 to 10 Hz. Therefore, the high-pass filter was designed to have $V_{HP}$ peaks at $V_{oc}/2$ for the frequency of 6 Hz, which is at the center of the frequency range of interest so that the power harvested at the other frequencies is near to the maximum power that can be transferred from the PEH 18 in this circuit configuration.

As discussed above, the proposed circuit can closely find $V_{oc}/2$ at one specifically designed vibration frequency but has lower accuracies for other vibration frequencies because the time $V_{H}p$ peaks is mainly determined by the specifically designed high-pass filter with a fixed time constant in this implemented circuit. Therefore, the time where $V_{H}p$ reaches its peak at $V_{oc}/2$ only occurs at around 6 Hz for the implemented circuit as shown in Figs. 4 and 5. The ratio of $V_{rect}$ to $V_{oc}$ at different strain levels and frequencies are shown in Fig. 6. It can be seen that the implemented circuit initiates power transfer at approximately $V_{oc}/2$ with accuracy of 72 to 99 % for the tested frequencies and strain loadings. The question raised here is when the derivative of $V_{HP}$ equals zero is away from $V_{OC}/2$, how much of the power harvested is away from the power available at MPP of the PEH 18?

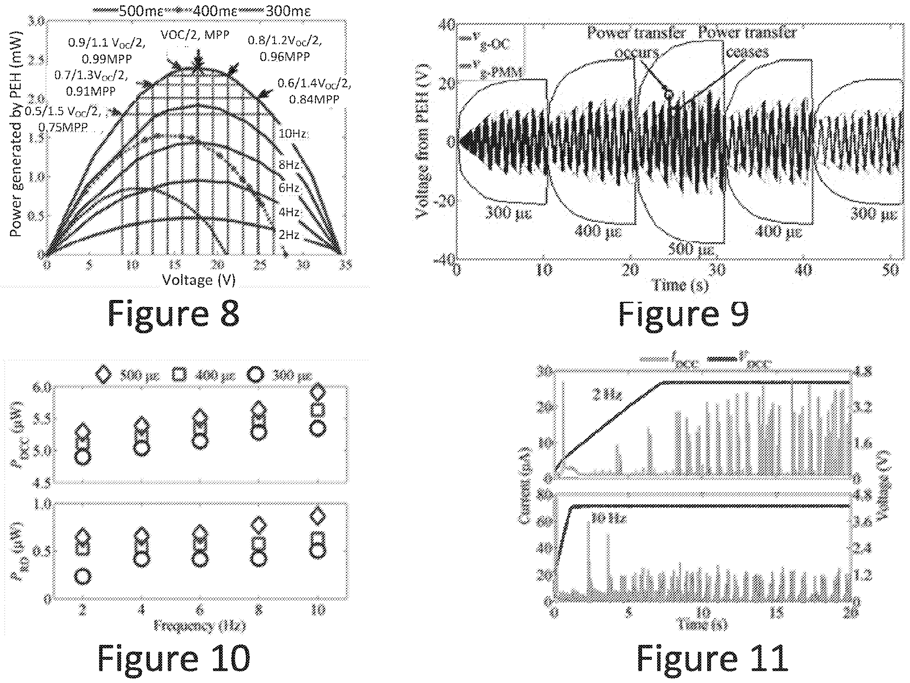

Fig. 7 compares $P_{g\text{-}PMM}$ with $P_{g\text{-}rc}$ that is generated by the PEH 18 subjected to different strain loadings and frequencies. The results show that $P_{g\text{-}PMM}$ ranges from 152 $\mu$W to 2.3 mW and is very close to $P_{g\text{-}rc}$ for all the tests. This means the implemented circuit can be powered directly by using the input power from the PEH and is able to harvest energy from the PEH 18 with $\eta_{MPT}$ of 91.07 to 98.28 %, calculated using (13) for all the tests. With the efficiency staying above 90 %, the energy harvesting capability of the implemented circuit is high. The trend of $\eta_{MPT}$ agrees with the results shown in Fig. 6, where the efficiency is the lowest at 2 Hz and gradually increases as the frequency increases. Peak efficiency is around 6 and 8 Hz before it drops again at 10 Hz. It can be concluded that $V_{oc}/2$ based method have high tolerance of harvesting energy at the voltage away from $V_{oc}/2$. This can also be explained using the obtained experimental power curves that change with respect to voltages from CFG 2, as shown in Fig. 8, while the variable resister is being tuned to find the MPP of the PEH 18. The power curve is parabolic, meaning that the power deviates a little from its MPP although the voltage is away from $V_{oc}/2$ at higher percentages. For example, even though the voltage of the implemented method is away by $\pm30$ % from Voc/2, which is at 0.7 or 1.3Voc/2, 91 % of the power available at MPP can still be obtained and the trend remains the same regardless of the changes in frequency or $V_{oc}$. It should be noted that the studied case in this paper is one of the worst cases as $|Z_s| = (2\pi fC_p)^{-1}$ of the PEH 18 changes drastically at low frequencies and so does the r, whereas $|Z_s|$ gently decreases at higher frequencies. The proposed method shows good performance at low frequencies and is expected to work well at higher frequencies over a wide range of frequencies based on theoretical changes of r with $|Z_s|$ if the filter is designed for a high operational frequency.

Results from Fig. 7 prove that the implemented circuit is adaptive to the changes of input vibration as it can harvest energy from the PEH 18 with high efficiency under different test conditions. The sweep test from 300 $\mu\varepsilon$ to 500 $\mu\varepsilon$ and back to 300 $\mu\varepsilon$ at 10 Hz further proves that the circuit is adaptive to real time changes as shown in Fig. 9. The PEH which was in open-circuit produced different open-circuit voltages $V_{g\text{-}OC}$ when it experienced different strain levels. A circuit which is adaptive has to be able to initiate the power transfer process at different voltage levels when the PEH 18 is subjected to different strain levels. Measured $V_{g\text{-}PMM}$ from the sweep test shows that the implemented analogue control circuit can indeed initiate the power transfer process at different voltage levels. This proves that the implemented circuit is able to respond to real-time changes of a vibration source.

Using one of the occurrences at 500 $\mu\varepsilon$ as example, the sawtooth-like waveform of $V_{g\text{-}PMM}$ can be explained as follows. The circuit initiates the power transfer at around $V_{oc}/2$ as circled in Fig. 9. The power transfer process causes the voltage $v_{g\text{-}PMM}$ from the PEH 18 to drop, and thus the circuit ceases the power transfer after the voltage drops as indicated by the square symbol in Fig. 9 because it moves away from the $V_{oc}/2$. This allows the voltage from the PEH 18 to rise back to the value of around $V_{oc}/2$ and the whole power transfer process cycle repeats as long as there is a vibration exciting the PEH 18.

It should be noted that the Instron machine 302 requires some time to reach its steady state operation. Therefore, the voltage waveform gradually increases whenever there is a change of strain loading applied onto the composite substrate. From the results shown in Fig. 9, the circuit initiates power transfer at about $V_{oc}/2$ of the PEH 18 even though the vibration exerted onto the PEH 18 is not at its steady state yet. Therefore, it can be further justified that the implemented method is suitable for a time-varying amplitude vibration which usually happens in the real-world rather than just a constant amplitude vibration.

It should also be noted that amplitude of the voltage produced by the PEH 18 changes with the vibration applied and $V_{rect}$ changes accordingly too. The implemented circuit is able to adapt to the changes since many parts of the circuit such as the high-pass filter 30 and the differentiator 42 as well as parameters such as $V_{RD}$, $V_{CSH}$, and Vref changes with $V_{rect}$.

The power consumptions $P_{DCC}$ and $P_{RD}$ of the analogue control circuit 14 as shown in Fig. 2 are given in Fig. 10. It can be seen that $P_{DCC}$ slightly increases with both the strain levels and the frequencies applied on the PEH 18. Equation (11) shows that the power $P_{RD}$ dissipated at the resistive divider network is related to $V_{rect}$. When the PEH 18 experiences a higher strain level, $V_{rect}$ will become higher because of a higher voltage, $v_{g\text{-}PMM}$, produced by the PEH 18, as shown in Fig. 9. The circuit will therefore harvest the energy at a higher $v_{g\text{-}PMM}$ and with the higher $V_{rect}$, dissipate more power according to (11).

Fig. 10 indicates that the power consumption of the implemented circuit increases with frequency. This is because with higher vibration frequency applied onto the PEH 18 as shown in Fig. 8, more power can be generated, and thus $V_{rect}$ can be charged up quicker and more often to $V_{oc}/2$ in a given period of time. The analogue control circuit 14 has to operate more frequently to initiate the power transfer in response to the changes of $V_{rect}$, and thus consumes more power. Fig. 11 shows the current $I_{DCC}$ consumed by the analogue control circuit 14 with the applied peak-to-peak strain loadings of 300 $\mu\varepsilon$ at 2 Hz and 10 Hz onto the PEH 18 as examples. The analogue control circuit 14 can be seen to operate more often as more current peaks are seen when a higher frequency is applied onto the PEH 18. The initial inrush current is also higher at 10 Hz because there is more power generated by the PEH 18 at a higher frequency, which leads to a higher average current consumption. $V_{DCC}$ of the analogue control circuit 14 shown in Fig. 11 further confirms the low current consumption of the circuit since $V_{DCC}$ does not drop when the analogue control circuit 14 is operating. This also indicates that stable voltage can be supplied to the circuit using D1 and Cc.

The measured power consumption $P_{ACC}$ of the proposed circuit implemented using discrete components in the studied case is between 5.16 $\mu$W and 6.78 $\mu$W, which is comparable to the design using discrete components with power consumption of 5.04 $\mu$W. Such a low power consumption enables the circuit to be powered up entirely using the input power from the energy harvesters 111, which significantly reduces the risk of start-up issue and does not require a start-up circuit.

An adaptive microwatt power consumption analogue control circuit 14 is presented and demonstrated for harvesting energy from an MFC piezoelectric transducer which is subjected to various vibrational frequencies and strain loadings. The circuit employs a novel $V_{oc}/2$ finding scheme by exploiting the RC response of a charging capacitor voltage profile and introducing a specifically designed high-pass filter 30 with a peak voltage that corresponds to the $V_{oc}/2$ of the PEH 18. The control circuit filters and differentiates the voltage across a capacitor to directly determine the timing of reaching the $V_{oc}/2$ of the PEH 18. The proposed method for maximum power transfer from the PEH 18 based on the rectified voltage across the smoothing capacitor 26 is shown to have a high tolerance of harvesting energy at the voltage away from $V_{oc}/2$. More than 90 % of the maximum power available can still be harvested even when the voltage is away from Voc/2 by up to ±30 %. The implemented power management circuit 120 with the proposed analogue control circuit 14 is able to harvest as much as 98.28 % of the power that the PEH 18 can generate when it was connected with its optimal resistive load 31. The circuit is also adaptive to real-time amplitude changes as demonstrated in the strain level sweep test.

The analogue control circuit 14 is fully implemented using low power analogue discrete components without the need of more than one capacitor-switch pair and other associated subsystems as required in many reported mixed-signal circuits which determine $V_{oc}/2$ via charge sharing. This circuit consumes between 5.16 $\mu$W and 6.78 $\mu$W of power for all the tested conditions, which is around 7 to 872 times lower than the controllers for hill-climbing method and comparable with other reported FOCV circuits. In addition to its low power consumption, performance of the circuit is not compromised where the peak maximum power transfer efficiency is up to 98.28 %. This low power feature is crucial especially in the case of PEHs working at off-resonance because the power which can be harvested is much lower than those in resonance. This allows the proposed circuit to be powered up directly by the PEHs.

Since the circuit is fully implemented using analogue discrete components, the proposed circuit can be easily fabricated as a monolithic IC. It is worthwhile to mention that, although the proposed method and circuit topology are evaluated using a PEH under different strain loadings within a frequency range of interest to achieve a relative maximum power transfer in this paper, the strain loading was actually generated by a controlled force setting in the Instron machine. Therefore, the proposed circuit is suitable for general PEHs under a force excitation to achieve a relative maximum power transfer within a frequency range of interest at their base and also suitable for other energy harvesters that can be modeled as a DC voltage source 19 with a series source resistance such as thermoelectric generator and rectennas to achieve an absolute maximum power transfer. The circuit may also be combined with SSHI technique for increased energy harvesting from PEHs. With the lower power requirement and reduced size of an IC, this circuit can potentially be suitable for a wide range of applications in real-world situations for low power energy harvesting based devices owing to its low power consumption, tolerance to frequency changes, adaptiveness to amplitude changes, and versatility to different types of energy harvesters

To get the analogue control circuit 14 work, a high-pass filter has to be designed to have a specific time constant $T_{HP}$ which corresponds to a desired response based on the time constant r formed by the energy harvester 111 and smoothing capacitor 26 as well as the circuitry in between the energy harvester 111 and smoothing capacitor 26 such as a rectifier if there is any.

As the smoothing capacitor 26 is being charged up, the voltage charging profile of the capacitor which is filtered by the specifically designed high-pass filter exhibits a peak voltage at the maximum power point of the energy harvester 111. Differentiation of the peak voltage corresponds to a zero, which can be used as a signal to indicate that the maximum power point of the energy harvester 111 has been found.

With reference to Figure 2, the DC-DC converter 12 is disabled initially, and can be regarded as open-circuited which allows the energy harvester and smoothing capacitor $C_i$ 26 to effectively form an equivalent RC circuit 16. From the figure 2, $C_{HP}$ 32, R1, and R2 form the high-pass filter, where voltage across R1 and R2 is $V_{HP}$. $V_{HP}$ is taken as the input to the differentiator 42 realized by a nano-current operational amplifier (LPV521MGE). Output from the differentiator 42 $V_{diff}$ is passed through an envelope detector 27 for a smoother signal as $V_{ED}$, which is used to compare with a reference voltage $V_{ref}$ by the comparator Comp 1 (TS881ICT) 44-1. In theory, the differentiation of a peak value is equal to zero for the timing of maximum power transfer. However, in practice, it is difficult for a comparator to compare a zero value with a reference which is zero as well where the output could be unpredictable. Therefore, $V_{ref}$ implemented in the circuit is slightly away from zero and is designed in such a way in the circuit that $V_{ref}$ comes from $V_{RD}$ which is a scaled down voltage from $V_{rect}$ using a voltage divider formed by $R_{DI}$ and $R_{D2}$, and then by passing $V_{RD}$ through a diode D2 (1N754A).

Another comparator Comp 2 (LTC1540) 44-2 is used to enable or disable the DC-DC converter 12. Comp 2 44-2 has an internal bandgap reference voltage which is always higher than the amplitude of $V_{RD}$. The bandgap reference voltage is fed to the inverting input while $V_{RD}$ is fed to the non-inverting input of Comp 2 44-2 so that $V_{comp}$ generated is LOW to disable the DC-DC converter 12 for most of the time before $V_{HP}$ reaches its peak.

When $V_{HP}$ reaches its peak, $V_{CSH}$ which is held by a sample and hold (S/H) circuit formed by Comp 1 44-1, MOSFET $M_{SH}$ (FDC6420C), and $C_{SH}$ is fed to the inverting input of Comp 2 44-2 while $V_{RD}$ at the non-inverting input of Comp 2 44-2 continue to rise. Subsequently, $V_{comp}$ becomes HIGH, which enables the DC-DC converter 12 for power transfer from the PEH 18 to the energy storage capacitor Cs 48 until $V_{RD}$ drops below $V_{CSH}$ and the cycle repeats.

Diode D1 23 and capacitor Cc 21 are used to provide a steady voltage supply to all the aforementioned operational amplifier and comparators.

Regarding the power extraction circuit 112, specific parameters are required for the power extraction circuit 112 to harvest maximum power from the energy harvester 111. For example, in piezoelectric energy harvesting, the power extraction circuit 112 has to short the piezoelectric energy harvester 111 when the amplitude of its output voltage reaches the peak value.

Switching network 132 formed by transistors, resistors and diodes for shorting the piezoelectric energy harvester 111 and peak detectors 134 for detecting the peak value of the voltage from the piezoelectric energy harvester 111 allows the extraction of 1.56 times more power than alternatives.

Piezoelectric transducers are capacitive by nature and produce AC output. The AC output which changes its polarity needs to charge/discharge the capacitor formed by the piezoelectric energy harvester 111 itself first whenever there is a change of polarity before the energy can be delivered to any external circuit connected to the energy harvester 111.

The power extraction 112 circuit shorts the piezoelectric energy harvester 111 to quickly discharge the internal parasitic capacitor of the piezoelectric energy harvester 111 when the voltage amplitude reaches its peak value because the voltage will fall after its peak, which is an indication of the beginning of polarity change.

Referring to Figure 13, two peak detectors 134 and switching networks 132 are required where one peak detector-switching network set is for one of the polarities of the AC voltage.

The DC-DC converter 12 is disabled initially, and can be regarded as open-circuited, which means any subsequent circuitry (to the right of the DC-DC converter 12 and including the DC-DC converter 12) can be ignored or regarded as non-existent. Therefore, any component before the DC-DC converter 12 (to the left of the DC-DC converter 12) can operate without the influence from the electrical loads.

Regarding the energy-aware interface 122, to design a more flexible control of the threshold voltage to disconnect the electrical load 31 from the energy storage device 121 (a supercapacitor Cs 48 in this case), a piece of software is required. A general design methodology of the software has been devised. Specific parameters used in the software are dependent on the intended applications.

The end of operation voltage $V_{end}$ can be determined by (1), which is based on the energy stored in the capacitor Cs 48 and the energy required for wireless sensor system (WSS) 114 to perform the next tasks of sampling another pre-set readings from the sensor and transmitting all the data stored in the RAM of the WSS 114.

$$\frac{1}{2}CV_{end}^{2} - \frac{1}{2}CV_{min}^{2} \geq E_{required}$$

$$= (N+1) \times E_{tx} + E_{samp} + E_{reset} \qquad (1)$$

where $E_{required}$ is the energy required for the WSS 114 to perform the required tasks in the next process, $E_{tx}$, $E_{samp}$, and $E_{reset}$ is the energy required for the WSS 114 to transmit the pre-set number of data from the RAM, sample pre-set number of data from the sensor, and reset the hardware, respectively. N is the number of cycle of the WSS operations, and $V_{min}$ is set to be 2.4 V, which is the minimum operating voltage of the microcontroller 115 (MCU-which is part of the WSS 114) for the sensors operation without data losses. $E_{tx}$, $E_{samp}$, and $E_{reset}$ can be determined through programming the WSS 114 to perform the individual tasks and then measure the energy consumption of the tasks. For example, the WSS 114 is programmed to only take 48 readings from the 3-axis accelerometer. One source meter (Keithley 2612B) can be used to measure the voltage $V_s$ and current $I_s$ supplied to the WSS 114, and then the energy consumption for performing the task can be calculated by (2).

$$E_{task}(t_n) = \sum_{k=1}^{n} V_s(t_k)I_s(t_k)\Delta t \qquad (2)$$

where $E_{task}(t_n)$ is the energy consumption for the WSS 114 to perform the individual tasks with the task time ($t_n$), $V_s(t_k)$ and $I_s(t_k)$ are the measured instantaneous voltage and current of the WSS 114 at time $t_k$, $\Delta t$ is the interval of the sampling time, and $n$ is the sampling number during $t_n$. The subscript 'task' is the individual tasks of 'tx', 'samp', or 'reset' depending on the program used to determine the energy consumption for the respective tasks.

It should be highlighted that, on the second line of (1), it has been considered that energy $E_{required}$ is guaranteed to be sufficient for transmitting all the data previously stored in the RAM when the case of $V_{CS} < V_{end}$ occurs immediately after the case of Vcs > $V_{end}$ if the capacitor size is properly chosen. This is because the energy calculation has included reserved energy (N+1 in the equation) for the transmission of data stored in the RAM which was obtained from the previous operation. Also, $V_{end}$ is higher than $V_{min}$ of the minimum operating voltage of the WSS 114, giving extra margin to the energy availability for performing the tasks. The proper capacitance Cs can be determined by the energy consumed by the required tasks. As the energy consumed by the WSS 114 is known, determined by (2), a proper capacitance can be chosen to ensure successful operation of the WSS 114 for all its required tasks.

The energy-aware interface 122 mainly allows the harvested energy to be stored efficiently in the energy storage device and any electrical load 31 to be powered up directly by the energy storage device when there is sufficient energy. The ability of the energy-aware interface 122 to disconnect the wireless sensor system 114 from the energy storage device 121 allows the energy storage device 121 to accumulate energy without being drained by the electrical load 31 until there is sufficient energy available to the electrical load 31. With the electrical load 31 disconnected, the power management circuit 120 is also free from the influence of the electrical load 31 during energy harvesting

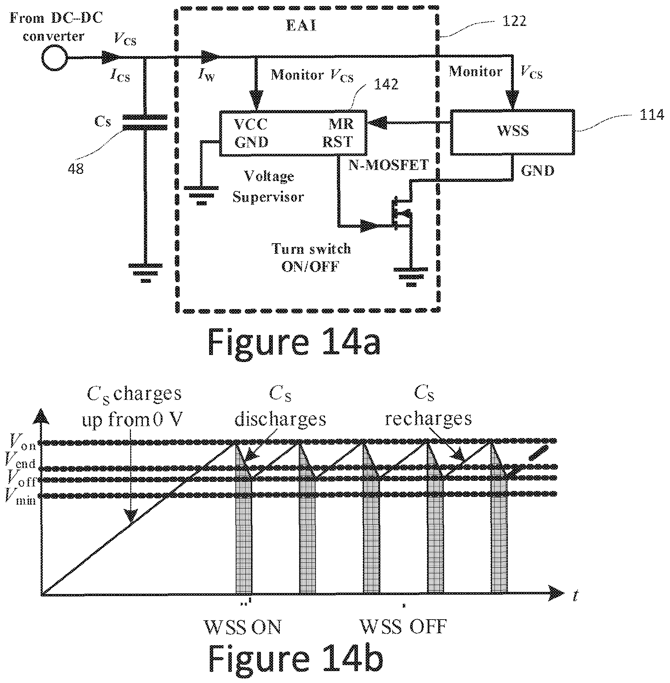

Referring to Figures 14a and 14b, The schematic of the energy-aware interface (EAI) 122 which comprises a voltage supervisor (LTC2935-1, Linear Technology, United States) 142 to monitor the voltage across the capacitor $V_{CS}$ and an N-MOSFET to switch on or off the WSS 114.

Fig. 14b shows the illustration of the voltage $V_{CS}$ changes under the control of EAI 122. The $V_{on}$ is the pre-fixed voltage threshold set by the voltage supervisor to turn on the WSS 114 to perform its measurement tasks. The $V_{end}$ is the calculated voltage by the microcontroller 115 (MCU - which is part of the wireless sensor system 114), indicating that the capacitor (energy storage device 48) will not have enough energy for the WSS 114 to perform the next measurement tasks and the WSS 114 should end its measurement operation. The $V_{off}$ is the voltage that the WSS 114 will be turned off after the MCU 115 transmitted all the sampled and stored data. The $V_{min}$ is the minimum operating voltage of the WSS 114 and below $V_{min}$, the WSS 114 is no longer able to operate properly. Therefore, Vend is higher than $V_{off}$, and $V_{off}$ is higher than $V_{min}$, giving an extra margin to the energy availability for performing the tasks and ensuring that the WSS 114 can successfully sample and transmit all the data before $V_{CS}$ drops below $V_{min}$. The relationships among the voltages are $V_n > V_{end} > V_{off} > V_{min}$

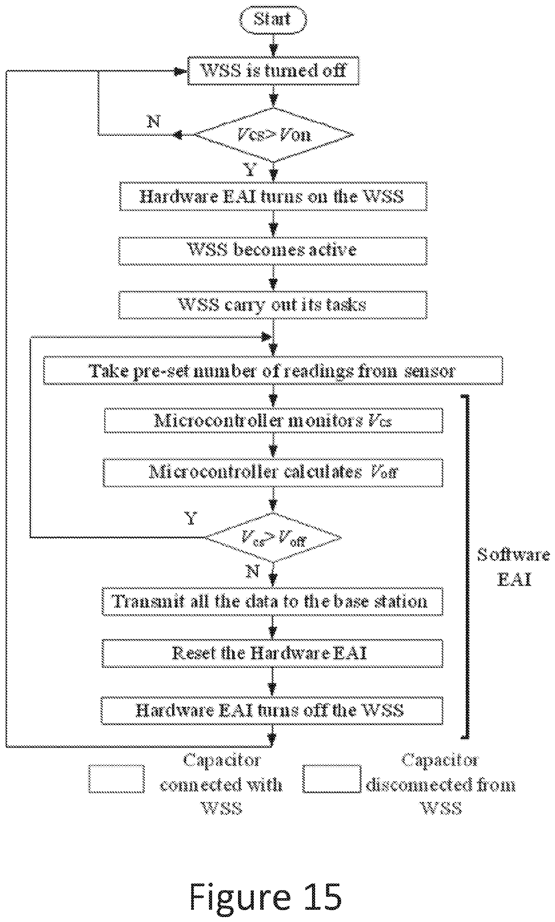

Referring to Figure 15, the operation is explained as follows. The capacitor Cs 48 is initially charged from 0 V and the RST pin of the EAI 122 keeps low when Vcs is lower than the voltage supervisor turn-on threshold $V_{on}$. Once Vcs exceeds the turn-on threshold $V_{on}$, the RST pin is set to be in a high state, which places the N-MOSFET transistor in a low impedance state, connecting the system and WSS ground. The WSS 114 and the capacitor Cs 48 then form a closed circuit, where the current can be drawn by the WSS 114, and consequently the WSS 114 is enabled to become active to carry out the programmed tasks, where $I_w$ is the current input to the WSS 114 and EAI 122, and $I_{CS}$ is the current input to the capacitor $C_S$ 48. During the active phase, the WSS 114 monitors Vcs and uses the energy-aware program (software) to judge whether there is enough energy in the capacitor Cs 48 for the WSS 114 to carry out the next operation, that is, $V_{CS}$ is larger than $V_{end}$. If Vcs is lower than $V_{end}$, the WSS 114 finishes off its task immediately and then sends a low signal to the master reset (MR) pin of the voltage supervisor to turn off the N-MOSFET switch. As a result, the WSS 114 is disconnected from Cs 48 and is turned to the non-active phase so that the capacitor can be charged up again if there is input energy from the harvester. The system will remain in the non-active phase until Vcs reaches $V_{on}$ again, and then the cycles repeat.

Operation of the power management circuit 120 showing how the analogue control circuit (ACC) 14, DC-DC converter 12 and EAI 122 work together is given as follows:

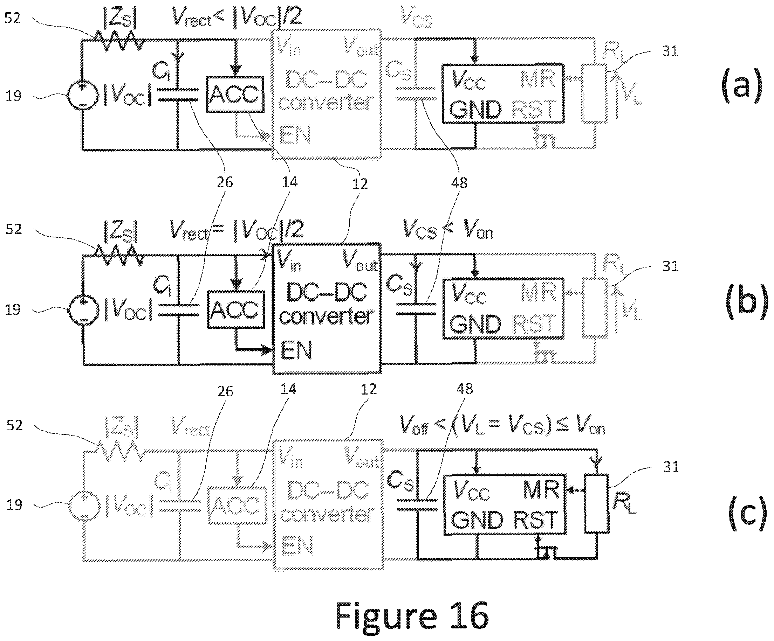

Referring to Figure 16a-c, there are three main operating stages of the power management circuit 120 and it should be noted that they could be happening simultaneously. Power extraction circuit 112 is omitted here because the power extraction circuit 112 does not affect the operation in the power management circuit 120. It only extracts more power from the energy harvester 111 to the power management circuit 120.

As shown in Fig. 16(a), the DC-DC converter 12 is disabled and can be regarded as open-circuited at this stage to decouple the energy harvester (represented by the voltage source 19 and resistor |ZS| 52) from the load 31 to remove the influence of the load 31 which could be highly variable onto the energy harvester 111. Without the loading effect from the external electrical load 31, Ci 26 can be charged up towards VOC/2 of the energy harvester 111. The ACC 14 monitors the changes of Vrect. Once Vrect is equal to VOC/2, the ACC 14 enables the DC-DC converter 12 for power transfer from the PEH 18 to the storage capacitor Cs 48 as shown in Fig. 16(b). Vrect will drop below VOC/2 following the power transfer process. Thus, the power management circuit 120 will go back to operating stage 1 with the DC-DC converter 12 disabled again for VOC/2 finding. The power management circuit 120 operates between stage 1 and stage 2 alternatingly until the voltage at Cs 48 is charged up to $V_{on}$. In both operating stages 1 and 2, the EAI 122 monitors the voltage at Cs 48 while keeping the load 31 disconnected from Cs 48 by switching off the N-MOSFET so that energy can be accumulated in Cs 48.

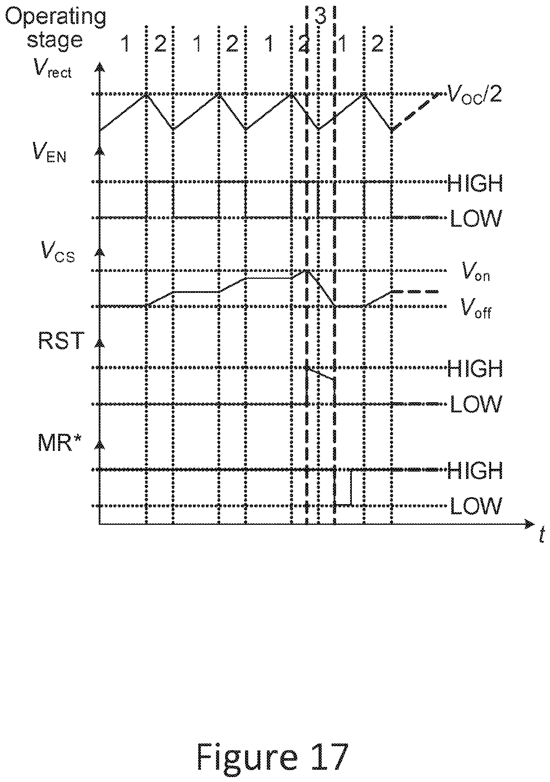

Once the voltage at CS 48 has reached Von, the EAI 122 turns on the N-MOSFET for the load 31 to be connected to the system ground, forming a closed-circuit with CS 48 as shown in Fig. 4(c). Energy from CS 48 can therefore flow towards the load 31. It should be noted that the energy transfer process from the energy harvester 111 is still ongoing during operating stage 3. This means, operating stage 1 or stage 2 is happening simultaneously with operating stage 3, depending on the voltage level of Vrect. When VCS reaches Voff, the voltage supervisor switches off the N-MOSFET to disconnect the load 31 from CS 48. The power management circuit 120 will go back to either stage 1 or stage 2 depending on the voltage level of Vrect, and the whole cycle repeats. An illustration of the main waveforms for one recharge and discharge cycle of CS 48 with respect to Fig. 16 is given in Fig. 17.

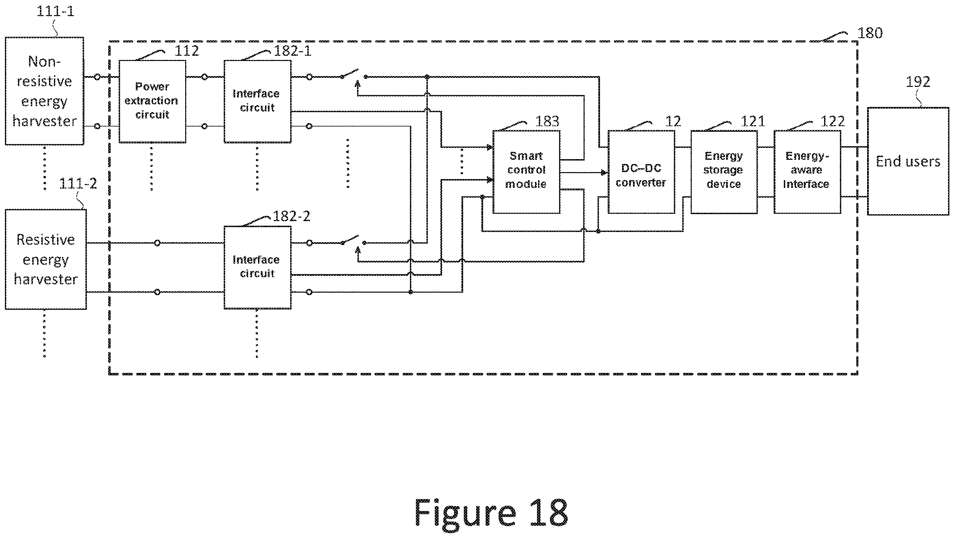

Referring to Figure 18, an efficient and adaptive multi-source power management for energy harvesting powered IoTs is labelled as 2 in FIG 18. The circuit transfers energy different types of energy harvesters 111-1, 111-2 to an energy end user 192 through a shared DC-DC converter 12, energy storage device 121, and energy-aware interface 122. The smart control module 183 determines the sequence and timing of turning on the switch to connect an energy harvester 111-1, 111-2 via its dedicated interface circuit 182-1, 182-2 to the DC-DC converter 12 for energy transfer at the maximum power point (MPP) of the energy harvester 111-1, 111-2. A power extraction circuit 112 can sit in between a non-resistive energy harvester 111-1 such as piezoelectric transducer or electromagnetic transducer and its interface circuit 182-1 to extract more power from the energy harvester. Resistive energy harvesters 111-2 such as thermoelectric generator and photovoltaic cell will connect directly to their interface circuit. The smart control module 183 makes the decision of harvesting energy from which energy harvester 111-1, 111-2 with the input from the interface circuit 182-1, 182-2. All the interface circuits 182-1, 182-2 have an analogue control circuit 14 to determine the MPP of the energy harvester 111 and a power detector 134 to determine the amount of power generated by the energy harvester 111. The time that an energy harvester 111-1, 111-2 reaches its MPP will be the time that the smart control module 183 turns on the switch to connect the energy harvester 111-1, 111-2 to the DC-DC converter 12 for energy transfer. Normally, the MPP of the energy harvesters 111-1, 111-2 will occur at different time because of the different characteristics of the energy harvesters 111-1, 111-2, which allows a single DC-DC converter 12 to be used for transferring energy from the different energy harvesters 111-1, 111-2 at different time slots. In the case where more than one energy harvesters 111-1, 111-2 reach their MPP at the same time, the input from the power detector 134 will be used the smart control module 183 to decide the sequence of transferring energy from the different energy harvesters 111-1, 111-2, with priority given to the energy harvester 111-1, 111-2 which generates the highest amount of power. Depending on the types of the energy harvesters 111-1, 111-2, extra functional blocks as represented by the dotted lines can be included. A rectification circuit 192 is to convert the output of energy harvesters 111-1, 111-2 with alternating current output into direct current output. An ultralow voltage boost-up circuit 192 is to increase very low voltage (< 50 mV) from transducer such as thermoelectric generator under low temperature gradient condition.

The time multiplexing operation is based on the assumption that all the different types of energy harvesters 111-1, 111-2 have different timing of reaching their respective maximum power point due to the different natures or characteristics of the energy harvesters 111-1, 111-2. With the different timing, only one DC-DC converter 12 is required to harvest energy from the energy harvester 111-1, 111-2.

However, there are chances that the maximum power points of more than one energy harvesters 111-1, 111-2 were found at the same time. If the energy harvesters 111-1, 111-2 were connected to the DC-DC converter 12 simultaneously, the energy harvesters 111-1, 111-2 will interfere with each other. A smart control module 183 is introduced to make sure that only one energy harvester 111-1, 111-2 will be connected to the DC-DC converter at a time with the appropriate sequence based on the power level from the energy harvester 111-1, 111-2.

The interface circuit 182-1, 182-2 for finding the maximum power point of the energy harvester111-1, 111-2, smart control module 183 for managing the sequence of connecting the energy harvester 111-1, 111-2 to the DC-DC converter 12 and the switches for isolating or connecting the energy harvester to the DC-DC converter 12 allow time multiplexing to be used.

Multi-source power management is developed based on the single source power management. So, features found in the single source power management such as the analogue control circuit 14 for maximum power point finding, disabling the DC-DC converter 12 until the maximum power point is found, and the operation of the energy-aware interface 122 remain the same here. With more energy harvesters 111-1, 111-2 connected, the DC-DC converter 12 still remains disabled until the maximum power point of any of the energy harvesters 111-1, 111-2 is found. That energy harvester 111-1, 111-2 will then be connected to the DC-DC converter 12 which is enabled by the smart control module 183 for the energy to be transferred to the energy storage device 121. Once the energy transfer process at the maximum power point for that particular energy harvester 111-1, 111-2 is done, the energy harvester 111-1, 111-2 will be disconnected from the DC-DC converter 122, allowing other energy harvesters 111-1, 111-2 to be connected to the DC-DC converter 12. Although there can be many energy harvesters 111-1, 111-2 connected to the system, only the energy from one of the energy harvesters 111-1, 111-2 will be harvested at a time by the shared DC-DC converter 12 at different time slots, and hence is called time multiplexing.

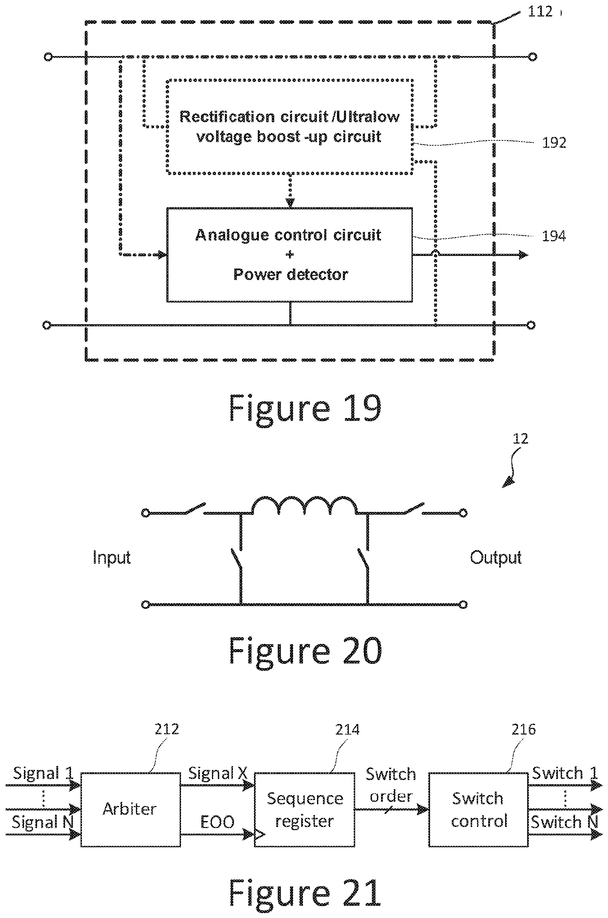

Referring to Figure 20, a conventional buck-boost DC-DC converter 12, which can output a voltage from input voltage of either lower or higher than the output will be used.

The analogue control circuit for maximum power point finding will be in the interface circuit.

A power detector 134 is required as well for deciding the sequence of connecting the energy harvester 111 to the DC-DC converter 12. The output power can be estimated by detecting the final voltage of a capacitor which is connected to the energy harvester 111 for a very short period of time. Energy harvesters 111 with higher power would be able to charge the capacitor up faster to a higher voltage and vice versa

The smart control module 1832 is perhaps the component which consumes the most power in the circuit. To minimise the power consumption, the module will be in a poweroff state for most of the time since it is not required to perform any functionality until the MPP of the energy harvester 111 is found.

Referring to Figure 21, the signals into the arbiter 212 comprise an indication signal of the MPP has been found and the power level of the energy harvester 111. The arbiter 212 then arranges and stores the sequence in a sequence register 214. The sequence register 214 sends the signals for connecting the energy harvester 111 to a switch control 216 to properly turn on the switch. Once the energy transfer process from an energy harvester 111-1, 111-2 ceased, the indication signal will change from HIGH to LOW. This signal is also used to mark the end of operation (EOO) for that particular energy harvester 111-1, 111-2 and move on to the next energy harvester 111-1, 111-2 in queue. FIG. 8 shows the functional blocks of the smart control module.

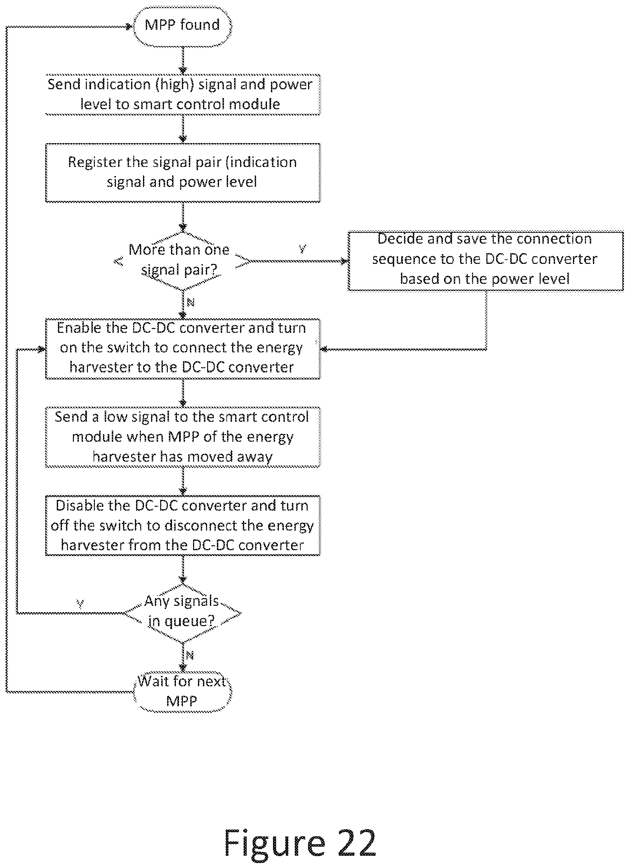

Referring to Figure 22, the blocks in red are operation by the interface circuit 194 (the ACC 14 + power detector 134) and the blocks in black are carry out by the smart control module 183.

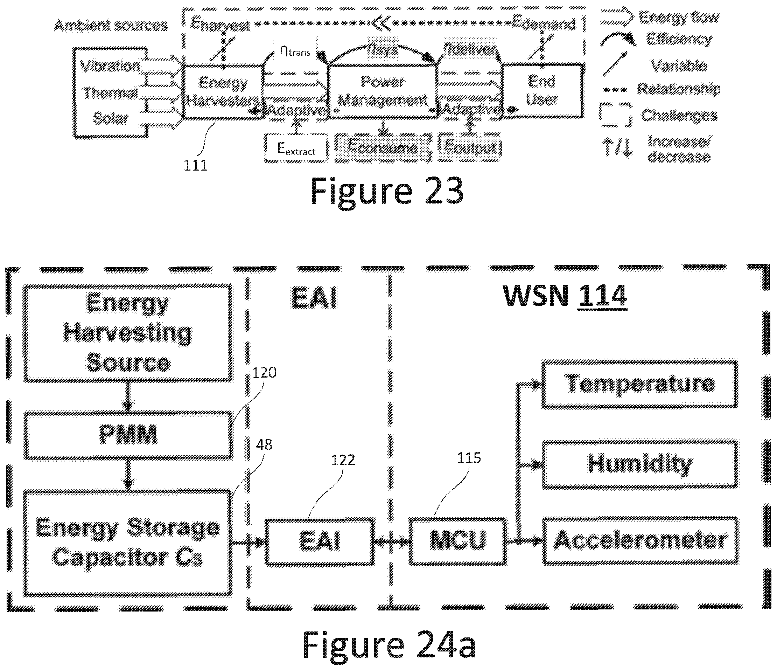

More generally, Figure 23 shows the proposed concept of highly efficient and adaptive PM system for multi-source EH. The project will investigate multi-source PM system for vibrational, thermal and solar energy sources with capability to adapt to: (a) time-varying ambient energy inputs and time-varying connected electrical loads all with maximum power transfer; and (b ) the mismatch between energy harvested and energy consumed by end users, without self-start issues. The system will be able to achieve high efficiencies in multiple aspects: (a) energy transduction from vibration harvesters to the interface for extracting more power with a limited input energy (for non-resistive nature harvesters), called transduction efficiency, (b) adaptive maximum power point transfer to the loads for having more power delivered to the end users with time-varying energy input, called maximum power transfer efficiency, and (c) low quiescent power consumption and losses in the PM circuit, called the circuit efficiency. The ability to design a multi-source PM circuit encompassing all combined high level efficiencies and adaptations into one circuit could transform EH application situations and offer significant advantages for real-world applications. We aim to create a novel efficient and adaptive multi-source PM methodology and architecture for EH powered WS systems and loTs in real-world application setting.

To date, a large number of PM methods have been developed and used for single-source and multi-source EH. However, most of them are developed for a narrow range of source and load conditions. There is no major research effort in the UK or worldwide focusing on the proposed research concept encompassing highly efficient and adaptive PM design methods in multiple aspects for multi-source EH into one circuit for real-world applications. This endeavour requires a system approach and multidisciplinary efforts across boundaries between traditional engineering communities. A whole system approach from energy harvesters 111, electronic interface 182, to WS systems 114, and then involving an effort to integration of them into a system under an intended operational condition is essential to investigate on such PM methods since the high performance of single function does not guarantee the successful operation of the whole, EH powered WS system under ambient energy time-varying and limited. The group at the UoE has used a whole system approach to integrate EH, electronic circuits and WS for EH powered WS systems for real applications, shown in Fig. 2. They has identified a significant technology gap in EH powered WS systems in real-world applications through a number of technology demonstrator development activities. The work has generated highly efficient and adaptive capability to real-world changing environment and delivered maximised power with minimum power consumption through the PM circuit. This compliments expertise at the UoB gained through exploring the effects of a time varying excitation on PM circuit performance, and knowledge that the interactions between load and source power demands were responsible for a significant reduction in real-world performance of EH systems. For this proposal, a critical issue and grand challenge is how to create efficient and effective PM strategies to harvest, store and manage the energy from multiple energy harvesters, increasing the output power from them whilst reducing the quiescent power consumption of the EH electronic circuit with adaptation in real-world applications. For this, the team at the UoE has recently made a breakthrough and prototyped the following efficient and effective PM strategies for piezoelectric vibration EH powered WS systems: (a) adaptive analogue controller for maximum power point tracking with low power consumption of 5 to $7\mu W$, enabling 6 times more energy transferred to energy storage, compared with a circuit without the adaptive tracking, (b) an energy-aware architecture for interfacing WS systems with a reduced sleeping power consumption from the commercial $28.5\mu A$ down to $0.95\mu A$, ensuring success of operation at the mismatch of energy harvested and energy demanded, and (c) a combined non-linear power extraction circuit with adaptive maximum power point tracking controller, enabling 1.56 times more energy generated by harvesters and consuming as low as $5.16\mu W$ of power, compared with a circuit without the extraction circuit. This promise a total of around17 times higher energy delivered to the end user, compared with a circuit without the above two circuits. Complimentary to this, recent work at UoB has resulted in better understanding of the dynamic response of EH sources and lain the foundation for developing parallel optimised, multi-source harvesting. These new developments on PM at both sides, allied to existing competencies, provide a solid foundation for the research team to advance these beyond the state-of-the-art and create a novel highly efficient and adaptive multi-source PM for EH powered WS and IoTs. Although there are commercially available PM circuits from companies such as Texas Instrument and Linear Technology, none offer the advanced levels of performance and flexibility achievable by the approach described in this proposal are available in those products.

**Energy-aware interface 122:** it is widely recognised that there is a gap between energy generated by harvesters and energy demanded by the end users 192, for example, WS systems 114. The gap is unlikely to close in the near future due to limitation in EH technology, together with the surge in demand for more data-intensive applications. A new way to tackle this is to consider EH in conjunction with data processing and communication and to develop methods that allow adaptation of sensor networks with the available energy. This can be based on novel energy-aware approaches. EH powered WS nodes to manage the energy flow from the energy storage capacitor to the WS nodes have been developed to deal with the mismatch between the energy generated by the harvesters and the energy demanded by the WS nodes to ensure success of carrying out required tasks. This approach uses a smart energy-aware activation circuit to control voltage and wake-up procedure of WS nodes and allows the energy harvested to be accumulated in the capacitor to deal with the energy mismatch, enabling the WS node operation with time-varying and limited input energy. When the approach is not used, the WS system maybe held in brown-out conditions, not to mention enabling the WS node operation of sampling and transmitting a large number of data. Additional to the self-starting capability, a low sleep current reduction from $28.3 \mu A$ for a commercial WS node to $0.95 \mu A$, and a large number of data sampled and transmitted is also achievable using the energy-aware approach (Ref). This task will examine and advance the approach to thermal and solar EH by design, prototyping and testing, allowing an immediate progress of the development research without delay.

**Adaptive maximum power transfer to energy storage:** it is also widely recognised that there is always an impedance mismatch between the energy harvesters 111 and the connected end users 192 due to time-varying ambient energy and time-varying connected electric loads in real-world applications. The state-of-the-art method is the adaptive maximum power point transfer to loads (ref). This can be based on the fundamental principle that maximum power point transfer occurs at fractional open-circuit voltage (FOCV) regardless of ambient energy input and EH method in thermal, solar and vibration. The design and implementation of the method on finding the FOCV of the harvester can be based on a low power consumption analogue controller with a specifically designed filter response to peak at 0.5OCV for piezoelectric EH, preliminarily developed at Exeter (Ref). Unlike the traditional implementation method, this method uses a full analogue control circuit without the need for power hungry microcontrollers and sensing circuitries. The circuit has been shown to consume as little as $5.16\mu W$, whilst having a maximum power point tracking capability of 91-98% and is adaptive to time-varying vibration, and time-varying connected electrical loads when connected with an energy-aware interface which isolates the connected load, and self-start without any issue. This approach has potential to be extended to other energy harvesters with almost constant intrinsic impedance such as thermoelectric generator and photovoltaic cell by setting the filter response to peak at around 0.5OCV or 0.75OCV respectively to achieve an absolute maximum power transfer. Hence we will explore the approach for multi-source EH through investigating the controller design method and then via designing, prototyping and testing to achieve adaptive maximum power point transfer to energy storage and confirming the design method (M2).

**Novel effective power extraction circuits 112 with low power consumption:** to effectively extract more power from non-resistive harvesters 111-1, for example, piezoelectric devices, we will examine two approaches. The first examines synchronised switch harvesting on inductor (SSHI) to form an oscillator which can increase the output voltage of the piezoelectric EH. It has been reported that more than 5 times of energy extraction from harvesters has been achieved by introducing the SSHI, compared with the circuit without. However this type of interface can incur higher quiescent power overhead because of the complex switching control. The second approach for extracting more power from harvesters examines switch-only (fully-controlled) rectifiers which, although theoretically not as effective as the switch inductor techniques, are considerably simpler to implement for a reported achievable power gain of 2.56 or 3 times respectively for piezoelectric EH by UoE and UoB. These circuits have been previously developed for mW level harvesting at both Universities giving a good understanding of the requirements for extracting more power, for example the requirement for reverse blocking often necessitates more complex arrangements of semiconductor switching devices. Compared to SSHI, the fully controlled rectifier method is simpler to implement and control which translates into much lower power consumption at sub-mW power levels. These two approaches will be thoroughly investigated and compared in power consumption and power extraction capability from harvesters in both universities and confirmed designs for vibrational EH will be available for WP3 (M3).

**Design of single-source interface modules 182-1, 182-2 for vibration, thermal and solar harvesters:** this will be based on the nature of the electrical output signals from the vibration, thermal, and solar energy harvesters 111. For example, high voltage and low current output for piezoelectric vibration energy harvesters, and low voltage and high current for electromagnetic generators, thermoelectric generators, and photovoltaic cells, different interfaces will be designed. A rectification circuit for transducers will be included for AC transducer signals, and a start-up circuit for thermoelectric generator based on transformer reuse will be included in case it is the only energy source available in real applications while having very low voltage. We will produce single-source interface modules for vibration, thermal and solar harvesters **(M4).**

**Design of single source PM 120 circuits for vibration, thermal and solar harvesters for the proposed programme:** The ultimate goal of the proposal is the development of multi-source PM circuit 120 with efficient and effective capability in real-world applications. Hence this task focuses on the integration of the energy-aware interface 122, the adaptive maximum power transferring circuit 22, and the power extraction circuit 112 for non-resistive nature of vibration harvesters such as piezoelectric into a single circuit (M5). It is intended to use an analogue control method 14, **rather than digital control** as this reduces the quiescent power overhead by eliminating the power hungry microcontroller and reduces the cold start-up issues. Circuit models will be used to identify the power consumption of individual functioning blocks in the circuit in parallel to the testing in WP4 for validation. This work will use the commercially available software of Orcad electrical circuit simulator to analyse and optimise the circuit parameters. Maximum power point tracking controllers based on the FOCV method will be modified based on the nature of harvester and implemented to harvest maximum power from the energy harvesters: this method can be suitable for all types of energy harvesters and the circuit consumes very little power. This work will select and use commercially available circuit components to implement the design for verifications on bread boards. We will carefully scrutinise the components that we select for the designs with low power consumption.

**Design of a multi-source PM circuit 120 for the proposed programme:** The key challenge of multi-source EH is how to efficiently and effectively combine all the harvested energy sources into one common energy storage element 48 (i.e. a supercapcitor) and how to ensure each is operated at the maximum power transfer point. We will design dedicated charging circuits to connect the different EH interfaces 122 for the different energy harvesters and design dedicated maximum power point finding circuits 22 To reduce the power consumption, a DC-DC converter 12 will be shared by all the EH maximum power finding controllers. We will design a smart control module with shared DC/DC converter 12 for multiplex inputs into shared energy storage in this task **(M6).** The DC/DC converter 12 will be operated in discontinuous mode allowing rapid changes in the input conditions to suit the maximum power conditions of any particular EH source and a time-multiplexing operation can be used to connect different energy harvesters at different time slots for power transfer. This method is able to reduce the complexity of the control circuit for energy transferring from different harvesters to the common energy storage and without interfering with each other since the time to reach their respective maximum power point for different energy harvesters is different due to the different outputs of the harvesters. In the event that more than one energy harvester reaches their MPP at the same time, a logic arbiter will be designed to determine the sequence of harvesting energy from the energy harvesters rather than deciding to transfer power from which energy harvester only. Output power from the energy harvester will be estimated using a low power circuit based on the output voltage of the energy harvester to determine the sequence of harvesting the energy. Low resistance switches will be used to connect the different energy harvesters to the shared buck-boost converter to minimise power losses.

In more detail regarding the energy harvesting aspects, intensive research on energy harvesting powered wireless sensor nodes (WSNs) has been driven by the needs of reducing the power consumption by the WSNs and increasing the power generated by energy harvesters. The mismatch between the energy generated by the harvesters and the energy demanded by the WSNs is always a bottleneck as the ambient environmental energy is limited and time varying. This paper introduces a combined energy-aware interface with an energy aware program to deal with the mismatch through managing the energy flow from the energy storage capacitor to the WSNs. These two energy-aware approaches were implemented in a custom developed vibration energy harvesting powered WSN. The experimental results show that, with the 3.2-mW power generated by a piezoelectric energy harvester under an emulated aircraft wing strain loading of 600 $\mu\varepsilon$ at 10 Hz, the combined energy-aware approaches enable the WSN to have a significantly reduced sleep current from 28.3 $\mu$A of a commercial WSN to 0.95 $\mu$A and enable the WSN operations for a long active time of about 1.15 s in every 7.79 s to sample and transmit a large number of data (388 B), rather than a few ten milliseconds and a few bytes, as demanded by vibration measurement. When the approach was not used, the same amount of energy harvested was not able to power the WSN to start, not mentioning to enabling the WSN operation, which highlighted the importance and the value of the energy-aware approaches in enabling energy harvesting powered WSN operation successfully.

In the last decade there has been an increasing interest on the development of energy harvesting powered wireless sensing nodes (WSNs) for applications such as healthcare, industrial process monitoring, environment monitoring, and structural health monitoring. This is because the energy harvesting powered WSNs can operate for years and years without the needs of human intervention for battery replacements. However, to date, there are a few implementations in such WSNs. The main reason is that the energy generated by energy harvesters is not high enough for powering the WSNs as commercially available WSNs are power hungry. This means there is a mismatch between the energy generated by the harvesters and the energy demanded by the WSNs to perform the required tasks. Therefore, there is a need to deal with this mismatch by reducing the power consumption of WSNs and increasing the amount of power that can be harvested and/or extracted to the WSN.

To increase the power harvested and extract more power to the WSN, since the energy that can be scavenged by an energy harvester is highly dependent on the types of energy harvesters and the environmental conditions, a more practical approach is to place a power management module (PMM) in between the energy harvester and the WSN to manage the energy mismatch by harvesting as much power as possible from the energy harvester under various conditions. A large number of PMMs have been proposed to improve the amount of harvested energy. Typical methods were based on nonlinear techniques for extracting as high power as possible typically in piezoelectric and electromagnetic energy harvesting and resistive/impedance matching for maximum power transfer from the energy harvesters to the loads in all types of energy harvesting such as solar, thermoelectric, piezoelectric, and electromagnetic energy harvesting. In the nonlinear techniques, switches are toggled at appropriate timing to momentarily form an LC oscillator circuit using the energy harvesters and external components such as inductor or capacitor. The oscillation occurred increases the voltage waveforms from the energy harvesters, and hence the power is increased. Maximum power transfer occurs when the impedances of both the energy harvesters and connected loads are matched. In the resistive/impedance matching techniques, a DC-DC converter is usually used to emulate the modulus of the impedance of an energy harvester by dynamically changes its duty cycle. It should be noted that a WSN can be seen as a dynamic load as it consumes different amount of current when it is performing different tasks.

Therefore, the amount of energy that can be harvested using these techniques will still be affected by the connected WSNs due to the loading effect brought by the dynamism of WSNs. Direct connection of the WSNs to the PMMs will drastically reduce the amount of power that can be harvested. To reduce the power consumption of the WSNs, one of the common approaches is to choose low sleep power consumption wireless microcontrollers (MCUs). Off-the-shelf MCUs which are the core part of the WSNs have ultra-low sleep power consumption but they are characterized in the conditions that a small sized memory is attached and a few peripheral devices are connected to the MCUs. For example, the current consumptions are 0.7 $\mu$A with 1.8 V supply voltage for MSP430 of Texas Instruments in an ultra-low power standby mode and 2.6 $\mu$A for Jennic with an active sleep timer from NXP in a sleep mode. In practical applications, there are a large sized memory attached and many peripheral devices connected with the MCUs, which include crystal and resistorcapacitor oscillators, sensor interface circuits and transmission circuits. The current consumptions of these devices have not been included in the datasheets of the MCUs. This means the actual power consumptions of the WSNs during the sleep modes are usually much higher than the ones provided in the datasheets. The high sleep power consumption would cause a start-up problem for energy harvesting powered WSNs when there is a limited energy harvested since energy could not be accumulated, leading to voltage in the energy storage capacitor lower than the minimum operation voltage of the MCUs. Therefore, the MCUs are not able to become active and play their functions in controlling their subcircuits such as wakeup timers, digital input/output (DIO) blocks, comparators, and resistor-capacitor oscillators through software programmed in the flash memory of the MCUs. The worst thing is that, although the MCUs are not able to start, the connected subcircuits are still continually consuming energy in the energy storage capacitor, making the WSN never ever be able to start its operation.

In order to solve the start-up problem and the loading effect of a WSN on a PMM, reviewed above, a few attempts have been made to develop an energy-aware interface 122 (EAI) between the PMM and the WSNs to manage the energy flow from the energy storage of capacitor to and activate the WSNs. For example, Minami et al. introduced the use of a CMOS reset IC (ROHM BD4835G) to reset their solar energy harvesting powered WSN when the voltage across the supercapacitor is lower than 3.5 V. Torah et al. introduced a cold start circuit which ensures that the MCU will only begin to draw power from the storage capacitor and start up when a minimum voltage of 2 V is met. Also, Torah et al. introduced the use of a MCU to determine the energy availability by monitoring voltage across a supercapacitor and adjust the measurement duty cycle based on the energy availability to keep the voltage across the supercapacitor steady at around 2.2 V. However, this method has limited the system to a low duty cycle operation and small data packet size for wireless transmission.

Marsic et al. and Ferrari et al. reported the use of an energy-aware interface to turn on and turn off the WSN based on the pre-fixed voltages which are defined as turn-on and turn-off voltage thresholds respectively in their developed piezoelectric energy harvesting powered system. However, there is a drawback of such an EAI that the WSNs would stay active until the pre-fixed turn-off voltage threshold reached regardless of the WSN operation states. For example, if the WSNs finish the tasks early, this could cause wastage energy as the WSN is still on; if the WSN is in the period of operation, this would cause theWSNs to be unable to finish the required tasks as the turn-off voltage threshold is reached. This is not ideal for real applications to use such a pre-fixed voltage threshold hardware switching approach.

In order to utilize the energy stored in the capacitor more effectively, this paper will, on top of the EAI, introduce an energy-aware program by monitoring the voltage in the capacitor to judge if there is enough energy in the capacitor for the WSNs to carry out the next operation and ensure all the measured data is transmitted before the energy becomes too low for operation of the WSNs. The energy-aware program is especially suitable for structural health monitoring of vibration as the WSNs are required to turn on as long as possible for as many sampling data as possible without the limitation of constrained duty-cycle, which will be studied in this paper.

This paper therefore introduces a combined energy-aware interface 122 (EAI) with an energy-aware program to manage the energy flow from the energy storage capacitor to WSNs 114 and deal with the energy mismatch for enabling the operation of WSN 114. These hardware and software energy-aware approaches are implemented in a custom developed vibration energy harvesting powered WSN 114. The energy-aware approaches are experimentally studied to understand the advantage of the introduced energy-aware approaches in overcoming the high sleep power consumption during sleep time of the WSN 114 that causes the start-up problem and in enabling the energy harvesting powered WSN 114 operation for maximum data sampling and transmitting with a limited energy generated by the harvester 111.

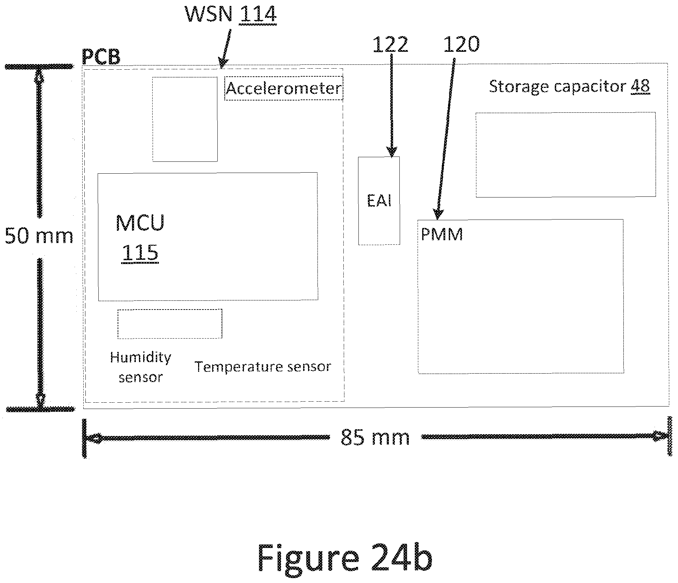

Figure 24a illustrates the block diagram of the custom developed energy harvesting powered WSN 114 with the EAI 122. It is composed of three main blocks: (i) an energy harvesting source with a PMM 120 and an energy storage capacitor CS 48, (ii) an EAI 122 and (iii) an energy-aware WSN 114. An image of the implemented printed circuit board (PCB) with the EAI 122 and the WSN 114 is shown in Figure 24b, which shows A piezoelectric strain energy harvester 111 using a macro-fiber composite (MFC) is used to scavenge ambient vibrational energy to charge up the capacitor through the PMM 120, where the accumulated energy stored in the capacitor CS 48 is used to power the WSN 114. It should be noted that the developed energy-aware WSN 114 is suitable for all types of vibration harvesters connected with different PMMs and therefore the harvester 111 and the PMM 120 will not be discussed in this paper. The EAI 122, which serves as the interface between the PMM 120 and the WSN 114, plays an important role in operating the WSN 114, and therefore will be discussed in detail below.

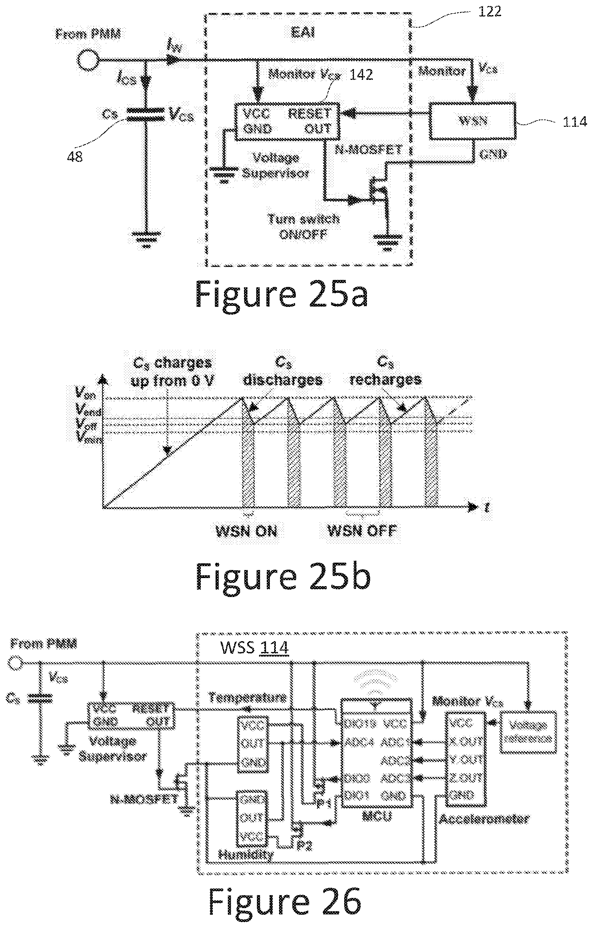

a voltage supervisor 142 (LTC2935-1, Linear Technology, United States) to monitor the voltage across the capacitor Vcs and an N-MOSFET to switch on or off the WSN. Fig. 25 (b) shows the illustration of the voltage VCS changes under the control of EAI 122. The $V_{on}$ is the pre-fixed voltage threshold set by the voltage supervisor 142 to turn on the WSN 114 to perform its measurement tasks. The $V_{end}$ is the calculated voltage by the MCU 115, indicating that the capacitor 48 will not have enough energy for the WSN 114 to perform the next measurement tasks and the WSN 114 should end its measurement operation. The $V_{off}$ is the voltage that the WSN 114 will be turned off after the MCU 115 transmitted all the sampled and stored data. The $V_{min}$ is the minimum operating voltage of the WSN 114 and below $V_{min}$, the WSN 114 is no longer able to operate properly.

Therefore, Vend is higher than Voff, and $V_{off}$ is higher Fig. 26. Schematic of the developed WSN 114 connected with the EAI 122. than Vmin, giving an extra margin to the energy availability for performing the tasks and ensuring that the WSN 114 can successfully sample and transmit all the data before VCS drops below $V_{min}$. The relationships among the voltages are $V_{on} > V_{end} > V_{off} > V_{min}$, shown in Fig. 25b. It should be noted that $V_{end}$ is not the turn-off voltage threshold of the voltage supervisor 142 and also not pre-fixed voltages. $V_{end}$ is determined not only by the energy stored in the capacitor CS 48 but also by the energy required by the WSN 114 for the next operation, which will be studied in Subsection D. The operation is explained as follows. The capacitor CS 48 is initially charged from 0 V and the output pin of the EAI 122 keeps low when VCS is lower than the voltage supervisor turnon threshold $V_{on}$. Once VCS exceeds the turn-on threshold $V_{on}$, the output pin is set to be in a high state, which places the N-MOSFET transistor in a low impedance state, connecting the system and WSN ground. The WSN 114 and the capacitor CS 48 then form a closed circuit, where the current can be drawn by the WSN 114, and consequently the WSN 114 is enabled to become active to carry out the programmed tasks, where /w is the current input to the WSN 114 and EAI 122, and ICS is the current input to the capacitor CS 48. During the active phase, the WSN 114 monitors VCS and uses the energy-aware program to judge whether there is enough energy in the capacitor CS 48 for the WSN 114 to carry out the next operation, that is, VCS is larger than Vend. If VCS is lower than Vend, the WSN 114 finishes off its task immediately and then resets the voltage supervisor 142 to turn off the N-MOSFET switch. As a result, the WSN 114 is disconnected from CS 48 and is turned to the non-active phase so that the capacitor 48 can be charged up again if there is input energy from the harvester 111. The system will remain in the nonactive phase until VCS reaches Von again, and then the cycles repeat.

The schematic of the developed WSN 114 for this study is shown in Fig. 26. The WSN 114 is built using a wireless MCU 115 and three analogue sensors. The MCU 115 used is Jennic JN5148 (NXP Semiconductors, Eindhoven, Netherlands) which has a 2.4 GHz IEEE 802.15.4 compliant transceiver to communicate using ZigBee protocol, 128 kB of readonly memory (ROM) and random access memory (RAM) each. The sensors used are ADXL335 3-axis accelerometer (Analogue Devices, Massachusetts, USA), a MCP9700 temperature sensor (Microchip Technology, Inc., Arizona, USA), and a low voltage humidity sensor (HIH-5030, Honeywell, New Jersey, USA). All of them are chosen based on the low power consumption and small amount of linear signal processing required, since the top consideration in the design of WSN 114 is low energy consumption. The output pin of all sensors can be directly connected to the analogue-to-digital converter (ADC) input of the MCU 115. However, the MCU 115 only has 4 ADC pins, which is not enough for 5 ADC readings from the three sensors. Therefore, the temperature and humidity sensor are designed to share the ADC4 pin, which are switched on and off successively by the P-MOSFETs controlled using DIO pins of the MCU 115 to prevent conflict between the sensors which could lead to data loss or corruption if they were both on all the time. The remaining three ADCs are individually connected to the three outputs (acceleration in x-, y- and z-axis) of the 3-axis accelerometer. In contrast, continuous data reading from the accelerometer is required because the accelerations are highly dynamic and change rapidly. Given that VCS is not constant throughout the active phase for the accelerometer which requires a fixed reference voltage to determine the accelerations from the sensor readings, a voltage reference (ISL21080CIH325, Intersil, California, USA) is used to provide a fixed reference voltage of 2.5 V to the accelerometer during the active time of the WSN 114. Humidity and temperature do not require continuous measurement since these quantities do not change as rapidly as the acceleration does.

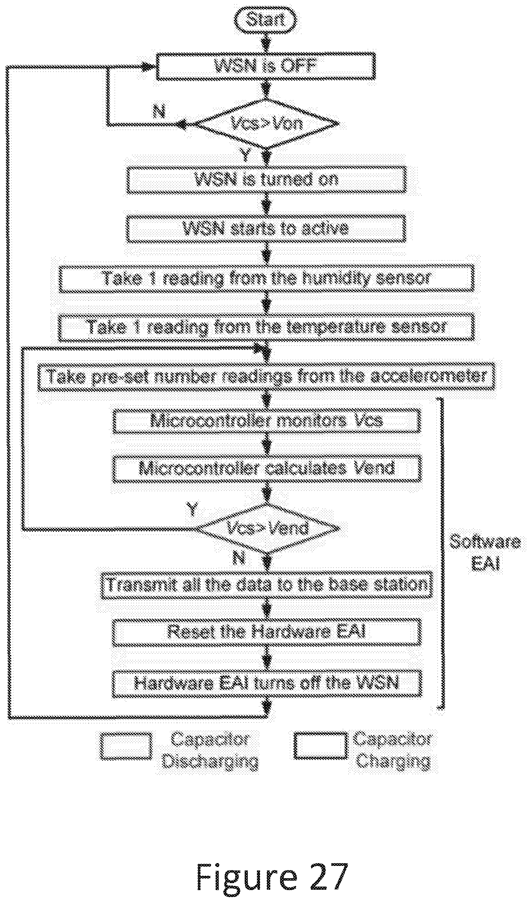

The operation flowchart of the energy-aware programmed WSN 114 is shown in Fig. 27. The operation begins with the WSN 114 in non-active phase until there is enough energy in the capacitor CS 48 to turn on the MCU 115. Once there is sufficient energy in the capacitor CS 48, the voltage supervisor turns on the N-MOSFET, which in turn switches on the MCU 115, humidity sensor and accelerometer. The MCU 115 takes one reading from the humidity sensor and turns it off before the temperature sensor is turned on to avoid conflict between the sensors. One temperature reading is taken using the shared ADC pin before temperature sensor is turned off. After that, the MCU 115 takes a total of three readings (one each from x-, y-, and z-axis) for each sampling from the accelerometer every 10 ms in the studied case, which can be suitable for sampling low vibration frequency of up to 50 Hz. Each reading is 2 bytes of data and is stored in the internal MCU RAM after each measurement. The MCU 115 repeatedly takes reading from the accelerometer until a pre-defined number of readings are made, for example, a total of 48 readings for 16 times of sampling the accelerometer, which correspond to 96 bytes of data to ensure there are enough readings to cover the measured vibration frequencies in the studied case of this paper. Then, the MCU 115 measures the storage capacitor voltage VCS to judge whether VCS is larger than $V_{end}$ in the capacitor CS 48 for the MCU to take another 48 readings from the accelerometer and transmit all the data stored in the RAM. If so, the MCU 115 will take another 48 readings from the accelerometer, store it in the RAM, and measures VCS again. If not, the MCU 115 transmits all the data stored in the RAM and sends a LOW signal to RESET pin of the voltage supervisor 142. The voltage supervisor 142 then turns off the N-MOSFET so that the WSN 114 goes into non-active phase and the cycle repeats, alternating between active phase and non-active phase as long as there is energy from the energy harvester 111. The data size to be transmitted in the first packet is 100 bytes, which consists of the readings from all three sensors and the remaining packets only have 96 bytes from the 48 accelerometer readings. For the implemented WSN program, it should be noted that there is only one transmission at the end of the active time just before the WSN 114 is switched off for energy saving, for example, avoiding repeatedly setting up the transmission channel in the case of multiple transmissions.

The $V_{end}$ can be determined by (1), which is based on the energy stored in the capacitor CS 48 and the energy required for the WSN 114 to perform the next tasks of sampling another 48 readings from the accelerometer and transmitting all the data stored in the RAM.

$$\frac{1}{2}CV_{end}^2 - \frac{1}{2}CV_{min}^2 \geq E_{required}$$
$$= E_{tx-2} + (N+1) \times E_{tx-48}$$
$$+ E_{samp-48} + E_{reset} \qquad (1)$$

where Erequired is the energy required for the WSN 114 to perform the required tasks in the next process, Etx-2 and Etx-48, Esamp-48, and Ereset is the energy required for the WSN 114 to transmit 2 data of the temperature and the humidity measurements and 48 data of the accelerations from the RAM, sample 48 data from the accelerometer, and reset the hardware, respectively. N is the number of cycle of the WSN operations, and Vmin is set to be 2.4 V, which is the minimum operating voltage of the MCU 115 for the sensors operation without data losses. Etx-2, Etx-48, Esamp-48, Ereset can be determined through programming the WSN 114 to perform the individual tasks and then measure the energy consumption of the tasks. For example, the WSN 114 is programmed to only take 48 readings from the 3-axis accelerometer. One source meter (Keithley 2612B) can be used to measure the voltage Vs and current Is supplied to the WSN 114, and then the energy consumption for performing the task can be calculated by (2).

$$E_{task}(t_n) = \sum_{k=1}^{n} V_s(t_k) I_s(t_k) \Delta t \qquad (2)$$

where Etask(tn) is the energy consumption for the WSN 114 to perform the individual tasks with the task time (tn), *Vs(tk)* and *Is(tk)* are the measured instantaneous voltage and current of the WSN 114 at time *tk_t* is the interval of the sampling time, and *n* is the sampling number during tn. The subscript 'task' is the individual tasks of 'tx-2', 'tx-48', 'samp-48', or 'reset' depending on the program used to determine the energy consumption for the respective tasks. Using this method, Etx-2, Etx-48, Esamp-48, and Ereset has been found to be 8.75 μJ, 0.21 mJ, 3.34 mJ, and 0.17 mJ respectively in the studied case. It should be highlighted that, on the second line of (1), it has been considered that energy Erequired is guaranteed to be sufficient for transmitting all the data previously stored in the RAM when the case of $VCS < V_{end}$ occurs immediately after the case of $VCS > V_{end}$ if the capacitor size is properly chosen. This is because the energy calculation has included reserved energy (N+1 in the equation) for the transmission of data stored in the RAM which was obtained from the previous operation. Also, $V_{end}$ is higher than Vmin of the minimum operating voltage of the WSN 114, giving extra margin to the energy availability for performing the tasks. The proper capacitance CS can be determined by the energy consumed by the required tasks. As the energy consumed by the WSN 114 is known, determined by (2), a proper capacitance can be chosen to ensure successful operation of the WSN 114 for all its required tasks. For example, at least 2 mF of capacitance is required to implement the first cycle of the measurement and transmission with 3.2 mW power generated by the PEH 18 studied in the paper. If the capacitance were smaller than 2mF and as the WSN 114 consumes almost fixed amount of energy for the required certain tasks in one cycle, VCS would drop, possibly below Vmin, which would make the WSN 114 fail to complete its measurements, execute the energy-aware program and transmit the data. A proper capacitance, therefore, needs to be used for a number of cycle measurements so as to ensure there is enough energy for the WSN operation.

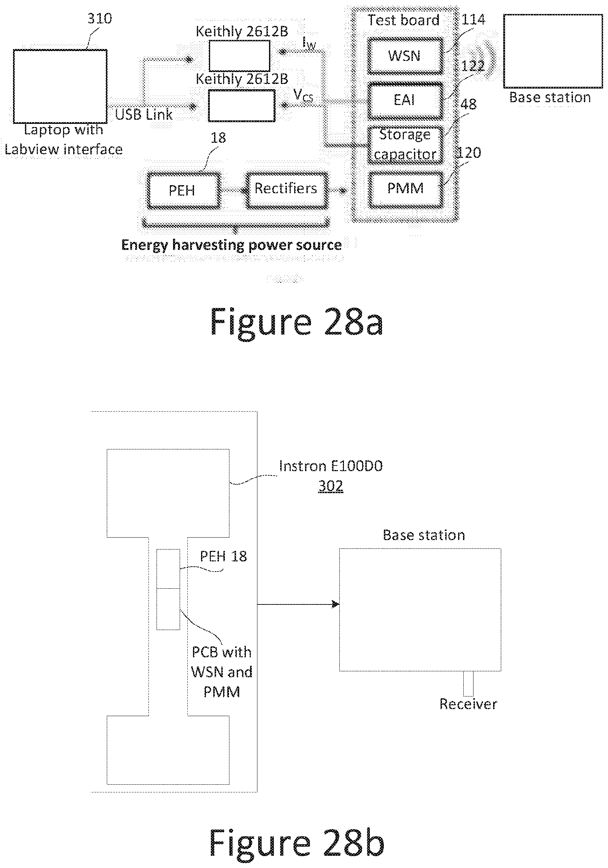

Experimental tests based on the custom developed energy harvesting powered WSN 114, shown in Fig. 24, were performed to understand the advantages of the energy-aware approaches. The experimental setup used is shown in Fig. 28, where two LabVIEW interfaces 310 are used, one for real-time recording Fig. 28. (a) Block diagram of the experimental setup used for the characterization. (b) Images of the experimental setup for the PEH powered WSN 114 to transmit data wirelessly to a base station. and displaying the transmitted sensor data to the base station placed at a distance of 4 m to verify the operation of the energy-aware approaches and one for real-time recording and displaying the measured voltage VCS and current /w to understand the advantages of the energy-aware approaches. Two Sourcemeters (Keithley 2612B) were used to measure the voltage VCS and current /w. A piezoelectric strain energy harvester 111 using a macro-fiber composite (MFC) bonded on one side of a carbon fiber composite plate is used to scavenge ambient vibrational energy. An Instron E10000 ElectroPuls dynamic testing machine 302 is used to apply strain vibration load to the energy harvester. The PCB 18 with the WSN 114 and the PMM 120 is mounted on another side of carbon fiber composite plate. Although different sizes of capacitor has been tested, only 10 mF supercapacitor is used to show the results of the energy-aware approaches for the energy storage to power the energy-aware WSN 114 in Section 4 of this paper as they give very similar results.

To understand the advantages of the energy-aware approaches for the energy harvesting powered WSN 114, characterizations and comparisons of 3 different configurations were performed. Configurations 1 and 2 are the developed energy harvesting powered WSN 114 with the EAI 122 shown in Fig. 24 and without the EAI 122 by removing the EAI block in Fig. 24 respectively, to study the EAI advantage in enabling the WSN operation without start-up problem when there is a limited energy harvested. Configuration 3 is the developed WSN 114 powered by a DC power source without the EAI 122 and is used to study the advantage introduced by the EAI 122 for low sleep current consumption. In Configuration 3, a DC power source (Keithley 2220-30-1) is used to replace the MFC, EAI 122, and PMM 120 to power the CS 48 and WSN 114 and the MCU 115 is programmed to run in a normal sleep mode, by using one wakeup timer clocked by its internal 32 kHz resistor-capacitor oscillator to generate a wake-up event. Following a wakeup event, the timer continues to run and the sleeping time is set by the wake-up timer. Moreover, to make fair comparisons between Configurations 1 and 3, the active and sleeping time of Configuration 3 is set to be the same as Configuration 1. For the similar reason to the chosen capacitor size, for the testing of Configuration 1 and 2, in spite of different strain loadings which emulate aircraft wing strain loading have been applied onto the piezoelectric strain energy harvester through Instron E10000 testing machine 302, only the peak-to-peak strain loading of 600 με at 10 Hz with the 3.2 mW power generated by a piezoelectric energy harvester (PEH) was used to show the results in Section 4 of this paper. For Configuration 3 testing, the voltage of the DC power source is set to be 3.16 V, which is taken from the turn-on voltage for the energy-aware WSN 114 in Configuration 1 to operate, and the input current is set to be 8 mA, which is the minimum current found by manually tuning that enables the operation of Configuration 3. The average sleep current of the WSN 114 presented in Section 4 is calculated based on:

$$I_{ave} = \frac{\sum_{k=1}^{n} I_w(t_k) \Delta t}{T_{sleep}} \qquad (3)$$

where $I_{ave}$ is the average sleep current of the WSN 114 during the sleeping time $T_{sleep}$, $I_w(t_k)$ is the instantaneous sleep current of the WSN 114 at $t_k$, $\Delta t$ is the interval of the sampling time and $n$ is the total sampling number during $T_{sleep}$.

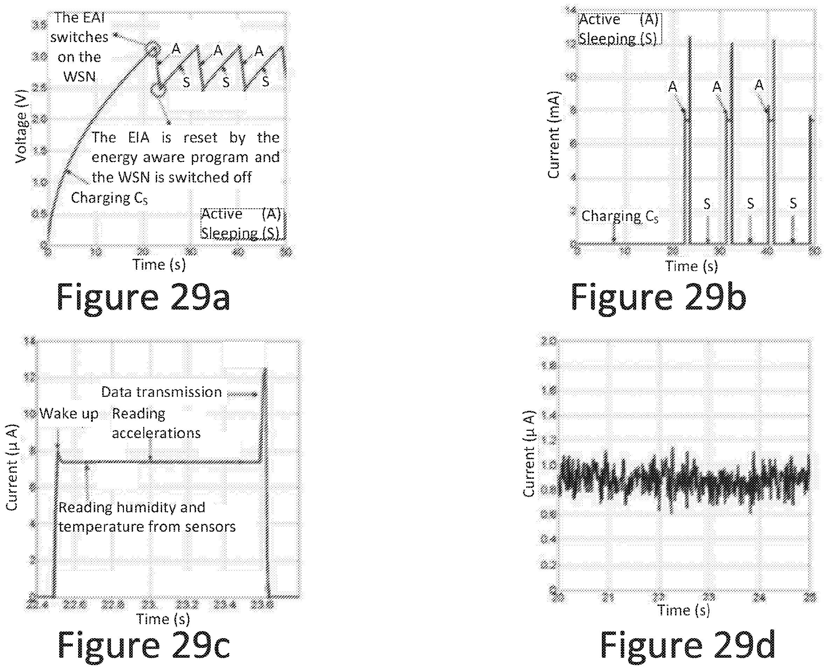

The measured voltage of VCS and current of $I_w$ from Configuration 1 are shown in the Fig. 29. It shows that, from the beginning to 22.56 s, the capacitor was charged by the PEH 18 and its voltage VCS increased steadily from zero to 3.16 V. During this period, the voltage VCS is below the pre-set threshold Von of 3.16 V and so the WSN 114 is off. As soon as VCS reaches 3.16 V, the EAI 122 turns on the N-MOSFET switch, enabling the capacitor to release its energy to the WSN 114. It also shows that, after initial charging of the capacitor for about 22.56 s, the PEH 18 was able to power the WSN 114 for a period of 1.15 s (active time) every 7.79 s (sleeping time) with a limited energy harvested of 3.2 mW by the PEH 18 subject to a peak-to-peak strain loading of 600 $\mu\varepsilon$ at 10 Hz vibration. Consequently, a drop in VCS and a surge in $I_w$ is observed in Fig. 29 (a) and (b) respectively as the WSN 114 is switched into its active phase for about 1.15 s, including 0.17 s (wake up), 0.06 s (1 reading from the temperature and humidity sensors respectively), 0.64 s (the total sampling time of the accelerometer for 4 cycles), 0.12 s (the total judgement time for 4 cycles), 0.14 s (transmission for 388 bytes of measured data) and 0.02 s (resetting WSN), shown in Fig. 29 (c). During the active phase, the energy-aware program calculates the $V_{end}$ and resets the EAI 122 once VCS drops below the $V_{end}$ of about 2.58 V, calculated from (1) and based on the Vmin is set to be 2.4 V in the studied case. Therefore, the WSN 114 was switched off at around 2.47 V of $V_{off}$, as shown in Fig. 29(a), which is slightly higher than 2.4 V. This shows that the $V_{end}$ and $V_{off}$ are not the Vmin. As the given specific meaning of $V_{end}$, the implemented WSN 114 will be able to have enough energy to complete all the measurement tasks and transmit all the data in the end of active time. During the sleeping time, the WSN 114 is turned off by the EAI 122, consuming an average current of 0.95 $\mu$A, calculated from the result shown in Fig. 29 (d) and based on (4). The main reason for the WSN 114 to have such a low sleep current is that the EAI 122 is able to switch off the WSN 114 including the MCU 115 and other subcircuits during the sleeping time and so the power consumption of the WSN 114 is almost zero. It can be analyzed that this average sleep current is mainly consumed by the voltage supervisor and N-MOSFET in the EAI 122.

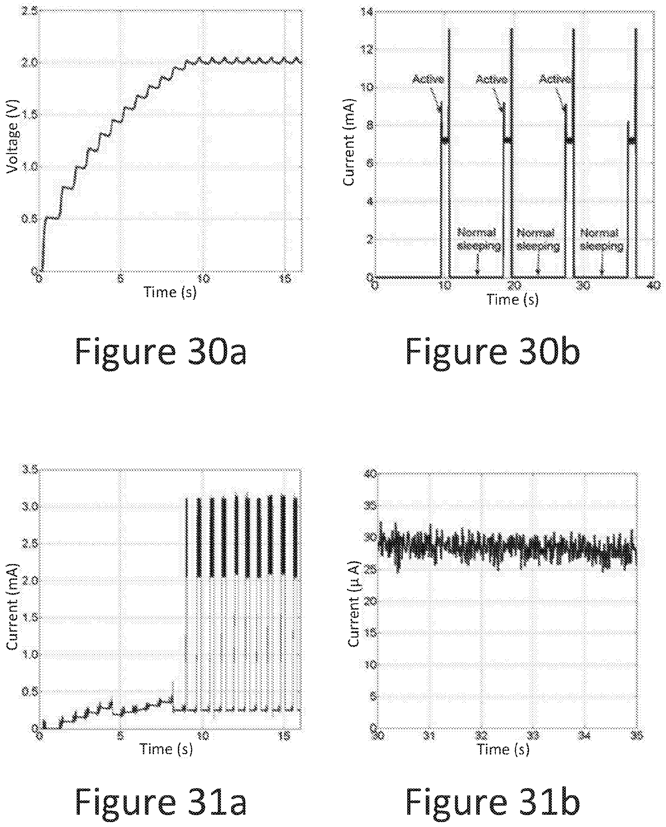

The measured voltage of VCS and current of $I_w$ from Configuration 2 are shown in Fig. 30. It can be observed that VCS was able to increase to 2.0 V and then fluctuated around it. When VCS reaches the minimum turn-on voltage of the MCU 115 (2.0 V), this voltage level can support some peripherals of the MCU 115 such as the ADCs, DACs, comparators and the internal temperature sensor to start working, but it is lower than the minimum operating voltage of the MCU 115 (2.4 V) to support all the peripherals of the MCU 115. However, those aforementioned parts are always powered on until there is a minimum operating voltage available to the core processor of the MCU 115 for it to operate properly and control all the peripherals with proper initialization. Therefore, with the MCU 115 continuously draws energy when the voltage supply is below the minimum operating voltage while there is a limited energy harvested by the PEH 18 (3.2mW), the harvested energy cannot be accumulated in the energy storage. It can also be observed that although the energy harvested by the PEH 18 can support the WSN 114 with up to 3 mA of current during the active time, the supplied current soon drops to around 0.313 mA, calculated from Fig. 30 (b). As the supplied current is much lower than the average current, required by the WSN 114 to start the operation, of around 8 mA, shown in Fig. 29(c), Configuration 2 without EAI 122 is not able to start its operation. The similar reason as above is that the energy stored in the capacitor is immediately consumed by the WSN 114 when the VCS reaches the minimum turn-on voltage of the WSN 114. This means that the energy harvested could not be accumulated in the capacitor until it is enough for the operation of the WSN 114.

The measured voltage of VCS and current of $I_w$ from Configuration 3 are shown in Fig. 31. From Fig. 31(a), the active phase current consumption and pattern is similar to Configuration 1, as shown in Fig. 29(b), as the MCU 115 was programmed to do similar tasks. However, from Fig. 31(b), it can be observed that the average sleep current of the system for Configuration 3 is around 28.3 $\mu$A. It can be analyzed that the current is mainly consumed by the internal wake-up timer,

CPU processing, and 32 kHz crystal oscillator of MCU, which are used to control the MCU 115 from sleep to wake up and also the associated sensor circuits.

The performances and the non-active phase currents of the three configurations are summarized in Table 1.

Comparing configuration 1 and 2, it can be seen that the EAI 122 plays an important role in dealing with the mismatch between the energy generated by the harvesters 111 and the energy demanded by the WSNs 114 to perform required tasks and in enabling the WSN 114 to be powered by energy harvesting technology when there is a limited energy harvested. This is because the EAI 122 enables the energy generated during the non-active phase to be accumulated in the capacitor without being immediately consumed by the WSN 114. Comparing configurations 1 with 3, it can be seen that the EAI 122 can reduce the power consumption of the WSN 114 during the sleeping time from 28.3 $\mu$A of a normal sleep mode to 0.95 $\mu$A since with the EAI 122, the internal wake-up timer and other associated circuits which consume more energy than the EAI 122 are switched off.

*Table 1*

TABLE 1

COMPARISONS OF THE PERFORMANCE AND AVERAGE NON-ACTIVE CURRENTS OF THE WSN WITH THE THREE CONFIGURATIONS

| No | Configuration | Addition feature | Performance | Non-active phase current ($\mu$A) |
|---|---|---|---|---|
| 1 | PEH powered WSN with EAI | Energy-aware program | WSN able to work | 0.95 |
| 2 | PEH powered WSN without EAI | MCU running in a normal sleep mode | $V_{cs}$ increases to about 2 V but WSN is not able to start | 316 |
| 3 | DC power Source powered WSN without the EAI | MCU running in a normal sleep mode | WSN is able to start and operate | 28.3 |

This paper has reported a combined EAI 122 with energy-aware program to manage the energy flow from the energy storage capacitor 48 to the WSNs 114 to deal with the mismatch between the energy generated by the harvesters 111 and the energy demanded by the WSNs 114 to carry out required tasks. These combined energy-aware approaches were implemented and experimentally studied in a custom developed piezoelectric vibration energy harvesting powered WSN 114. The experimental results show that, with a limited energy harvested, the combined energy-aware approaches enable (1) the harvested energy to be accumulated in the capacitor to deal with the mismatch for enabling the WSN operation, (2) solve the start-up issue, and (3) allow the WSN 114 to have a low sleep current from 28.3 $\mu$A of a commercial WSN to 0.95 $\mu$A. It is also shown that the WSN 114 without the combined energy-aware approaches is not able to start and therefore cannot operate when there is a limited energy harvested, which demonstrates the importance of the energy-aware approaches developed in this paper.

**Appendix 2:**

In more detail regarding MPPT, maximum power point tracking (MPPT) scheme by tracking the open-circuit voltage from a piezoelectric energy harvester using a differentiator is presented in this paper. The MPPT controller 22 is implemented by using a low-power analogue differentiator 42 and comparators 44 without the need of a sensing circuitry and a power hungry controller. This proposed MPPT circuit is used to control a buck converter 12 which serves as a power management module in conjunction with a full-wave bridge diode rectifier 24. Performance of this MPPT control scheme is verified by using the prototyped circuit to track the maximum power point of a macro-fiber composite (MFC) as the piezoelectric energy harvester 111. The MFC was bonded on a composite material and the whole specimen was subjected to various strain levels at frequency from 10 to 100 Hz. Experimental results showed that the implemented full analogue MPPT controller 22 has a tracking efficiency between 81% and 98.66% independent of the load, and consumes an average power of 3.187 $\mu$W at 3 V during operation.

Energy harvesting technology which converts energy from ambient environment into electrical energy is a promising solution to provide supply energy for fully autonomous systems such as wireless sensor nodes (WSNs) 114 because power density harvested from the surroundings such as vibration, solar and temperature can be more than 100$\mu$W/cm3. In parallel, with the advancement of low-power electronic devices, which power consumption is only a few milliwatts, energy harvesting powered WSNs are therefore viable. Vibration-based energy harvesting is of particular attractive because vibration can occur almost everywhere either naturally from the environment or induced by means of other sources. Piezoelectric energy harvesters (PEHs) 18 are most commonly used transducers to scavenge vibration energy because of their simple structures, rigidity, self-contained power generation capabilities and attractive high energy density. However, power harvested by PEH is intermittent, in the form of AC and variable in magnitude of current and voltage. Therefore, energy storage and rectification circuity are needed for most applications. Furthermore, power harvested by PEH is very sensitive to connected electrical loads. If the electrical load mismatched the impedance of PEHs, the power delivered to the load would be a tiny fraction of power that the PEH is capable of harvesting. Therefore, an effective power management circuit is needed for PEHs to deliver the energy harvested to the electrical load.

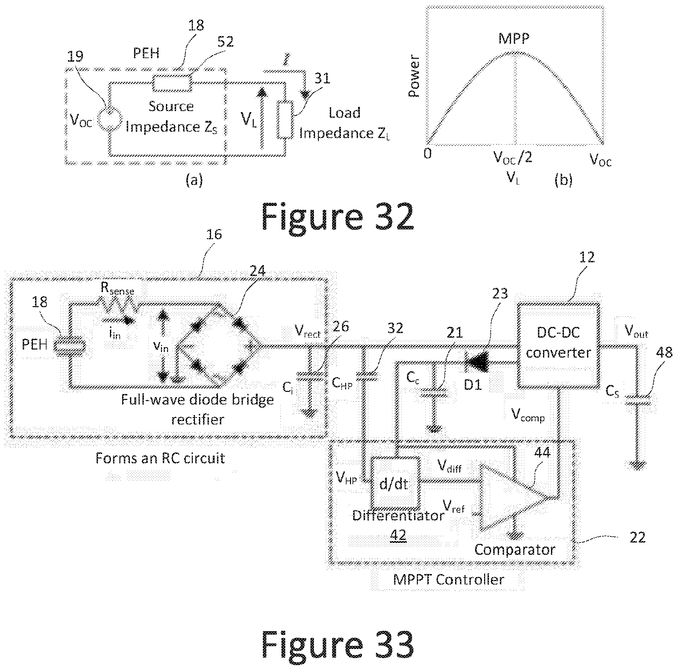

Traditional power management circuits for PEHs use a rectifier to convert the AC voltage to the DC voltage and store it in a capacitor. This simplest form of electronics interface is not effective for most applications because it is not adaptive to variations from either the ambient vibration subjected by PEHs or the connected electrical load. From literature, it is known that PEHs exhibit linear electrical characteristic in which the maximum power transfer occurs at half the rectified open-circuit voltage VOC of the PEH as shown in figure 32. With this simple electrical relationship of PEHs, an MPPT scheme by tracking the half the rectified open-circuit voltage VOC of PEHs, through using an analogue differentiator and comparators proposed in this paper, could be used instead of the traditional MPPT methods using microcontroller. This leads to a low power overhead of this circuit, allowing energy to be drawn directly from a PEH for operation, and eliminating the need of sensing circuitry external power supply or start-up circuit. Without all these additional circuits and power hungry controller, power consumption of the MPPT controller can be greatly reduced. A prototype was implemented and tested over a wide range of vibrational frequencies and strain levels across the PEH. Experimental results have proven the feasibility of the proposed method.

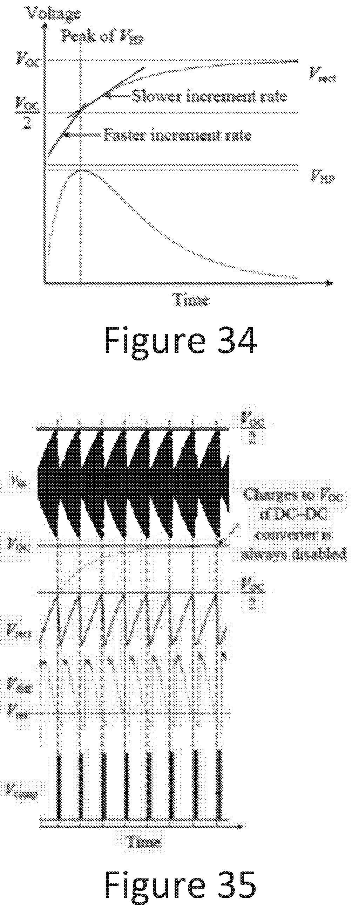

The proposed MPPT controller is shown in figure 33 and the operation is explained using figures 33 to 35. The MPPT circuit 22 is used in conjunction with a rectifier 24 and a DC-DC converter 12 to manage the energy harvested from a PEH 18 at its maximum power point (MPP). The voltage after the rectifier $V$rect is monitored using a low-power operational amplifier-based differentiator 42. The theoretical background of this proposed method is based on the voltage charging profile of capacitor in an $RC$ circuit 16. The DC- DC converter 12 can be seen as open-circuited when it is disabled because no current can be drawn by it. In figure 33, before the MPP is reached, the circuit is effectively an $RC$ circuit 16 formed by the PEH 18, rectifier 24 and smoothing capacitor 26 because there is no current path through the DC-DC converter 12 which has been disabled. The smoothing capacitor $Ci$ 26 will eventually be charged up to VOC of the PEH 18 if the DC-DC converter 12 is always disabled. This means VOC of the PEH 18 can be determined using the proposed circuit when the DC-DC converter 12 is always disabled, that is, a simple $RC$ circuit 16. In the $RC$ circuit 16, the capacitor 26 can be charged up very fast in an almost linear fashion initially but the increment rate of the voltage across the capacitor will gradually become slow as $V$rect is increasing towards VOC. A high-pass filter 30 is used to pass through the fast changing signal and block the slow changing signal. The input voltage VHP into the differentiator 42 is the resultant voltage of feeding $V$rect through a high-pass filter 30 that attenuates the slow changing $V$rect after $V$rect is equal to VOC/2 as shown in figure 34. VHP gradually increases and peaks at VOC/2. It should be highlighted that the input of the differentiator 42 and CHP 32 forms a high-pass filter 30. After the peak, VHP will decrease since the slow changing $V$rect has been attenuated. Differentiation of VHP is equal to zero at the maxima. Therefore, VOC/2 can be determined by differentiating VHP. VOC/2 is reached when the derivative of VHP is equal to zero. When $V$rect reaches VOC/2 of the PEH 18, output of the differentiator Vdiff will drop below Vref which subsequently triggers the comparator 44 to send a signal pulse Vcomp to enable the DC-DC converter 12. Energy will be transferred from the PEH 18 at its MPP to an energy storage device 48. $V$rect will decrease once the energy transfer begins. After $V$diff has dropped below $V$ref, the DC-DC converter 12 will be disabled and the energy transfer process stops. Ci 26 will be charged up again by the PEH 18 until $V$rect reaches VOC/2 of the PEH 18 and the energy transfer process begins again.

A macro-fiber composite (MFC) bonded on a composite material using adhesive glue is used as the PEH 18 in this experiment. An Instron E10000 ElectroPuls dynamic and fatigue test machine 302 was used as the vibration source. Different vibrational frequencies up to 100 Hz and three sets of mechanical loadings with peak-to-peak strain levels of 349.99 $\mu\varepsilon$, 696.70 $\mu\varepsilon$, and 927.24 $\mu\varepsilon$, applied by Instron machine on the MFC PEH 18 were performed. The MPPT efficiency $\eta$MPPT of the MPPT circuit 22 can be defined as the ratio of the harvested power $P$in flowing into the power management circuit 120 at the FB rectifier 24 to the power $P$max dissipated by a perfectly matched load 31 directly connected to the PEH 18:

$$\eta_{MPPT} = \frac{P_{in}}{P_{max}} \qquad (1)$$

Measurements were made across the input of the FB rectifier 24 to get voltage vin and across a 20 $\Omega$ resistor $Rsense$ for the current iin generated from the PEH 18 as shown in figure 33. The root mean square (RMS) value of input voltage and current waveform is calculated from the measured data using and the product of the root mean square of vin and iin gives the average harvested power $P$in into the power management circuit 120. Measurements of $V$diff, $V$rect, $V$ref, and $V$comp were also made using an oscilloscope to verify the operation of the circuit. The power consumption of the MPPT, $P$MPPT, is an important characteristic for the proposed scheme in this paper. To determine the power consumption $P$MPPT of the core of the controller formed by the differentiator 42 and comparators 44, the current and voltage were measured between D1 23 and CC 21.

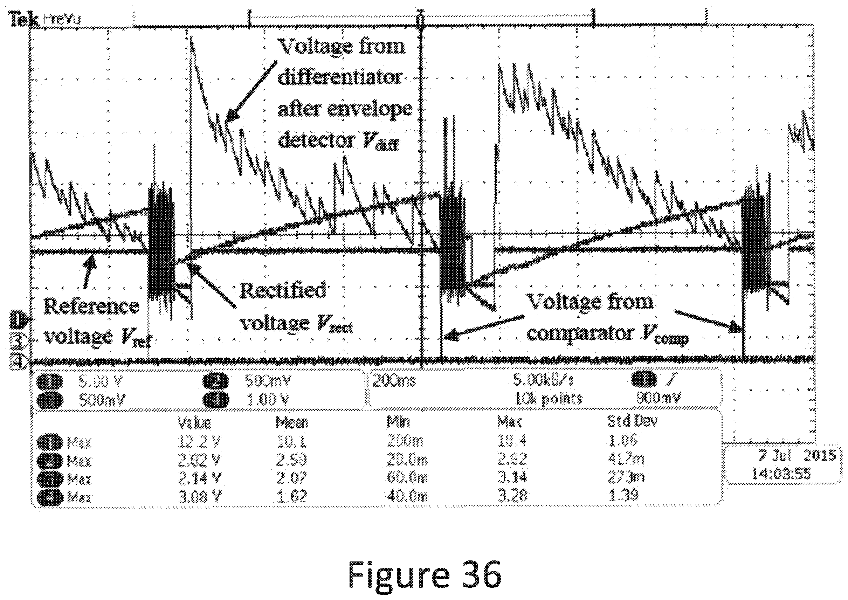

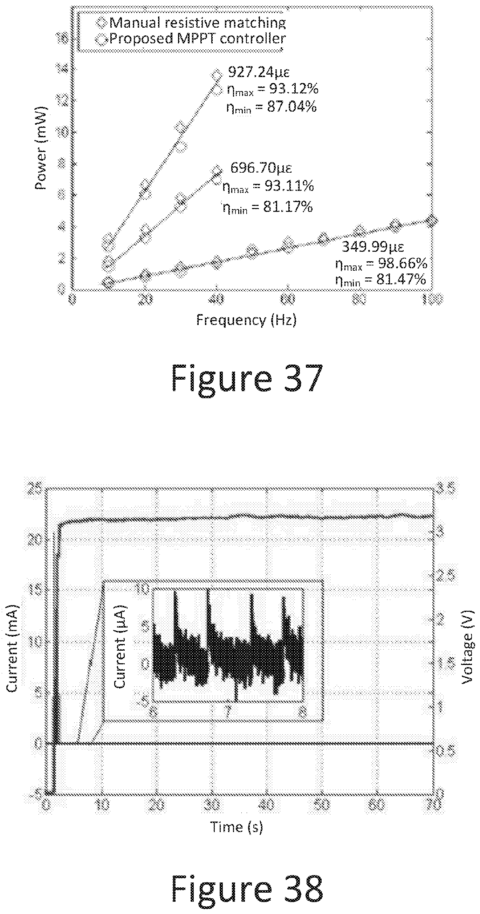

Figure 36 shows the measured voltages of $V$diff, $V$rect, $V$ref, and $V$comp. The measured result agrees with the simulation result. $V$diff gradually becomes smaller and falls below Vref. This caused $V$comp to become HIGH, enabling the buck converter 12 for energy transfer. $V$rect decreases sharply when the energy transfer occurs and gradually increases after the process ends. The energy transfer process and switching of the electronics switches caused large spikes at $V$ref. Powers, $P$in and $P$max, obtained from the tests are shown in figure 37. It can be seen that the power harvested from the PEH 18 using the proposed circuit closely matches the power obtained using manual resistive matching in the tested conditions. This prototyped MPPT controller shows efficiency of around 81 % to 98.66 %, which is calculated based on equation (1). This peak efficiency is better than the MCU-based MPPT controller. The power consumption $P$MPPT of the MPPT controller is shown in figure 38. Initially, there is a large inrush current into CC 21 because the capacitor is empty. The current eventually became very small when CC 21 has been fully charged up to around 3.3 V. When CC 21 is fully charged up and the controller begins to operate, the current consumption is about the same as shown in the inset. By looking into the inset of large scaled current consumption, it can be observed that the peak current during operation is about 10 μA and the average current consumption of the controller is 1.011 μA during operation. The supply voltage to the controller is relatively stable without significant drop during operation. This indicates that the current consumption of the circuit is indeed very low. Therefore, the average power consumption of this control circuit is only 3.178 μW, which is 100 times less than MPPT controller using microcontroller and 16 times less than MPPT controller using combination of analogue circuits and FPGA respectively.

A microwatt power consumption MPPT circuit was presented and demonstrated for harvesting energy from an MFC piezoelectric transducer at its maximum power point under various vibrational frequencies and excitation forces. By exploiting the RC response of a charging capacitor and linear electrical characteristics of the piezoelectric element, an MPPT scheme based on open-circuit voltage has been successfully implemented to find the MPP of the PEH 18 using differentiator. This innovation has greatly simplifies the MPPT controller and reduces the power consumption of the circuit. Without MCU 115 or FPGA which are usually off-the-shelf products, the proposed circuit can be easily fabricated as a monolithic IC. With the low power requirement and reduced size in the form of IC, this circuit can find applications in other areas such as MEMS energy harvesting.

**Appendix 3:**

Devices that provide autonomous wireless sensing and are powered by converting energy from their environment into useable electrical energy has for some time been of interest for the purpose of health monitoring aircraft structures. In this report we propose a micro energy harvesting device that converts swirling air flow around objects and in partially enclosed cavities, e.g. FOPP cavities 412, into electrical energy by incorporating a modified Savonius turbine generator positioned within the spiralling vortexes generated around flat plated structures that may be present on civil aircraft fairings when the fairing is placed on a mechanically moveable structure, such as under-carriage or control surface actuator, i.e. flaps and spoilers. This method of energy harvesting shows the performance and robustness of such a device and also investigates the effects of environmental icing conditions.

Energy harvesting has for some time been of interest to researchers and application engineers within miniature, mobile and wireless applications where on-board power sources are omitted and replaced by energy harvesting transducers to convert surrounding environment energy into electrical energy to provide a suitable energy supply via power optimisation and management circuitry to sensing modules that may record, for example, temperature, pressure or strain and then wirelessly transmit the recorded data in discrete data packets using transmission technologies such as Bluetooth or WIFI, to name a few. These devices that operate to wirelessly retrieve data and transmit the data in this manner are commonly known as motes or nodes when they are configured as part of a group of devices working together to make a wireless network that may also be configured to correspond and be controlled by a remote server via wireless routers in a similar manner that the internet is networked, however, there would be no wires involved between the devices. The term Internet-of-Things has been previously coined to such wireless node networks. This report describes the work done previously in the field of air flow energy harvesting for small and miniature devices and then sets out to describe the use of air flow energy harvesters designed for use on civil aircraft.

Current work in the air flow energy harvesting field include miniature turbines with rotor diameters between 2 to 31 centimetres and turbine swept areas of between 8 to 755 square centimetres and vary in design between horizontal and vertical axial turbines relative to the free stream air flow. To make comparison between the various designs, the equation for power output from a turbine as described by Briand, *et al* has been used as shown below,

$$P_{out} = \eta C_p \cdot \frac{1}{2} \rho A U_0^3 \qquad (1)$$

Where, $\rho$ is the air density, $A$ is the area of the turbine exposed normal to the airflow direction, $U_0$ is the free stream velocity, $C_p$ is the power coefficient to convert the air flow energy to be utilised by the turbine and $\eta$ is the mechanical and electrical combined efficiency. Total efficiency for an air flow turbine can be described as $\eta C_p$,

$$\eta C_p = \frac{2P_{out}}{\rho A U_0^3} \qquad\qquad (2)$$

The $\eta C_p$ for each of the devices explored in the current work is shown in Table 2 below for comparison purposes,

*Table 2*

| Average power output assumes ideal load impedance matching before power management circuitry | | | | | | | |
|---|---|---|---|---|---|---|---|
| Reference | Rotor type | Tranduction | Roto r Ø, cm | Area A, m² | Air speed , m s-1 | Power Out, W | Norm. Eff., η Cp, % |
| Tan, *et al* | axial turbine | electromagnetic | 6 | 0.002 8 | 3.62 | 0.007860 | 9.567 % |
| Rancourt, *et al* | axial turbine | electromagnetic | 4.2 | 0.001 4 | 11.8 | 0.130000 | 9.324 % |
| Xu, *et al* | axial turbine | electromagnetic | 7.6 | 0.0045 | 4.5 | 0.01800 | 7.109 % |
| Brunelli | axial turbine | electromagnetic | 6.3 | 0.003 1 | 4.67 | 0.009700 | 4.988 % |
| Federspiel, *et al* | axial turbine | electromagnetic | 10.2 | 0.008 2 | 5.1 | 0.028000 | 4.217 % |
| Porcarelli, *et al* | Savoni us | electromagnetic | 6 | 0.012 0 | 9 | 0.215000 | 4.013 % |
| Wu, *et al* | axial turbine | electromagnetic | 10 | 0.007 9 | 6 | 0.027000 | 2.598 % |
| Howey, *et al* | axial turbine | electromagnetic | 2 | 0.000 8 | 10 | 0.004300 | 0.878 % |
| Myers, *et al* | axial turbine | piezoelectric | 12.7 | 0.038 0 | 4.5 | 0.005000 | 0.236 % |
| Park, *et al* | axial turbine | electromagnetic | 31 | 0.075 5 | 8.3 | 0.048600 | 0.184 % |
| Carli, *et al* | axial turbine | electromagnetic | 6.3 | 0.003 1 | 16.8 | 0.010000 | 0.110 % |
| Rezaei-Hosseinabadi , *et al* | axial turbine | piezoelectric | 6.2 | 0.003 0 | 20 | 0.000363 | 0.002 % |

Whilst comparing total efficiency directly is useful, there is generally aerodynamic and mechanical losses that increase with reducing scale, as described by Douglas, *et al.* The most important aerodynamic parameter for scaling with constant turbine performance to consider is the Reynolds number that needs to be maintained but reduces with reducing turbine size unless the rotation speed of the turbine can be increased proportionally with the inverse square of the rotor diameter and this puts inherent increases in wear and friction on the bearings and other mechanical contacting surfaces, so as a guide it may be more useful to understand the efficiency when compared with turbine area as shown in the graph below, so that the higher efficiency smaller turbines can be more easily identified.

It can be seen that while Tan, *et al* achieved the highest normalised efficiency out of the group of research studied, Rancourt, *et al* achieved a relatively high efficiency for the size of the device; this, of course is not a direct like-for-like comparison but provides a guide. It can also be noted that piezoelectric forms of wind turbine remain close to the lower end of efficiency.

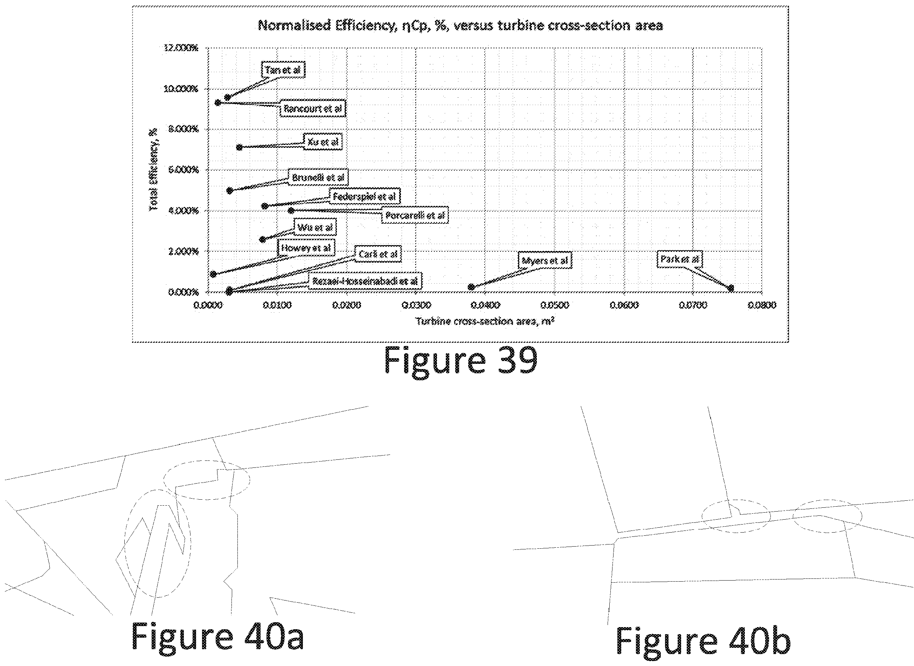

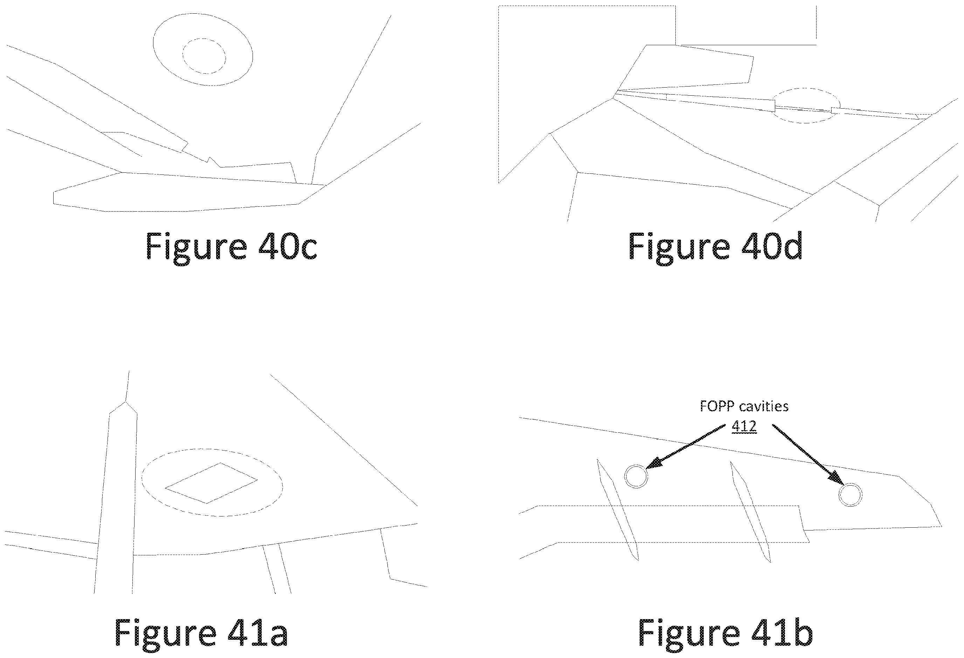

The new research described in this report is intended to explore an air flow energy harvesting device 432 that is compact, measuring no more than 15mm in diameter so it has the capability to be applied within gaps of similar size or entirely within partially enclosed structures on civil aircraft, for example those shown in Figures 40, is robust by design to cope with a wide speed range and is capable of operating at sub-zero temperatures. While the current research has shown reasonable levels of efficiency there remains the question of combining a reasonable power output within a small form factor that is durable for application within a civil aircraft environment that varies widely in surrounding air temperature and air flow speed. In addition to this the energy harvesting device 432, to be considered as a fit-and-forget device, would benefit from being able to operate within a dusty or dirty environment that the civil aircraft may from time to time be exposed to during operation and chemical cleaning or de-icing procedures during the life of the aircraft, so a form of self-cleaning by a suitable surface coating on the energy harvesting device may be required.

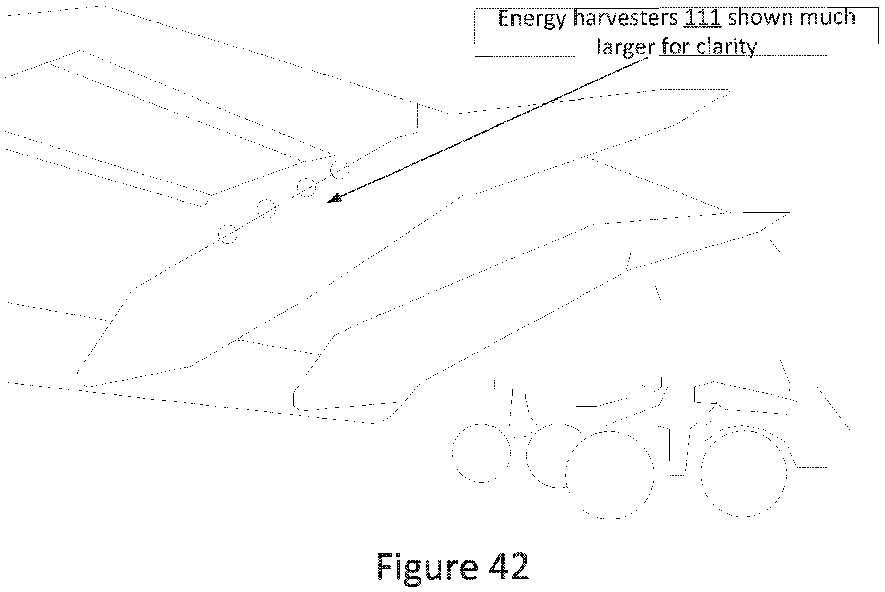

To illustrate the proposed locations, figures 39 to 42 show parts of a civil aircraft fuselage and wing with highlighted locations for the proposed energy harvesting device 432. By locating the vortex shedding energy harvester in the wing and fuselage the energy harvester may generate electrical energy by converting the swirling and tumbling motion of air flow energy within these micro-climates.

Most of the current research described provide energy harvesting by converting air flow energy into electricity provided the air flow is in the direction normal to the swept cross-section area of the turbine, however for these devices to operate at their stated efficiency for air flows that vary in direction it would be important for the turbine to have a design feature to allow the turbine to remain normal to the air flow direction. Porcarelli, *et al* was one of the few who presented the use of a Savonius device that could generate power from air flow without the use of additional design features to align the swept cross-section area to the air flow. To create a robust air flow energy harvester design it was considered important to reduce mechanical features to a minimum so a style of Savonius turbine was used. The Savonius turbine geometry would also allow the diameter of the turbine to be reduced whilst maintaining a relatively large swept cross-section area when compared to equivalent axial turbine diameters.

Air flow around a solid body creates pressure changes to the surrounding air as described by Bernoulli's principle and these pressure changes have an effect on the way the air flow moves over the solid body that can form vortexes such as Karman Vortex Street that is highly transient or the more stable lift vortex, commonly seen on wing tips when an aircraft's wing is inclined at an angle relative to the air flow. Vortexes of both types may occur at small scales around an aircraft, creating micro-climates of swirling air, where there are cavities and obstructions to the air flow that prevent the air flow from smoothly passing over the aircraft surface and it is these vortexes that may be used for air flow energy harvesting by siting a small air flow energy harvesting device with the gaps and crevices around an aircraft. Using a Savonius type of air flow turbine would therefore be of greater use than an axial turbine for energy harvesting within these micro-climates of swirling air so this report presents a modified helical Savonius turbine vortex energy harvester 432 that was designed and tested.

The study was divided into two stages; the first stage involved testing an electromagnetic generator helical Savonius wind turbine 432 designed for use in swirling air conditions within a wind tunnel to record the power generated. The second stage involved determining the robustness of the generator deep groove roller bearings when compared with carbon graphite bearings when ice build-up occurs prior to the generator being operated so to understand how ice can introduce a form of static friction and how this contributes to the operation of the generator.

The turbine 432 designed was based on the research by Mahmoud, *et al* who researched experimental improvements on the Savonius rotor and characterised the design with geometric parameters that were then used in conjunction with the work of Modi, *et al* to create an initial turbine design. This initial turbine design was then modified to include a helical form and sized to provide suitable torque to rotate the electromagnetic generator and fit within a gap of no less than 15mm that may be present on an Airbus A380 for the purpose of mounting the energy harvesting device within these gaps and crevices on the aircraft. The intended minimum air flow this electromagnetic generator helical Savonius wind turbine was 432 designed to operate in was 17 m/s, which was based on the calculated boundary layer air flow at 20 mm from the Airbus A380 wing surface over the trailing edge of the wing root at a free stream take-off speed of 77 m/s. Aircraft data for the Airbus A380 was used from the following sources.

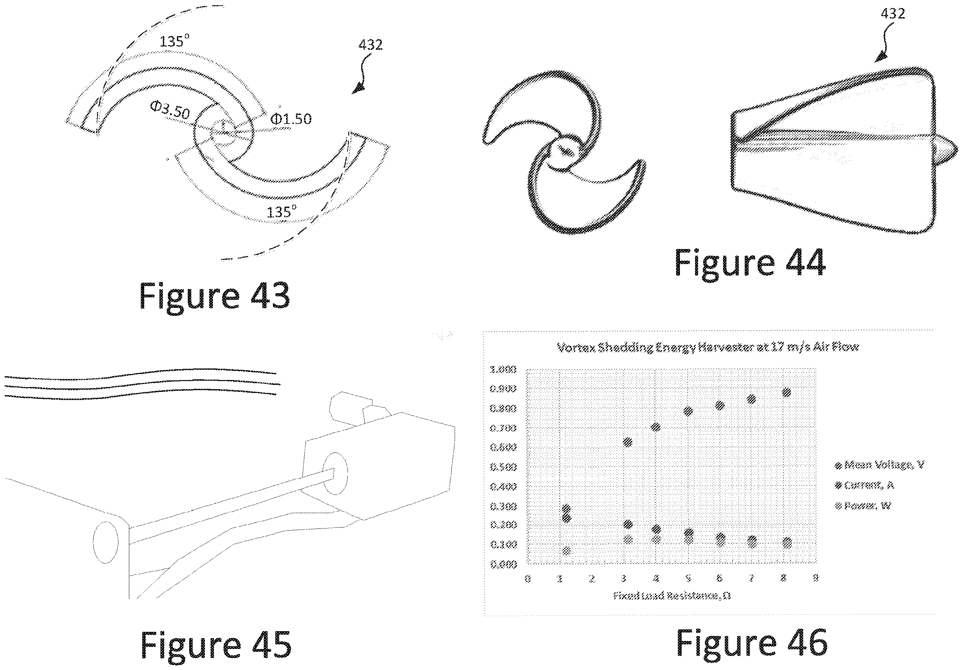

The final design of the helical Savonius turbine 432 is shown in the figures 43, 44, and 47.

The diameter of the rotor is 15 mm and the length is 20 mm and the helix is a rotation of 90° through the 20 mm length.

The benefit of including a helix into the turbine design was to simplify the design while provide the ability for the turbine to capture air flow energy from spherically 180° relative to the turbine end face.

For the purpose of mounting the turbine on to the shaft of the generator a 01.5 mm hole was added to one end and to improve air flow efficiency all edges of the turbine were rounded.

The experimental setup to determine the maximum power from the vortex shedding energy harvester was as follows:

  o The vortex shedding energy harvester 432, comprising a helical Savonius turbine of 15mm diameter and electromagnetic induction generator both totalling a space envelope of 4.15 cm$^3$, was positioned within a wind tunnel, with an internal cross-section of 45 $\times$ 45 cm behind a vortex inducing plate, with a height of 15 cm and a width of 12.5 cm, where the vortex produced by the plate spirals in the opposite direction as the helix of the turbine. See figure 43. The vortex shedding energy harvester 432 was positioned so the turbine was below the top edge of the vortex inducing plate and located approximately within the centre of a generated vortex at 15 m/s. A cotton thread suspended from an aluminium rod up stream of the turbine was used to identify the location of the generated vortex. N.B. the turbine helix was designed with the appropriate clockwise or anti-clockwise direction to maximise the energy transfer from the rotating vortex generated.

◦ Voltage was measured across various load resistances and the current and power was then calculated and recorded.

◦ LabView by National Instruments was used as the data logger to record all voltage data during the experiment.

◦ The fixed load resistance was manually adjusted to find the maximum power attainable from the energy harvester.

◦ Wind tunnel airspeeds of between 15 and 17 m/s were used. N.B. 17 m/s air speed was considered a reasonable starting air speed as it is comparable to the boundary layer airflow speed over an Airbus A380 aircraft wing trailing edge at a distance of 20 mm from the wing surface when the aircraft is travelling at the take-off free stream air speed of 77 m/s.

◦ Test results between 15 m/s and 17 m/s were recorded and normalised to 17 m/s.

◦ The test laboratory environment was maintained at a temperature of between 21 and 22 °C.

- The results shown in table 3 and figure 46. show a maximum power attained by the vortex shedding energy harvester in a vortex induced air flow of 17 m/s was 126 milllwatts across a load resistance of 3.1 Ω and a mean voltage of 0.63 volts.
- The energy harvester started operation at 6 m/s air flow speed.
- In free stream air flow, without any induced vortexes, the energy harvester operated most efficiently positioned at 59.5° to the air flow direction, which matched the helix angle of the turbine.
- Resonances were sometimes observed to occur at higher air flow speeds due to movement of the energy harvester mounting arm that had the effect of reducing the total power output.
- The type of vortex shed from the fixed plate positioned in front of the energy harvester was important. A stable single vortex that rotates in the opposite direction to the turbine helix was required for efficient energy harvester power generation. If the plate was positioned normal to the airflow the vortexes shed from the plate would be intermittent and pulsing; similar to Von Karman Vortex Street, this pulsing effect would cause intermittent operation of this type of energy harvester.

*Table 3 - Tabulated results of vortex shedding energy harvester at 17 m/s air flow.*

| Mean Voltage, V | Airspeed, m/s | Load resistance, Ω | Current, A | Power, W |
|---|---|---|---|---|
| 0.287 | 17 | 1.2 | 0.239 | 0.069 |
| 0.626 | 17 | 3.1 | 0.202 | 0.126 |
| 0.704 | 17 | 4 | 0.176 | 0.124 |
| 0.783 | 17 | 5 | 0.157 | 0.123 |
| 0.812 | 17 | 6 | 0.135 | 0.110 |
| 0.845 | 17 | 7 | 0.121 | 0.102 |
| 0.877 | 17 | 8.1 | 0.108 | 0.095 |

The following table 4 is similar to table 2 but with the addition of the efficiency from this study.

*Table 4 - Comparison of referenced normalised efficiency with this study*

| Average power output assumes ideal load impedance matching before power management circuitry | | | | | | | |
|---|---|---|---|---|---|---|---|
| Reference | Rotor type | Tranduction | Rotor Ø, cm | Area A, m$^2$ | Air speed, m s$^{-1}$ | Power Out, W | Norm. Eff., ηCp, % |
| Tan, *et al* | axial turbine | electromagnetic | 6 | 0.0028 | 3.62 | 0.007860 | 9.567 % |

(continued)

| Average power output assumes ideal load impedance matching before power management circuitry | | | | | | | |
|---|---|---|---|---|---|---|---|
| Rancourt, *et al* | axial turbine | electromagnetic | 4.2 | 0.0014 | 11.8 | 0.130000 | 9.324 % |
| Xu, *et al* | axial turbine | electromagnetic | 7.6 | 0.0045 | 4.5 | 0.018000 | 7.109 % |
| Brunelli | axial turbine | electromagnetic | 6.3 | 0.0031 | 4.67 | 0.009700 | 4.988 % |
| Federspiel, *et al* | axial turbine | electromagnetic | 10.2 | 0.0082 | 5.1 | 0.028000 | 4.217 % |
| Porcarelli, *et al* | Savonius | electromagnetic | 6 | 0.0120 | 9 | 0.215000 | 4.013 % |
| Wu, *et al* | axial turbine | electromagnetic | 10 | 0.0079 | 6 | 0.027000 | 2.598 % |
| **This study** | **Savonius** | **electromagnetic** | **1.5** | **0.0030** | **17** | **0.126000** | **1.396 %** |
| Howey, *et al* | axial turbine | electromagnetic | 2 | 0.0008 | 10 | 0.004300 | 0.878 % |
| Myers, *et al* | axial turbine | piezoelectric | 12.7 | 0.0380 | 4.5 | 0.005000 | 0.236 % |
| Park, *et al* | axial turbine | electromagnetic | 31 | 0.0755 | 8.3 | 0.048600 | 0.184 % |
| Carli, *et al* | axial turbine | electromagnetic | 6.3 | 0.0031 | 16.8 | 0.010000 | 0.110 % |
| Rezaei-Hosseinab adi, *et al* | axial turbine | piezoelectric | 6.2 | 0.0030 | 20 | 0.000363 | 0.002 % |

Environmental icing:

*Methodology*

Experimental setup to determine the vortex shedding energy harvester generator torque increase due to icing conditions

○ To determine the environmental operation of the energy harvester 432, that comprised a turbine and generator that were interconnected by a steel shaft mounted on deep groove ball race bearings, it was considered necessary to conduct a bearing icing test to compare the starting torque of the generator when at 21 °C and when at -20 °C.
○ Due to the steel deep groove ball race bearings high thermal contraction and expansion and necessity to be lubricated by an oil based lubricant, it was considered useful to compare the deep groove bearing to a comparable carbon graphite bearing, material grade FH 71 A (Schunk UK Limited), that had been accredited to cold and hot environment running conditions and can be run dry due to the dry lubricating properties of graphite.
○ Both the deep groove bearing and the carbon graphite bearing were position on a silver steel shaft that matched the original energy harvester generator steel shaft and were placed onto a Peltier cooler that maintained a constant temperature of - 20 °C.
○ The ambient air temperature was 11 °C so allowed the bearings to cool to -20 °C whilst draw moisture from the ambient air, which immediate froze on contact.
○ Both bearings were kept at -20 °C for 1.5 hours until a uniform dendritic coating of ice about 2 mm thick had formed over the bearings and the steel shaft to ensure the bearings had ice bonded to the shaft.
o Torque measurements were done using a lever arm of 25 mm long and a pressure plate that had a resolution of 0.01 grams force.

∘ Torque tests were repeated three times at -20 °C and 21 °C for both the deep groove bearing and the carbon graphite bearing.

∘ A static torque test at 21 °C was also conducted for the assembled generator to measure the torque required to start the generator turning as a baseline result. N. B. from the wind tunnel tests it was understood the baseline result would be equivalent to a 6 m/s air flow speed when the energy harvester started turning.

*Bearing icing condition results*

o The results of the static torque tests for the deep groove ball race bearing, carbon graphite bearing at -20 °C and 21 °C and generator at 21 °C are shown in table 5.

o Both the deep groove bearing and the carbon graphite bearing had similar starting torques at 21 °C.

o The deep groove bearing results showed an average increase in starting torque of 87.5% at -20 °C when compared to starting at 21 °C and the carbon graphite bearing showed an average increase in starting torque of 33% for the same conditions.

∘ Changing from the deep groove ball race bearing to the carbon graphite bearing for the vortex shedding energy harvester 432 may reduce the additional generator starting torque at -20 °C by 54%.

*Table 5 - Bearing icing torque tests for deep groove ball race bearing and carbon graphite bearing.*

| Bearing Icing Torque Tests | Deep groove roller bearing | Carbon graphite bearing |
| --- | --- | --- |
| -20 °C bearing temperature, torques average, mN.mm | 17.17 | 6.54 |
| 21 °C bearing temperature, torques average, mN.mm | < 2.5 | < 2.5 |
| 21 °C generator with deep groove bearing starting torque, mN.mm | 19.62 | |
| | | |
| **Percentage increase in starting torque at-20 °C** | **87.50%** | **33.33%** |

An electromagnetic energy harvester has been shown to generate up to 126 mW of power by converting vortex air flow energy into electrical energy using a helical Savonius turbine and a Ø7 mm × 16 mm Hubsan permanent magnet motor used as an electromagnetic induction generator.

The normalised efficiency, $\eta$Cp, of the presented energy harvester is 1.396% and is comparable to the other references mentioned with similar size, but is less efficient than some axial turbines of similar cross-section area.

The helical Savonius turbine design has shown potential for application on aircraft where robust rotor design is required.

The energy harvested has potential for use with power management circuitry to be part of a wireless sensor node architecture and node network within an aircraft.

The use of carbon graphite bearings in place of deep groove roller bearings for this application will benefit the energy harvester operation at temperatures where icing occurs.

Developing upon the durability of this vortex energy harvesting device 432 for a wider air speed range would be of benefit.

Further work could also include computer fluid dynamics to investigate various locations on an aircraft such as an Airbus A380 to understand further the types of vortex energy available and the transient nature of the vortexes during various flight manoeuvres, air speeds and altitudes.

Integrating this vortex energy harvesting device with power management circuitry was not undertaken in this study so would be considered a valuable next step to understand the power achievable when operating a maximum power point tracking circuit and driving a wireless device with varying load impedance.

**Appendix 4:**

An airflow energy harvester 432 capable of harvesting energy from vortices at high speed is presented in this paper. The airflow energy harvester is implemented using a modified helical Savonius turbine and an electromagnetic generator. A power management module with maximum power point finding capability is used to manage the harvested energy and convert the low voltage magnitude from the generator to a usable level for wireless sensors. The airflow energy harvester is characterized using vortex generated by air hitting a plate in a wind tunnel. By using an aircraft environment with wind speed of 17 m/s as case study, the output power of the airflow energy harvester is measured to be 126 mW. The overall efficiency of the power management module is 45.76 to 61.2 %, with maximum power point tracking efficiency of 94.21 to 99.72 % for wind speed of 10 to 18 m/s, and has a quiescent current of 790 nA for the maximum power point tracking circuit.

Airflow is one of the most promising sources to be harvested in industrial environments since the velocity of air in ventilation systems or induced by fast moving objects is quite high, which can be more than 10 m/s. So far, miniaturized wind turbines or flapping airflow generators are often used to harvest energy from airflow. Wind turbine generators generally consist of vaned wheels to convert direct airflow into electrical energy via electromagnetic transducers. On the contrary, flapping airflow generators are usually composed of elastic cantilevers which require vortexes to oscillate the cantilevers. Oscillating motion of the cantilever can be converted into electrical energy via piezoelectric or electromagnetic transductions. These airflow energy harvesters are capable of producing high output power of around 10 mW at air speed of around 10 m/s. The harvested power can be used to power wireless sensors to monitor physical quantities or environment phenomena, which is important in many industries so that appropriate measures can be taken for the safety and well-being of the lives in the environment that is being monitored. However, these airflow energy harvesters are mainly designed to operate under airflow coming at a certain angle and/or direction, which greatly constrained their applications because airflow can come in any direction in the real-world. Also, obstructions and cavities present in the real-world environment prevent airflow from smoothly passing through, creating micro-climates of swirling air vortexes. Although flapping airflow generators can capture vortexes for energy harvesting, the operation of flapping airflow generators is limited to a certain airflow speed. The flapping airflow generator will stall and therefore could not generate any power if the air speed is too high and also be in a risk of breaking due to excessive stress sustained by the cantilever which is bended to one side. This paper herein presents an airflow energy harvesting system that can harvest swirling airflow at high speed.

The implemented system consists of a modified helical Savonius 432 to capture the swirling airflow, a DC motor as the electromagnetic generator and a power management 120 module for the power conditioning. The DC motor used is a brushed motor with dimensions of Ø7 × 16mm (Hubsan, Shenzen, China).

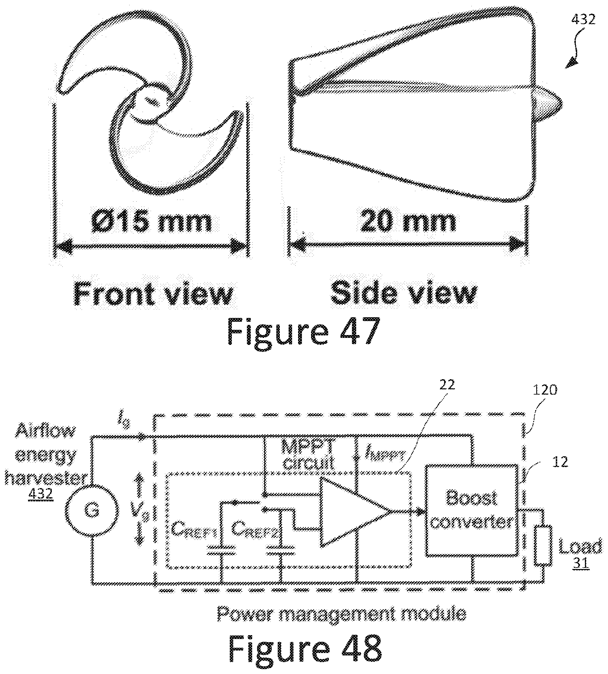

A Savonius turbine is a drag-type device capable of harvesting both the direct and swirling airflows. However, a standard Savonius turbine is a vertical-axis wind turbine which captures airflow in the direction normal to the rotating shaft. Therefore, based on a standard Savonius turbine, a modified helical Savonius turbine 432 with horizontal axis is implemented as shown in figure 47. The prototyped modified helical Savonius turbine has a diameter of 15 mm and length of 20 mm, which is small so that it can fit into small gaps or spaces. The modified helical Savonius turbine is connected to the shaft of an electromagnetic generator to convert the captured airflow in the form of rotational kinetic energy into electrical energy as the shaft is rotated by the turbine due to the airflow.

The power management module 120 consists of a maximum power point tracking (MPPT) circuit 22 and a commercially available boost converter 12 (bq25504, Dallas, USA). A boost converter 12 is used because the output voltage from the electromagnetic generator is typically lower than 1 V, which is insufficient to power up a wireless sensor node 114. The maximum power point finding is based on maximum power transfer that occurs at half of the open-circuit voltage of the electromagnetic generator. Therefore, the circuit is implemented using low power analogue components without the need of a power hungry microcontroller since the operation is simple as shown in figure 48. The circuit momentarily disables the boost converter 12. The boost converter 12 appears as open-circuited when disabled so that open-circuit voltage of the generator can be obtained and sampled using a sampling capacitor CREF1. The sampling capacitor is then disconnected from the generator output and connected in parallel with another capacitor CREF2 of similar value. Voltage across the capacitors becomes half due to charge sharing between the capacitors. The half-open-circuit voltage is used as the reference voltage to harvest energy from the generator and is sampled every second to obtain a new reference voltage as the air speed in actual environment is dynamic, causing voltage from the electromagnetic generator to change.

The airflow energy harvester 111 was positioned behind a vortex inducing plate in a wind tunnel as shown in figure 44. Vortex is produced when the air stream hits the plate as shown in figure 45. By using the aircraft environment as a case study, the wind tunnel was set to produce an air speed of 17 m/s. This air speed was obtained based on the boundary layer airflow at a distance of 20 mm from the wing surface at the trailing edge, where the wing has a chord length of 13 m and when the aircraft is travelling at the take-off free stream air speed of 77 m/s. The generator output was connected to a variable resistor to determine its power generation capability by manually tuning the resistor.

To determine the maximum power point finding capability of the power management module 120, tests for the output power of the generator when connected with a variable resistor were carried out at different air speeds of 10 to 18 m/s. Then, the tests were repeated with the electromagnetic generator connected to the power management module 120. Output power from both tests were compared to obtain the maximum power point tracking efficiency of the implemented circuit based on an open-circuit voltage method. Overall system efficiency of the power management module 120 and the current consumption of the MPPT circuit 22 were also measured using Keithley 2612B.

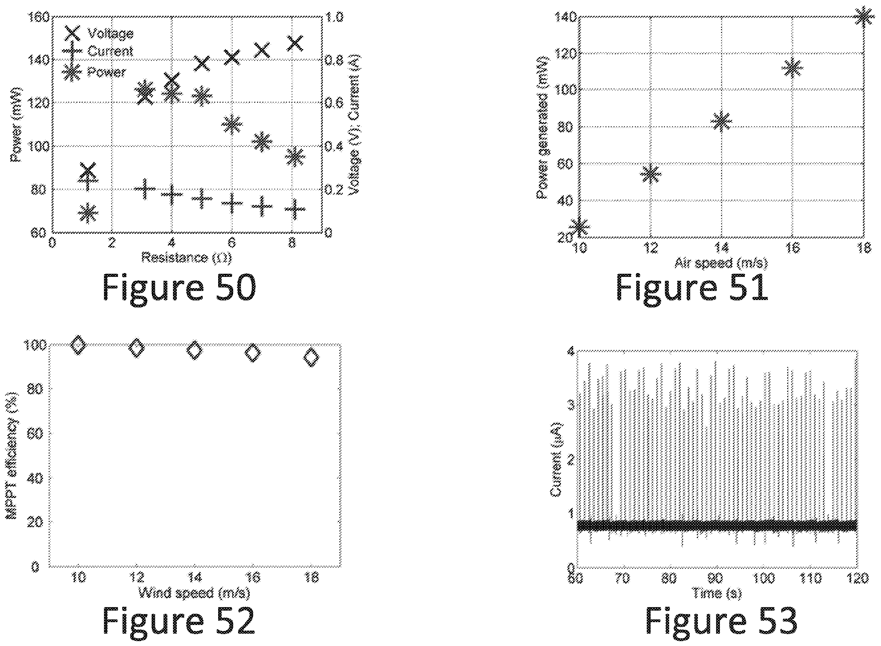

Figure 46 shows the power, voltage and current generated by the airflow energy harvester using different resistance load at air speed of 17 m/s. Results indicate that maximum power of 126 mW can be achieved with optimal load resistance of 3.1 $\Omega$. Figure 51 shows the power generated by the airflow energy harvester when connected to its optimal load resistance at different air speed from 10 to 18 m/s. The power generated is 25.5 mW to 140 mW in the range of tested airspeed where the power generated at 10 m/s is double of previously reported airflow energy harvester.

Overall system efficiency is 45.76 to 61.2 %, which is mainly dictated by the efficiency of the boost converter 12 which has to boost voltages below 0.7 V to 3.1 V. The maximum power point finding efficiency using the MPPT circuit 22 is 94.21 to 99.72 % as shown in figure 52 while consuming 790 nA of quiescent current consumption with short peaks of no more than 4 $\mu$A as shown in figure 53. This indicates the effectiveness of the implemented circuit in harvesting energy close to maximum power point of the airflow energy harvester without the need of power hungry components, which is essential in energy harvesting applications so that most of the harvested energy can be delivered to the wireless sensors to perform the intended tasks instead of consumed by the power management module 120 and minimizes the energy loss to prevent further decrease in the system efficiency.

An airflow energy harvester 432 which is able to operate under swirling air at high speed and its associated power management module are presented and demonstrated. The airflow energy harvester 432 produces up to 126 mW of power under vortex induced by airflow of 17 m/s. Overall system efficiency is 45.76 to 61.2 %. The maximum power point finding based on open-circuit voltage has high efficiencies between 94.21 and 99.72 % and the MPPT circuit 22 has a low quiescent current of 790 nA. The capability of the implemented airflow energy harvester 432 to run by vortex at high speed and generated high power of several hundreds milllwatts makes it suitable for industrial applications.

It will be understood that the invention has been described above purely by way of example, and modifications of detail can be made within the scope of the invention as defined in the appended claims.

Reference numerals appearing in the claims are by way of illustration only and shall have no limiting effect on the scope of the claims.

**Claims**

1. A method of tracking a maximum power point of an energy harvester (111), comprising:

   providing a capacitor (26) and a high pass filter (30) at an output of the energy harvester (111);
   arranging the high pass filter (30) to have a time constant matching a time constant of an equivalent RC circuit corresponding to the energy harvester (111) and capacitor (26); and
   using a differentiator (42), detecting the occurrence of a peak voltage of the capacitor (26) thereby to determine an approximate maximum power point of the energy harvester (111).

2. A method according to Claim 1, wherein detecting the occurrence of a peak voltage comprises, using a comparator (44), comparing a differentiated peak voltage of the capacitor (26) with a non-zero reference voltage.

3. A method according to Claim 2, further comprising, using a further comparator, controlling the operation of a convertor to transfer energy from the energy harvester (111).

4. Apparatus for energy harvesting, comprising:

   an energy harvester (111); and
   a control circuit (14) for the energy harvester (111), comprising:

      a smoothing capacitor (26) provided at an output of the energy harvester (111);
      a high pass filter (30) provided at an output of the energy harvester (111), wherein the high pass filter (30) has a time constant matching a time constant of an equivalent RC circuit corresponding to the energy harvester (111) and smoothing capacitor (26), and
      a differentiator (42) provided in communication with the output of the energy harvester (111) thereby to allow detection of a peak voltage of the capacitor (26).

5. Apparatus for energy harvesting according to Claim 4, further comprising a comparator (44) for comparing a differentiated peak voltage of the capacitor (26) with a non-zero reference voltage thereby to detect the occurrence of a peak voltage of the capacitor (26).

**6.** Apparatus for energy harvesting according to Claim 5, further comprising a further comparator for controlling the operation of a convertor to transfer energy from the energy harvester (111).

**Patentansprüche**

**1.** Verfahren zum Tracking eines Maximalleistungspunkts eines Energie-Harvester (111), das Folgendes umfasst:

Bereitstellen eines Kondensators (26) eines Hochpassfilters (30) an einem Ausgang des Energie-Harvester (111);
derartiges Einrichten des Hochpassfilters (30), dass es eine Zeitkonstante aufweist, die mit einer Zeitkonstanten einer dem Energie-Harvester (111) und dem Kondensator (26) entsprechenden Ersatz-RC-Schaltung übereinstimmt; und
unter Verwendung eines Differenziators (42), Detektieren des Auftretens einer Spitzenspannung des Kondensators (26), um dadurch einen approximativen Maximalleistungspunkt des Energie-Harvester (111) zu bestimmen.

**2.** Verfahren nach Anspruch 1, wobei das Detektieren des Auftretens einer Spitzenspannung Vergleichen, unter Verwendung eines Komparators (44), einer differenzierten Spitzenspannung des Kondensators (26) mit einer Referenzspannung ungleich null umfasst.

**3.** Verfahren nach Anspruch 2, das ferner Steuern, unter Verwendung eines weiteren Komparators, des Betriebs eines Wandlers zum Übertragen von Energie von dem Energie-Harvester (111) umfasst.

**4.** Einrichtung für Energie-Harvesting, die Folgendes umfasst:

einen Energie-Harvester (111); und
eine Steuerschaltung (14) für den Energie-Harvester (111), die Folgendes umfasst:

einen Glättungskondensator (26), der an einem Ausgang des Energie-Harvester (111) bereitgestellt ist;
ein Hochpassfilter (30), das an einem Ausgang des Energie-Harvester (111) bereitgestellt ist, wobei das Hochpassfilter (30) eine Zeitkonstante aufweist, die mit einer Zeitkonstanten einer dem Energie-Harvester (111) und dem Glättungskondensator (26) entsprechenden Ersatz-RC-Schaltung übereinstimmt; und
einen Differenziator (42), der in Kommunikation mit dem Ausgang des Energie-Harvester (111) bereitgestellt ist, um dadurch eine Detektion einer Spitzenspannung des Kondensators (26) zu gestatten.

**5.** Einrichtung für Energie-Harvesting nach Anspruch 4, die ferner einen Komparator (44) zum Vergleichen einer differenzierten Spitzenspannung des Kondensators (26) mit einer Referenzspannung ungleich null, um dadurch das Auftreten einer Spitzenspannung des Kondensators (26) zu detektieren, umfasst.

**6.** Einrichtung für Energie-Harvesting nach Anspruch 5, die ferner einen weiteren Komparator zum Steuern des Betriebs eines Wandlers zum Übertragen von Energie von dem Energie-Harvester (111) umfasst.

**Revendications**

**1.** Procédé de suivi d'un point de puissance maximal d'un dispositif de récupération d'énergie (111), comprenant :

la fourniture d'un condensateur (26) et d'un filtre passe-haut (30) au niveau d'une sortie du dispositif de récupération d'énergie (111) ;
l'agencement du filtre passe-haut (30) pour avoir une constante de temps correspondant à une constante de temps d'un circuit RC équivalent correspondant au dispositif de récupération d'énergie (111) et au condensateur (26) ; et
à l'aide d'un différenciateur (42), la détection de l'apparition d'une tension de crête du condensateur (26) pour déterminer ainsi un point de puissance maximal approximatif du dispositif de récupération d'énergie (111).

**2.** Procédé selon la revendication 1, dans lequel la détection de l'apparition d'une tension de crête comprend, à l'aide d'un comparateur (44), la comparaison d'une tension de crête différenciée du condensateur (26) avec une tension de référence non nulle.

3. Procédé selon la revendication 2, comprenant en outre, à l'aide d'un autre comparateur, la commande du fonctionnement d'un convertisseur pour transférer de l'énergie à partir du dispositif de récupération d'énergie (111).

4. Appareil de récupération d'énergie, comprenant :

   un dispositif de récupération d'énergie (111) ; et
   un circuit de commande (14) pour le dispositif de récupération d'énergie (111), comprenant :

   un condensateur de lissage (26) fourni au niveau d'une sortie du dispositif de récupération d'énergie (111) ;
   un filtre passe-haut (30) fourni au niveau d'une sortie du dispositif de récupération d'énergie (111), dans lequel le filtre passe-haut (30) a une constante de temps correspondant à une constante de temps d'un circuit RC équivalent correspondant au dispositif de récupération d'énergie (111) et au condensateur de lissage (26), et
   un différenciateur (42) fourni en communication avec la sortie du dispositif de récupération d'énergie (111) pour permettre ainsi la détection d'une tension de crête du condensateur (26).

5. Appareil de récupération d'énergie selon la revendication 4, comprenant en outre un comparateur (44) pour comparer une tension de crête différenciée du condensateur (26) avec une tension de référence non nulle pour détecter ainsi l'apparition d'une tension de crête du condensateur (26).

6. Appareil de récupération d'énergie selon la revendication 5, comprenant en outre un autre comparateur pour commander le fonctionnement d'un convertisseur pour transférer de l'énergie à partir du dispositif de récupération d'énergie (111).

Figure 1a

Figure 1b

Figure 1c

Figure 1d

Figure 2

Figure 3

EP 3 631 931 B1

Figure 5

Figure 7

Figure 4

Figure 6

Figure 9

Figure 11

Figure 8

Figure 10

Figure 12

Figure 13

EP 3 631 931 B1

Figure 14a

Figure 14b

Figure 15

Figure 16

Figure 17

Figure 18

112

Rectification circuit /Ultralow
voltage boost -up circuit

192

Analogue control circuit
+
Power detector

194

## Figure 19

12

Input

Output

## Figure 20

212

214

216

Signal 1

Signal X

Switch
order

Switch 1

Arbiter

Sequence
register

Switch
control

Signal N

EOO

Switch N

## Figure 21

Figure 22

Figure 23

Figure 24a

EP 3 631 931 B1

Figure 24b

From PMM

$I_{sy}$

$I_{CS}$

$C_S$ $V_{CS}$

48

EAI

122

Monitor $V_{CS}$ 142

Monitor $V_{CS}$

VCC    RESET
GND    OUT

Voltage
Supervisor

N-MOSFET

Turn switch
ON/OFF

WSN

114

GND

## Figure 25a

$C_S$ charges
up from 0 V

$C_S$
discharges

$C_S$
recharges

$V_{on}$
$V_{end}$
$V_{off}$
$V_{min}$

$t$

WSN ON          WSN OFF

## Figure 25b

From PMM

$V_{CS}$

$C_S$

WSS 114

VCC    RESET
GND    OUT

Voltage
Supervisor

N-MOSFET

Temperature

VCC
OUT
GND

GND
OUT
VCC

Humidity

P1

P2

DIO16  VCC
ADC4   ADC
       ADC3
DIO0   ADC2
DIO1   GND

MCU

Monitor $V_{CS}$

VCC
X OUT
Y OUT
Z OUT
GND

Accelerometer

Voltage
reference

## Figure 26

Figure 27

# Figure 28a

# Figure 28b

Figure 29b

Figure 29d

Figure 29a

Figure 29c

Figure 30a

Figure 30b

Figure 31a

Figure 31b

Figure 32

Figure 33

EP 3 631 931 B1

Figure 34

Figure 35

Figure 36

Figure 37

Figure 38

**Normalised Efficiency, ηCp, %, versus turbine cross-section area**

Figure 39

Figure 40a

Figure 40b

Figure 40d

Figure 40c

FOPP cavities
412

Figure 41b

Figure 41a

Energy harvesters 111 shown much larger for clarity

Figure 42

135°

Φ3.50  Φ1.50

432

135°

**Figure 43**

432

**Figure 44**

**Figure 45**

Vortex Shedding Energy Harvester at 17 m/s Air Flow

● Mean Voltage, V
● Current, A
● Power, W

Fixed Load Resistance, Ω

**Figure 46**

EP 3 631 931 B1

Ø15 mm    20 mm

**Front view**    **Side view**

Figure 47

Power management module

Figure 48

Figure 49

Figure 50

Figure 51

Figure 52

Figure 53

EP 3 631 931 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8823210 B1

- KR 101035402 B1

**Non-patent literature cited in the description**

- **SEWAN HEO et al.** Micro energy management for energy harvesting at maximum power point. *Integrated Circuits (ISIC), 2011 13th International Symposium on IEEE,* 12 December 2011, ISBN 978-1-61284-863-1, 136-139